# EUROPEAN PATENT APPLICATION

(11) **EP 3 905 393 A1**
(43) Date of publication of application: **03.11.2021**
(21) Application number: 20744921.6
(22) Date of filing: 28.01.2020
(51) Int. Cl.: H01M 4/525, H01M 10/052, C01G 53/00

(54) **COMPOSITE METAL OXIDE FOR LITHIUM SECONDARY BATTERY COMPRISING DOPING ELEMENT, POSITIVE ELECTRODE ACTIVE MATERIAL FOR LITHIUM SECONDARY BATTERY PREPARED FROM SAME, AND LITHIUM SECONDARY BATTERY COMPRISING SAME**

(30) Priority: 24.01.2019 KR 20190009515
(71) Applicant: Battery Solution, Seoul 04763 (KR)
(72) Inventor: SUN, Yang-Kook, Seoul 06288 (KR); KIM, Un Hyuck, Gunpo-si Gyeonggi-do 15813 (KR)
(74) Representative: Prüfer & Partner mbB Patentanwälte · Rechtsanwälte
(86) International application number: PCT/KR2020/001305
(87) International publication number: WO 2020/153833

(57) **Abstract**

The present invention relates to a positive electrode active material comprising a secondary particle formed of agglomerates of a plurality of primary particles, wherein each primary particle comprises a first primary particle constituting a core portion of the secondary particle, and a second primary particle provided so as to surround the first primary particle and constituting a shell portion of the secondary particle. In particular, the first primary particle consists of a1 and a2, wherein the a1 is the average length of the major axis of the first primary particle, and the a2 is the average length of the minor axis perpendicular to the a1, wherein the a1 is equal to or greater than the a2. In addition, the second primary particle consists of b1 and b2, wherein the b1 is an average length of the major axis of the second primary particle, and b2 is an average length of the minor axis perpendicular to the b 1, wherein the b1 is greater than b2, and the ratio (b1/b2) of the b1 to b2 is 1 to 25.

## Description

### CROSS-REFERENCE TO RELATED APPLICATION

This application is a continuation of pending International Application No. PCT/KR2020/001305, which was filed on January 28, 2020 and claims priority to Korean Patent Application Nos. 10-2019-0009515 and 10-2020-0010140 filed on January 24, 2019 and January 28, 2020 in the Korean Intellectual Property Office, the disclosures of which are hereby incorporated by reference in their entireties.

### Field

The present disclosure relates to a composite metal oxide for a lithium secondary battery containing a doping element, a positive electrode active material for a lithium secondary battery prepared therefrom, and a lithium secondary battery including the same. More specifically, the present disclosure relates to a composite metal oxide for a lithium secondary battery containing a doping element such that the lithium secondary battery exhibits high capacity and at the same time, suppresses micro cracks to improves lifespan characteristics thereof, and relates to a positive electrode active material for a lithium secondary battery prepared therefrom, and a lithium secondary battery including the same.

### Description of Related Art

With development of portable mobile electronic devices such as smart phones, MP3 players, and tablet PCs, demand for secondary batteries capable of storing electrical energy therein is increasing explosively. In particular, with advent of electric vehicles, medium and large sized energy storage systems, and portable devices requiring high energy density, the demand for lithium secondary batteries is increasing.

With the increase in the demand for the lithium secondary battery, various research and development for improving characteristics of a positive electrode active material used in the lithium secondary battery are being conducted. For example, in Korean Patent Application Publication No. 10-2014-0119621 (Application No. 10-2013-0150315), a secondary battery is disclosed in which high voltage capacity and long lifespan characteristic are achieved by using a lithium excess positive electrode active material preparation precursor to control a type and composition of a metal substituted in the precursor, and control a type and amount of a metal as added.

### DISCLOSURE

### TECHNICAL PURPOSES

A purpose of the present disclosure is to provide a composite metal oxide for a lithium secondary battery containing a novel doping element to suppress micro cracks to achieve an improved lifespan characteristic of the battery, and to provide a positive electrode active material for a lithium secondary battery prepared therefrom, and a lithium secondary battery including the same.

Another purpose of the present disclosure is to provide a composite metal oxide for a lithium secondary battery containing a doping element in which the doping element is added to the composite metal oxide using a novel method to achieve an optimal effect based on a content and a composition of the doping element relative to the composite metal oxide, such that the battery has the long-term lifespan characteristic and improved safety while electrochemical characteristic of high capacity thereof is maintained, and to provide a positive electrode active material for a lithium secondary battery prepared therefrom, and a lithium secondary battery including the same.

Purposes of the present disclosure are not limited to the above-mentioned purpose.

### TECHNICAL SOLUTION

In one aspect of the present disclosure, there is provided a positive electrode active material comprising secondary particles, wherein each secondary particle is an agglomerate of a plurality of primary particles, wherein the primary particles include: first primary particles constituting a core portion A of each secondary particle; and second primary particles constituting a shell portion of each secondary particle, wherein the shell portion surrounds the core portion, wherein an average length of a long side of a longitudinal cross-section of each first primary particle is defined as a1, and an average length of a short side thereof perpendicular to the long side is defined as a2, wherein a1 is equal to or larger than a2, wherein an average length of a long side of a longitudinal cross-section of each second primary particle is defined as b1, and an average length of a short side thereof perpendicular to the long side is defined as b2, wherein b1 is larger than b2, wherein a ratio b1/b2 is in a range of 2 to 25.

In one implementation of the positive electrode active material, after a battery including the positive electrode active material has been subjected to multiple charging/discharging cycles, a micro crack including a space between the first primary particle or a space between the second primary particles occurs in the secondary particle, wherein when the battery including the positive electrode active material has been subjected to 100 charging/discharging cycles where each cycle includes a charging of the battery to 4.3V under 0.5C constant current and a discharging of the battery to 2.7V under 0.5C constant current, and then the battery is discharged to 0.27V, an area of the micro crack is equal to or smaller than 13% of an entire area of a longitudinal cross section of the secondary particle.

In one implementation of the positive electrode active material, each of 90% or greater of the second primary particles has b1 in a range of 0.1µm to 2.0µm, and b2 in a range of 0.01µm to 0.8µm.

In one implementation of the positive electrode active material, each of 90% or greater of the second primary particles has a b1/b2 in a range of 2 to 15, and has b2 in a range of 0.01µm to 0.25µm.

In one implementation of the positive electrode active material, at least some of the second primary particles has a rod shape having an aspect ratio, wherein each of 50% or greater of the second primary particles having the rod shape is oriented toward a surface of the secondary particle.

In one implementation of the positive electrode active material, each of an average length of a2 of each of 90% or greater of the first primary particles and an average length of b2 each of 90% or greater of the second primary particles is in a range of 0.01µm to 0.8µm.

In one implementation of the positive electrode active material, a ratio b1/a1 is in a range of 1 to 3.5, and a ratio b2/a2 is in a range of 0.8 to 1.5.

In one implementation of the positive electrode active material, each primary particle contains nickel (Ni), M1 and M2, wherein M1 includes at least one of manganese (Mn), cobalt (Co), and aluminum (Al), wherein a content of nickel (Ni) is greater than or equal to 80 mol%, wherein M2 acts as a doping element, wherein a content thereof is in a range of 0.05mol% to 2mol%.

In one implementation of the positive electrode active material, M2 includes at least one of tantalum (Ta), tungsten (W), molybdenum (Mo), niobium (Nb) and antimony (Sb).

In one implementation of the positive electrode active material, M2 includes at least two doping elements selected from tantalum (Ta), tungsten (W), molybdenum (Mo), niobium (Nb) and antimony (Sb), wherein the two doping elements are co-doped into the positive electrode active material.

In one implementation of the positive electrode active material, when M2 is tantalum (Ta), a ratio b2/a2 is in a range of 0.5 to 1.2, and b2 is in a range of 0.01µm to 0.6µm; when M2 is tungsten (W), the ratio b2/a2 is in a range of 0.5 to 2, and b2 is in a range of 0.005µm to 0.5µm; when M2 is molybdenum (Mo), the ratio b2/a2 is in a range of 0.7 to 1.5, and b2 is in a range of 0.02µm to 0.7µm; when M2 is niobium (Nb), the ratio b2/a2 is in a range of 0.5 to 1.5, and b2 is in a range of 0.02µm to 0.7µm; or when M2 is antimony (Sb), the ratio b2/a2 is in a range of 0.5 to 1.5, and b2 is in a range of 0.01µm to 0.5µm.

In one implementation of the positive electrode active material, M2 includes: one of tantalum (Ta), tungsten (W), molybdenum (Mo), niobium (Nb), and antimony (Sb); and at least one of tin (Sn), hafnium (Hf), silicon (Si), zirconium (Zr), calcium (Ca), germanium (Ge), gallium (Ga), indium (In), ruthenium (Ru), tellurium (Te), iron (Fe), chromium (Cr), vanadium (V), and titanium (Ti), wherein M2 includes at least two doping elements.

In one implementation of the positive electrode active material, after a battery including the positive electrode active material has been subjected to 100 charging/discharging cycles where each cycle includes a charging of the battery to 4.3V under 0.5C constant current and a discharging of the battery to 2.7V under 0.5C constant current, Rct of the positive electrode active material is in a range of 10Ω to 30Ω.

In one implementation of the positive electrode active material, when the positive electrode active material is subjected to X-ray diffraction analysis using a device with 45kV and 40mA output and a Cu Ka beam source at a scan rate of 1 degree per minute and at a step size spacing of 0.0131, a ratio of an intensity of a peak 003 to an intensity of a peak 104 is in a range of 2 to 2.2.

In one implementation of the positive electrode active material, the positive electrode active material includes a compound containing a metal, lithium, a doping element, and oxygen, wherein the positive electrode active material is prepared by mixing a composite metal oxide containing the metal, the doping element, and a lithium compound containing the lithium with each other and then performing calcination of the mixture, wherein the metal includes: nickel (Ni); and at least one of cobalt (Co), manganese (Mn), and aluminum (Al), wherein the doping element includes at least one of tantalum (Ta), tungsten (W), molybdenum (Mo), niobium (Nb), and antimony (Sb), wherein a content of nickel (Ni) is greater than or equal to 80 mol%, and a content of the doping element is in a range of 0.05 mol% to 2 mol%.

In one implementation of the positive electrode active material, the positive electrode active material is prepared by performing calcination of the mixture at least one time in a temperature range of 700 °C to 800 °C, wherein each of 90% or greater of the second primary particles in the positive electrode active material after the calcination has b2 in a range of 0.01µm to 0.8µm.

In another aspect of the present disclosure, there is provided a composite metal oxide for a lithium secondary battery as a precursor of the positive electrode active material as defined above, wherein the composite metal oxide is a spherical agglomerate of particles prepared via agglomeration of a plurality of micro-particles, wherein the composite metal oxide is mixed with a lithium compound and then calcination of the mixture is carried out at a temperature range of 700°C to 800°C, thereby producing the positive electrode active material, wherein the micro-particles of the composite metal oxide include: first micro-particles constituting a core portion of the agglomerate of particles; and second micro-particles constituting a shell portion surrounding the core portion of the agglomerate of particles, wherein an aspect ratio of the second micro-particle is equal to an aspect ratio of the second primary particle of the positive electrode active material.

In still another aspect of the present disclosure, there is provided a positive electrode for a secondary battery including the positive electrode active material as defined above. In still yet another aspect of the present disclosure, there is provided a lithium secondary battery including the positive electrode as defined above.

In still yet another aspect of the present disclosure, there is provided a battery module including the lithium secondary battery as defined above as a unit cell.

In still yet another aspect of the present disclosure, there is provided a battery pack including the battery module as defined above, wherein the battery pack is used as a power source for an medium and large sized apparatus, wherein the medium and large sized apparatus is selected from a group consisting of an electric vehicle, a hybrid electric vehicle, a plug-in hybrid electric vehicle, and a power storage system.

### TECHNICAL EFFECT

According to the present disclosure as described above, the positive electrode active material according to the present disclosure includes the secondary particles, each second particle as the agglomerate of a plurality of primary particles, wherein the secondary particle includes Ni at the high content level and the doping element.

Further, according to another aspect of the present disclosure, the composite metal oxide for a lithium secondary battery containing the doping element may be realized in which the shape of the composite metal oxide may be controlled and the micro cracks may be suppressed such that long-term lifespan characteristics and stability of the battery may be maintained and the electrochemical characteristics thereof may be improved. Further, the positive electrode active material for a lithium secondary battery as prepared therefrom, and the lithium secondary battery including the same may be realized.

Further, according to still another aspect of the present disclosure, when a mixture of the composite metal oxide containing nickel at the high content level and having a rod shape, and the lithium compound is calcined at a high temperature, the shape of the composite metal oxide may be maintained in a relatively unchanged manner, and thus the micro-structure may be stably maintained, thereby producing the positive electrode active material for a lithium secondary battery with improved stability and electrochemical characteristic. Further, the lithium secondary battery including the same may be realized.

### BRIEF DESCRIPTION OF THE DRAWINGS

FIG. 1 is a view showing a positive electrode active material according to an embodiment of the present disclosure.
FIG. 2 is an enlarged view of an outer surface of FIG. 1.
FIG. 3 is a cross-sectional view of FIG. 1.
FIG. 4 is a schematic diagram schematically showing FIG. 3.
FIG. 5 is SEM images (a) and (b) of particles and cross-sectional SEM images (c) and (d) of particles of Ni_{0.9}Co_{0.1}(OH)₂ composite metal hydroxide powder for Preparation Example 1 to Preparation Example 6.
FIG. 6 is a SEM image of a positive electrode active material based on a tantalum (Ta) concentration.
FIG. 7 is a graph showing a capacity and a retention after 100 cycles of a positive electrode active material based on a tantalum (Ta) concentration.
FIG. 8 is a graph showing a cycle of a positive electrode active material based on a tantalum (Ta) concentration.
FIG. 9 is a graph showing a capacity and a retention after cycle of each of Preparation Example 1 (NC9010), Preparation Example 4 (NC9010-Ta1), and Preparation Example 7 (NCA89).
FIG. 10 is a graph showing a cycle of each of Preparation Example 1 (NC9010), Preparation Example 4 (NC9010-Ta1), and Preparation Example 7 (NCA89) at 30°C temperature.
FIG. 11 is a graph showing a cycle of each of Preparation Example 4 (NC9010-Ta1) and Preparation Example 7 (NCA89) at 30°C and 45°C.
FIG. 12 is a graph showing a resistance change for a cycle of each of Preparation Example 4 (NC9010-Ta1)and Preparation Example 7 (NCA89).
FIG. 13 and FIG. 14 are graphs showing XRDs of Preparation Example 4 (NC9010-Ta1) and Preparation Example 7 (NCA89), respectively.
FIG. 15 is a cross-sectional SEM image and a graph showing an area of a micro crack at 2.7V after 100 cycles of each of Preparation Example 4 (NC9010-Ta1)and Preparation Example 7 (NCA89).
FIG. 16 is a diagram schematically showing a method for measuring micro cracks.
FIG. 17 is a graph showing a dQ/dV curve of each of Preparation Example 4 (NC9010-Ta1) and Preparation Example 7 (NCA89).
FIG. 18 is a graph showing a cross-sectional SEM image based on a SOC (State of Charge) and a microcrack area based on a SOC of each of Preparation Example 4 (NC9010-Ta1) and Preparation Example 7 (NCA89).
FIG. 19 is a graph showing a calcination temperature-based cycle of each positive electrode active material.
FIG. 20 is a graph showing a calcination temperature-based capacity of each positive electrode active material.
FIG. 21 is a graph showing a 100-cycles retention of each positive electrode active material based on a calcination temperature.
FIG. 22 is a cross-sectional SEM image of particles of each positive electrode active material based on a calcination temperature.
FIG. 23 is an SEM image showing a particle shape of each of NC9010 and NC9010-Ta1 based on a calcination temperature.
FIG. 24 is a graph showing a particle size of each of NC9010 and NC9010-Ta1 based on a calcination temperature.
FIG. 25 is an XRD graph of each of NC9010 and NC9010-Ta1 based on a calcination temperature.
FIG. 26 and FIG. 27 are diagrams showing an orientation of primary particles of NC9010-Ta1 based on a calcination temperature.
FIG. 28 is a graph showing a particle size of each of NC9010 and NC9010-Ta1 based on a calcination duration.
FIG. 29 is an SEM image showing particles and cross-sections of the particles of each of NC9010 and NC9010-Ta1 based on a calcination duration.
FIG. 30 is a graph showing a capacity and a 100 cycles retention of each of NC9010, NC9010-Ta1, and NCA89 based on a calcination duration.
FIG. 31 is a graph showing cycle characteristics of each of NCA89 and NC9010-Ta1 based on a calcination duration.
FIG. 32 is a graph showing a capacity and a retention based on a dopant type and a dopant content.
FIG. 33 is a graph showing a resistance based on a dopant type and a dopant content.
FIG. 34 is a graph showing a capacity, a retention, and a length of primary particles at 1 mol% of a dopant content.
FIG. 35 is an SEM image of a cross-section of a positive electrode active material of FIG. 33.
FIG. 36 is a cycle graph using the positive electrode active material of FIG. 33.
FIG. 37 is an SEM image showing a cross-sections of particles of each of NCA89, NC9010-Ta1 and NC9010-Nb1 after 100 cycles.
FIG. 38 is an SEM cross-sectional image of each of NC9604 and NC9604-Ta1 after 100 cycles.
FIG. 39 is a cycle graph using a coin cell of each of NCA95, NCA95-Ta1, and NCA95-Nb1.
FIG. 40 is a graph showing a capacity and a 1000 cycles retention of each of NCA89 and NC9010-Ta1 (calcination at 730°C).
FIG. 41 is a diagram schematically showing a method for measuring primary particles in a secondary particle.
FIG. 42 and FIG. 43 are a SEM cross-sectional image based on a dopant type.
FIG. 44 is a graph and a SEM cross-sectional image showing a short side length of a second primary particle based on a dopant type and a calcination temperature.
FIG. 45 is a graph and a SEM cross-sectional image showing a short side length of a second primary particle based on a calcination duration.

### DETAILED DESCRIPTIONS

Specific details of other embodiments are included in the detailed description and drawings.

Advantages and features of the present disclosure, and how to achieve the advantages and features will become apparent with reference to the embodiments as described below in detail in conjunction with the accompanying drawings. However, the present disclosure is not limited to the embodiments as disclosed below, but may be implemented in a variety of different forms. Unless otherwise specified in following descriptions, all of numbers, values, and/or expressions indicating ingredients, reaction conditions, and contents of ingredients in the present disclosure are, in essence, approximations thereof based on various uncertainties in measurements which occur in obtaining the numbers, values, and/or expressions. Thus, the numbers, values and/or expressions should be understood as being modified by a term "about" in all instances. Further, where a numerical range is disclosed in the present description, the range is continuous and includes a minimum value and a maximum value of the range, unless otherwise indicated. Further, where the number or the value refers to an integer, the range includes all of integers included between the minimum and the maximum of the range, unless otherwise indicated.

Further, in the present disclosure, when a variable is included in a range, the variable will be understood to include all values within a stated range including stated endpoints of the range. For example, a range of "5 to 10" includes values of 5, 6, 7, 8, 9, and 10, as well as any subranges such as 6 to 10, 7 to 10, 6 to 9, 7 to 9, etc. It will be understood that the variable includes any value between valid integers in a stated range such as 5.5, 6.5, 7.5, 5.5 to 8.5, and 6.5 to 9, etc. For example, a range "10% to 30%" includes all of integer values such as 10%, 11%, 12%, 13%, 30%, etc. as well as any subranges such as 10% to 15%, 12% to 18%, or 20% to 30%, etc. It will be understood that the range includes any value between valid integers within the stated range such as 10.5%, 15.5%, 25.5%, etc.

In one embodiment, an average value of diameters or sizes of particles in an agglomerate of various particles such as primary particles and secondary particles is expressed. However, the present disclosure is not limited thereto. Generally, a diameter representing a maximum value of a distribution of the particle diameters, a median diameter corresponding to a median value of an integral distribution curve thereof, and various average diameters (number average, length average, area average, mass average, volume average, etc.) may be used. In the present disclosure, unless otherwise specified, an average size and an average particle diameter may respectively refer to a number average size and a number average diameter, and may mean a D50 (a particle diameter at a point where a distribution percentage is 50%).

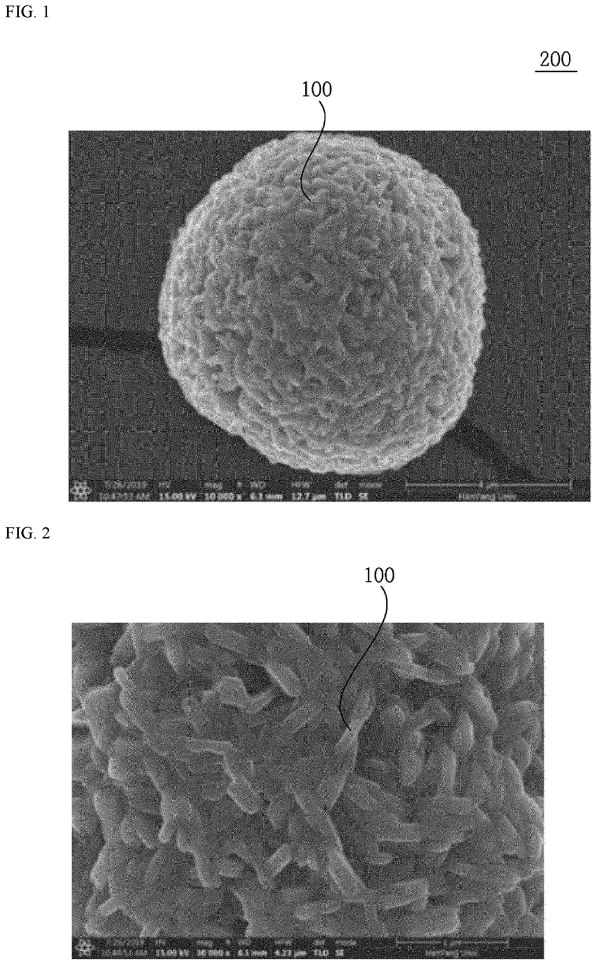

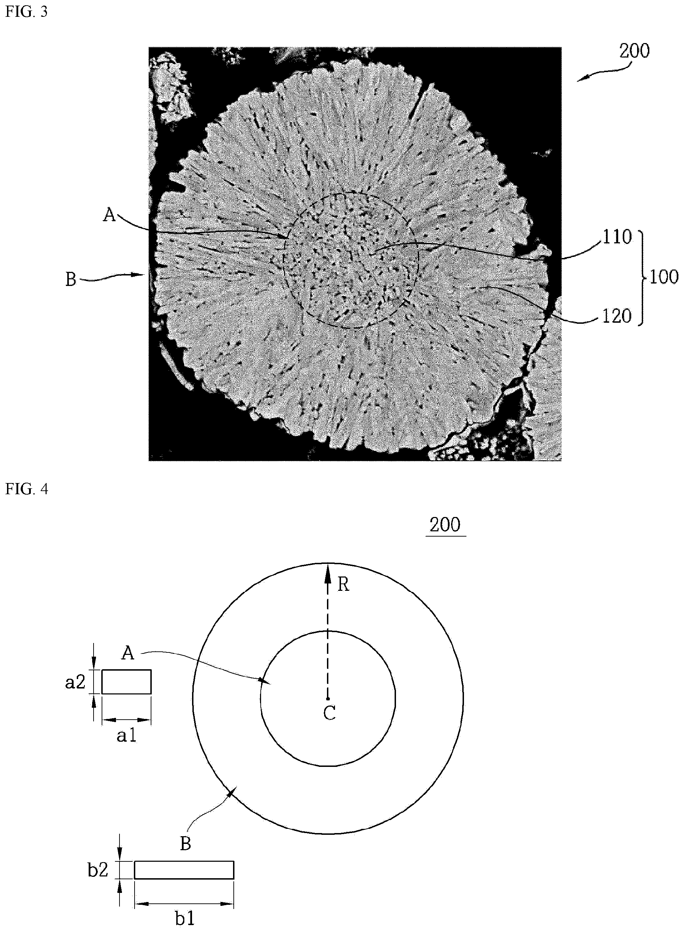

FIG. 1 is a view showing a positive electrode active material according to an embodiment of the present disclosure. FIG. 2 is an enlarged view of an outer surface of FIG. 1. FIG. 3 is a cross-sectional view of FIG. 1. FIG. 4 is a schematic diagram schematically showing FIG. 3.

Referring to FIG. 1 to FIG. 4, embodiments of the present disclosure relate to a positive electrode active material including secondary particles 200, each secondary particle as an agglomerate of a plurality of primary particles 100. The primary particles 100 include first primary particles 110 constituting a core portion A of each secondary particle 200 and second primary particles 120 surrounding the first primary particles 110 and constituting a shell portion B of the secondary particle 200.

An average length of a long side of a longitudinal cross-section of each first primary particle 110 is a1, and an average length of a short side thereof perpendicular to the long side a1 is a2, wherein a1 is equal to or larger than a2 (a1 ≥ a2). An average length of a long side of a longitudinal cross-section of each second primary particle 120 is b1, and an average length of a short side thereof perpendicular to the long side b1 is b2, wherein b1 is larger than b2 (b1 > b2) and a ratio b1/b2 is in a range of 2 to 25. Specifically, each of 90% or greater of the second primary particles may have a ratio b1/b2 in a range of 2 to 25.

The positive electrode active material according to the present embodiment may be used for an positive electrode for a lithium secondary battery. In the positive electrode active material according to the present embodiment, the secondary particle 200 may be approximately spherical. The first primary particles 110 may constitutes the core portion A of the secondary particle 200. The second primary particles 120 may constitutes the shell portion B of the secondary particle 200. The second primary particle 120 may have a rod shape having a longitudinal cross section having a long side and a short side perpendicular to the long side, wherein an average length of the long side is b1, and an average length of the short side is b2. At least some of the second primary particles 120 may be oriented in a radial direction. The radial direction means a direction R from a center c of the secondary particle 200 toward a surface of the secondary particle 200 as shown in FIG. 4.

For example, the second primary particle 120 may be oriented such that the long side is parallel to the radial direction. Thus, diffusion of lithium ions from the surface of the secondary particle 200 into the inside thereof may be promoted. Further, the second primary particle 120 may be oriented in a parallel manner to a movement direction of lithium ions. This may reduce a volume change of the secondary particle 200 during expansion and contraction of the secondary particle 200 due to repeated reversible charging and discharging of the secondary battery. Cracks that may occur between the primary particles 100 may be suppressed. For example, a spacing between the primary particles may be reduced according to a shape change of the primary particles 100 due to a volume change accompanying the electrochemical reaction, so that the lifespan characteristic of the secondary battery may be improved. For example, the direction R from the center c of the secondary particle 200 toward the surface of the secondary particle 200 may be parallel to a direction of an a-axis direction of the primary particle 100, and a c-axis direction of the primary particle 100 may be perpendicular to the a-axis direction.

For example, a maximum change percentage along the a-axis of the primary particle 100 after a charge/discharge cycle may be approximately 2.1%, while a maximum change percentage along the c-axis thereof may be approximately 4.5%. This phenomenon may be caused by the primary particles, particularly, the second primary particles 120 constituting the shell portion of the secondary particle 200 rather than the first primary particles 110 constituting the core portion of the secondary particle 200. In general, micro-cracks may occur due to anisotropic volume changes along the a-axis and the c-axis of the second primary particle 120, thereby reducing the capacity and lifespan characteristics after the cycles.

On the contrary, in an embodiment of the present disclosure, the second primary particle 120 may contain a doping element, and a ratio between contents of the doping element and a transition metal may be controlled such that the ratio b 1/b2 of the second primary particle 120 may be in a range of 2 to 25, and the second primary particle 120 has a rod shape having an aspect ratio in the above range. Thus, a stable micro-structure may be maintained even in anisotropic contraction along the a-axis and the c-axis. Preferably, the ratio b1/b2 of the second primary particle 120 may be in a range of 2 to 20, or 2 to 18, or 2 to 15, or 2 to 13, or 2 to 11.

In the present embodiment, the secondary particle 200 may be formed by agglomeration of the first primary particles 110 and the second primary particles 120. The first primary particle 110 may have an average length a1 of a long side of a longitudinal cross section thereof and an average length a2 of a short side thereof. The second primary particle 120 may have an average length b1 of a long side of a longitudinal cross section thereof and an average length b2 of a short side of the longitudinal cross section thereof. The positive electrode active material according to the present embodiment may include nickel (Ni) at a high content level. Controlling the shapes of the first primary particle 110 and the second primary particle 120 may allow the cycle characteristics and stability of the battery to be improved and allow the battery to have high electrochemical capacity. The first primary particles 110 may constitute the core portion A of the secondary particle 200, while the second primary particles 120 may constitute the shell portion B of the secondary particle 200, so that the second primary particles 120 surround an outer surface of the agglomerate of the first primary particles 110.

Each of 90% or greater of the second primary particles 120 may have the ratio b1/b2 in a range of 2 to 25. When each of 90% or greater of the second primary particles 120 constituting the shell portion of the secondary particle 200 may have the ratio b1/b2 in a range of 2 to 25, lithium ions may move smoothly from the surface of the secondary particle 200 to the center c thereof. A morphology of the secondary particle 200 may be efficiently adjusted to control reversibility of a volume change that occurs during charging and discharging of the secondary battery, so that an overall shape of the secondary particle 200 may be maintained. Specifically, the ratio b1/b2 may be in a range of 2 to 15, more specifically, 2.2 to 11.

Further, in the second primary particle 120, b1 may be 2.0µm or smaller. When b1 of the second primary particle 120 is larger than 2.0µm, the lifespan characteristic of the secondary battery may be deteriorated. Specifically, b 1 may be in a range of 0.005 *µ*m to 2.0 *µ*m, or 0.01 *µ*m to 2.0 *µ*m, 0.05 *µ*m to 2.0 *µ*m, 0.1 *µ*m to 2.0 *µ*m, 0.05 *µ*m to 1.5 *µ*m, 0.05 *µ*m to 1.2 *µ*m, or 0.1 *µ*m to 1.2 *µ*m.

Each of 90% or greater of the second primary particles of the second primary particle 120 may have b1 in a range of 0.1µm to 2.0µm, and b2 in a range of 0.01µm to 0.8µm. When each of b1 and b2 of the second primary particle 120 is controlled to be in the above range, orientations of the second primary particles 120 constituting the secondary particle 200 may be further uniform.

Each of an average length of a2 of each of 90% or greater of the first primary particles 110 and an average length of b2 of each of 90% or greater of the second primary particles 120 may be in a range of 0.01µm to 0.8µm. For example, a2 as the short side length of the first primary particle 110 may be similar to b2 as the short side length of the second primary particle 120. The first primary particles 110 and the second primary particles 120 may constitute the core portion A and the shell portion B of the secondary particle 200, respectively. Specifically, the average length of b2 of each of 90% or greater of the second primary particles 120 may be in a range of 0.015µm to 0.8µm, or 0.02µm to 0.6µm, or 0.03µm to 0.5µm, or 0.03µm to 0.25µm. Further, a ratio b1/a1 may be in a range of 1 to 3.5, while a ratio b2/a2 may be in a range of 0.8 to 1.5.

When, in the secondary particle 200, each of 90% or greater of the first primary particles 110 and each of 90% or greater of the second primary particles 120 have the dimensions in the above-described range, the first primary particles 110 constitute the core portion of the secondary particle 200 to guide the second primary particles 120 to be oriented along the first primary particles 110. The second secondary particles 120 may surround the outer surface of the agglomerate of the first primary particles 110, so that the secondary particle 200 may have a stable micro-structure and the electrochemical characteristic and lifespan characteristic of the battery may be improved.

After the battery including the positive electrode active material has been subjected to multiple charging/discharging cycles, micro cracks may occur in a space between the first primary particles 110 or between the second primary particles 120 in the secondary particle 200.

A manner in which the micro crack according to the present embodiment affects the lifespan of the battery may be related to a crack path. The crack path means a path along which a first crack between the first primary particles 110 and a second crack between the second primary particles 120 are connected to each other, and the second crack extends to the outermost surface of the secondary particle 200. For example, in the secondary particle 200 according to the present embodiment, micro cracks and crack paths may be prevented from occurring inside the secondary particle 200 after 100 cycles, thereby improving lifespan and thermal stability.

Specifically, the positive electrode active material according to the present embodiment has been subjected to 100 charging/discharging cycles where each cycle includes a charging of the battery to 4.3V under 0.5C constant current (CC) or constant current and constant voltage (CV) and a discharging of the battery to 2.7V under 0.5C constant current. Then, when the battery is discharged to 0.27V, an area of the micro crack may be equal to or smaller than 13% of an area of a longitudinal cross section of the secondary particle. Thus, the crack path may be prevented from occurring. Specifically, the area of micro crack after the 100 cycles may be in a range of 2% to 8%, more specifically, 3% to 7% of an area of a longitudinal cross section of the secondary particle.

The positive electrode active material has been subjected to 100 charging/discharging cycles where each cycle includes a charging of the battery to 4.3V under 0.5C constant current (CC) and a discharging of the battery to 2.7V under 0.5C constant current. Then, when the battery is discharged to 0.27V, the area of the microcrack may be measured. In this connection, the area of the micro crack including both the spacing between the first primary particles 110 and the spacing between the second primary particles 120 may be equal to or smaller than 13% of a total area of a longitudinal cross section of the secondary particle. Specifically, the area of the micro crack may be equal to or smaller than 10% of a total area of a longitudinal cross section of the secondary particle. More specifically, the area of the micro crack may be in a range of 0.05% to 10%, more specifically, 1% to 8% of the total area of a longitudinal cross section of the secondary particle. Further, the area of the micro crack may be increased as a content of nickel (Ni) increases.

In general, when the secondary battery using the positive electrode active material has been subjected to multiple charge/discharge cycles for a long period of time, the secondary particle constituting the positive electrode active material repeatedly expands and contracts. In the process of performing the cycles, a volume of each of the primary particles constituting the secondary particle may not be reversibly recovered, or a side reaction may occur due to electrolyte invasion into a space between the primary particles, such that the micro-structure of the primary particles is destroyed, which causes a decrease in lifespan or a rapid decrease in capacity.

The crack path may include a path along which the first crack as a separation space occurring between the first primary particles 110 of the core portion A, the second crack as a separation space occurring between the second primary particles 120 of the shell portion B are connected to each other, and then the second crack connected to the first crack extends to the outer surface of the secondary particle. When the crack path occurs, electrolyte may invade into the core portion A of the secondary particle 200, thereby causing the collapse of the micro-structure of the secondary particle 200.

On the contrary, the positive electrode active material according to the present embodiment may be prepared using a novel doping element. Further, shapes and arrangements of the first primary particles 110 and the second primary particles 120 constituting the positive electrode active material may be controlled using a novel method such that the occurrence of the crack paths in the secondary particle 200 may be suppressed even after cycles for a long time. For example, controlling the secondary particle 200 so that the area of the micro-crack is equal to or smaller than 13% of a total area of a longitudinal cross section of the secondary particle may allow the crack path including the connection between the first crack and the second crack and the extension to the outer surface of the secondary particle 200 to be prevented from occurring in the secondary particle.

In the present embodiment, the primary particle 100 may contain nickel (Ni) and, M1 and M2, wherein M1 includes at least one of manganese (Mn), cobalt (Co) and aluminum (Al), wherein a content of nickel (Ni) may be equal to or greater than 80 mol%, wherein a content of M2 as a doping element may be in a range of 0.05 mol% to 2 mol%. Preferably, the content of M2 may be in a range of 0.05 mol% to 1.5 mol%, or 0.05 mol% to 1.2 mol%, or 0.05 mol% to 1 mol%, or 0.1 mol% to 1.7 mol%, or 0.1 mol% to 1.5 mol%, or 0.1 mol% to 1.2 mol%, or 0.1 mol% to 0.5 mol%, or 0.5 mol% to 1.5 mol%, or 0.5 mol% to 1.2 mol%.

The positive electrode active material according to the present embodiment may contain nickel (Ni) at a high content level which is 80 mol% or greater, and 0.05 mol% to 2mol% of the doping element. Thus, the battery including the same may exhibit high capacity, and have improved lifespan characteristic and thermal stability at the same time. When the content of nickel (Ni) is smaller than 80 mol%, the battery may not exhibit high capacity. When the content of the doping element is in the above range, the doping element may allow the secondary particle 200 to be structurally stabilized via interaction thereof with a transition metal such as nickel.

In one embodiment of the present disclosure, the positive electrode active material may be prepared by mixing a first composite metal oxide containing nickel (Ni), M1 and M2 with a lithium compound and performing calcination of the mixture in a temperature range of 700°C to 800°C, or may be prepared by mixing a second composite metal oxide containing nickel (Ni) and M1 with M2 and lithium compound and performing calcination of the mixture in a temperature range of 700°C to 800°C. Each of the first and second composite metal oxides, and the positive electrode active material prepared by the calcination of the first or second composite metal oxide may be composed of agglomerated particles prepared by agglomerating a plurality of micro-particles. The positive electrode active material may be prepared by calcination of a mixture of the first or second composite metal oxide and a lithium compound at a high temperature, for example, in a temperature range of 700°C to 800°C.

In general, in a process of mixing the first or second composite metal oxide with a lithium compound, and of calcination of the mixture, micro-particles constituting the first or second composite metal oxide may be agglomerated with each other. As a result, the primary particles constituting the positive electrode active material may have a volume larger than that of the micro-particles constituting the first or second composite metal oxide before the calcination. As such, when the battery including the positive electrode active material in which the volume of the primary particles is increased is subjected to the charging and discharging cycle, micro-particle arrangement of the first or second composite metal oxide before the calcination may not be maintained in the secondary particle as the agglomerate of the primary particles due to a difference between volume changes in the long and short sides thereof. Further, when the battery is subjected to the charging and discharging cycle, the micro crack including the separation space between the primary particles may occur and further, the micro crack may gradually accumulate, thereby causing the collapse of the micro-structure and deterioration of the lifespan characteristic.

On the contrary, after the positive electrode active material according to the present embodiment has been subjected to calcination at a high temperature in a temperature range of 700°C to 800°C, an original shape and size (for example, micro-particles) of the first or second composite metal oxide before the calcination may be maintained in calcinated the positive electrode active material. Further, the primary particles constituting the positive electrode active material may have a similar orientation to that of each of the primary particles constituting the first or second composite metal oxide. Therefore, after the positive electrode active material according to the present embodiment has been subjected to a plurality of cycles, the positive electrode active material may exhibit a high retention characteristic, and may maintain a stable micro-structure such that the micro cracks hardly occur.

In the present embodiment, the first composite metal oxide may be prepared by mixing nickel (Ni) and M1 and M2 and calcination of the mixture. The second composite metal oxide may be prepared by mixing nickel (Ni) and M1, and then adding M2 thereto, and then calcination of the mixture. M2 may act as the doping element and may be added at 0.05 mol% to 2 mol% based on a total content of the positive electrode active material. As in the first composite metal oxide, M2 and nickel (Ni) and M1 may be subjected to co-precipitation at the same time. Alternatively, as in the second composite metal oxide nickel, (Ni) and M1 may be subjected to co-precipitation, and then M2 present in a solid state and having a particle size of 2µm or smaller and a lithium compound may be added thereto, and the mixture may be subjected to calcination.

M2 may include at least one of tantalum (Ta), tungsten (W), molybdenum (Mo), niobium (Nb), and antimony (Sb). Specifically, when M2 is tantalum (Ta), the ratio b2/a2 may be in a range of 0.5 to 1.2, and b2 may be in a range of 0.01µm to 0.6µm; when M2 is tungsten (W), the ratio b2/a2 may be in a range of 0.5 to 2, and b2 may be in a range of 0.005µm to 0.5µm; when M2 is molybdenum (Mo), the ratio b2/a2 may be in a range of 0.7 to 1.5, and b2 may be in a range of 0.02µm to 0.7µm; when M2 is niobium (Nb), the ratio b2/a2 may be in a range of 0.5 to 1.5, and b2 may be in a range of 0.02µm to 0.7µm; and when M2 is antimony (Sb), the ratio b2/a2 may be in a range of 0.5 to 1.5, and b2 may be in a range of 0.01µm to 0.5µm.

Alternatively, M2 may include at least one of tantalum (Ta), tungsten (W), molybdenum (Mo), niobium (Nb) and antimony (Sb), and at least one of tin (Sn), hafnium (Hf), silicon (Si), zirconium (Zr), calcium (Ca), germanium (Ge), gallium (Ga), indium (In), ruthenium (Ru), tellurium (Te), iron (Fe), chromium (Cr), vanadium (V) and titanium (Ti). That is, M2 may be composed of at least two different doping elements.

For example, in the positive electrode active material according to the present embodiment, M2 as the doping element may include one of tantalum (Ta), tungsten (W), molybdenum (Mo), niobium (Nb), and antimony (Sb), and at least one auxiliary element selected from tin (Sn), hafnium (Hf), silicon (Si), zirconium (Zr), calcium (Ca), germanium (Ge), gallium (Ga), indium (In), ruthenium (Ru), tellurium (Te), iron (Fe), chromium (Cr), vanadium (V) and titanium (Ti) to supplement a function of one of tantalum (Ta), tungsten (W), molybdenum (Mo), niobium (Nb), and antimony (Sb).

After the battery including the positive electrode active material has been subjected to 100 cycles in which each cycle includes charging of the battery to 4.3V under 0.5C constant current and discharging of the battery to 2.7V under 0.5C constant current, Rct of the positive electrode active material may be in a range of 10Ω to 30Ω. After the battery including the positive electrode active material according to the present embodiment has been subjected to a plurality of cycles, that Rct of the positive electrode active material may be maintained within the above-mentioned range because the change of the micro-structure of the positive electrode active material is controlled.

Further, when the positive electrode active material after the calcination at a temperature of 730°C or lower is subjected to X-ray diffraction analysis using a device with 45kV, and 40mA output and a Cu Ka beam source at a scan rate of 1 degree per minute and at a step size spacing of 0.0131, a ratio of intensity of peak 003 to intensity of peak 104 may be in a range of 2 to 2.2. In the X-ray diffraction analysis, the positive electrode active material as a measurement target sample may be prepared to minimize an effect of errors due to other equipment, sample preparation details, etc. For example, the beam source for measuring the positive electrode active material may have an area smaller than the area of the positive electrode active material and may be configured to minimize a preferred orientation.

The positive electrode active material may be a compound containing the metal, lithium, the doping element, and oxygen. The positive electrode active material may be prepared by providing a composite metal oxide containing 80 mol% or greater of nickel (Ni) as the metal, adding 0.05 mol% to 2 mol% of the doping element including at least one of tantalum (Ta), tungsten (W), molybdenum (Mo), niobium (Nb), and antimony (Sb)% and a lithium compound containing lithium to the composite metal oxide and then calcination of the mixture. The positive electrode active material may be prepared via calcination at least one time in the temperature range of 700 °C to 800 °C. The average length of b2 of the second primary particle in the positive electrode active material after the calcination may be in a range of 0.01µm to 0.8µm.

In general, when the mixture of the composite metal oxide containing 80 mol% or greater of nickel (Ni) and the lithium compound is calcined at a high temperature, the volume of the primary particles constituting the secondary particles expands. In particular, the second primary particle in which a difference between aspect ratios of the primary particles is larger has a large volume change, such that the micro-structure of the secondary particle may be unstable.

On the contrary, although the positive electrode active material according to the present embodiment contains nickel (Ni) at a higher content level which is 80 mol% or greater, each of 90% or greater of the second primary particles has the average length of b2 which is maintained at 0.01µm to 0.25µm even after calcination in the temperature range of 700°C to 800°C at the high temperature. This may stabilize the micro-structure of the secondary particle such that the characteristic of the positive electrode active material may be further improved. More specifically, the average length of b2 may be in a range of 0.01µm to 0.7µm, or 0.01µm to 0.3µm, 0.02µm to 0.3µm, or 0.02µm to 0.2µm.

According to another aspect of the present disclosure, embodiments of the present disclosure relate to a composite metal oxide for a lithium secondary battery as a precursor of the above-described positive electrode active material. The composite metal oxide may be a spherical agglomerate of particles as prepared via agglomeration of a plurality of micro-particles. The composite metal oxide may be mixed with lithium compound and then calcination of the mixture may be carried out at a temperature range of 700°C to 800°C, thereby producing the positive electrode active material. The micro-particles of the composite metal oxide may include the first micro-particles constituting a core portion of the agglomerate of particles, and the second micro-particles surrounding the first micro-particles and constituting a shell portion of the agglomerate of particles. A aspect ratio of the second micro-particle may correspond to the aspect ratio of the second primary particle of the positive electrode active material. Thus, the composite metal oxide for the lithium secondary battery may be prepared.

The composite metal oxide according to the present embodiment may be subjected to calcination at a high temperature such as, for example, a temperature range of 700 °C to 800 °C, thereby producing the positive electrode active material. The composite metal oxide hardly changes in volume during the calcination process. Thus, the size and shape of the composite metal oxide may be maintained to be substantially the same as those of the positive electrode active material. The co-precipitation of the composite metal oxide may allow at least some of the micro-particles to be oriented to have directionality while the micro-particles are agglomerated with each other. The composite metal oxide may have a thermodynamically stable structure. This structure is maintained even during the calcination, thereby improving the electrochemical and lifespan characteristics of the positive electrode active material.

The composite metal oxide may contain a metal, wherein the metal includes at least one of nickel (Ni), cobalt (Co), manganese (Mn), and aluminum (Al). Further, the composite metal oxide may be mixed with a doping element and a lithium compound and then the mixture may be subjected to calcination, thereby producing the positive electrode active material.

The doping element may include at least one of tantalum (Ta), tungsten (W), molybdenum (Mo), niobium (Nb), and antimony (Sb). The content of nickel (Ni) may be in a range of 80 mol% or greater, and the content of the doping element may be in a range of of 0.05 mol% to 2 mol%.

According to still another aspect of the present disclosure, embodiments of the present disclosure relate to a positive electrode for a secondary battery containing the above-described positive electrode active material, and to a lithium secondary battery including the positive electrode.

According to still yet further aspect of the present disclosure, embodiments of the present disclosure relate to a battery module including the lithium secondary battery as a unit cell.

Further, according to still yet further aspect of the present disclosure, embodiments of the present disclosure relate to a battery pack including the battery module, wherein the battery pack may be used as a power source for a medium and large sized apparatus, wherein the medium and large sized apparatus may be selected from a group consisting of electric vehicles, hybrid electric vehicles, plug-in hybrid electric vehicles, and systems for power storage.

Present Examples and Comparative Examples of the present disclosure are described below. However, the following Examples are only preferred embodiments of the present disclosure. The scope of the right of the present disclosure is not limited to the following Examples.

### 1. Preparation of positive electrode active material

### (1) Positive electrode active material based on Ta dopant content

### Preparation Example 1

10 liters of distilled water was put into a co-precipitation reactor (capacity 47L, and an output of a rotary motor 750W or greater), and then N₂ gas was supplied to the reactor at a flow rate of 6 liters/min. While a temperature of the reactor was maintained at 45°C, stirring was carried out at 350 rpm. Nickel sulfate aqueous solution (NiSO₄6H₂O, Samchun Chemicals), and cobalt sulfate aqueous solution (CoSO₄7H₂O, Samchun Chemicals) were mixed with each other such that a molar ratio of nickel (Ni) and cobalt (Co) was 9:1, thereby preparing a metal solution having a concentration of 2M. The prepared metal solution was continuously input to the reactor for 24 hours at 0.561 liter/hour. 16M concentration of ammonia solution (NH₄OH, JUNSEI) was continuously input to the reactor for 24 hours at 0.08L/hour. 4M concentration of sodium hydroxide solution (NaOH, Samchun Chemicals) was continuously input to the reactor for 24 hours at 0.60L/hour. While maintaining pH in the reactor in a range of 10 to 12, co-precipitation was performed to prepare Ni_{0.9}Co_{0.1}(OH)₂ composite metal hydroxide.

The prepared Ni_{0.9}Co_{0.1}(OH)₂ metal complex hydroxide was washed several times with distilled water, filtered, and dried in a vacuum dryer at 110°C for 12 hours to prepare the Ni_{0.9}Co_{0.1}(OH)₂ metal complex hydroxide in a powder form. After mixing the Ni_{0.9}Co_{0.1}(OH)₂ metal complex hydroxide prepared in the powder form and a lithium hydroxide (LiOH) with each other at a molar ratio of 1:1.01, the mixture was heated at a temperature increase rate of 2°C/min and was maintained at 450°C for 5 hours. In this way, preliminary calcination was performed. Subsequently, main calcination was carried out at 730°C for 10 hours to prepare positive electrode active material powders. This Preparation Example is shown in Table 1.

### Preparation Example 2

10 liters of distilled water was put into a co-precipitation reactor (capacity 47L, and an output of a rotary motor 750W or greater), and then N₂ gas was supplied to the reactor at a flow rate of 6 liters/min. While a temperature of the reactor was maintained at 45°C, stirring was carried out at 350 rpm. Nickel sulfate aqueous solution (NiSO₄6H₂O, Samchun Chemicals), and cobalt sulfate aqueous solution (CoSO₄7H₂O, Samchun Chemicals) were mixed with each other such that a molar ratio of nickel (Ni) and cobalt (Co) was 9:1, thereby preparing a metal solution having a concentration of 2M. The prepared metal solution was continuously input to the reactor for 24 hours at 0.08 liter/hour. 16M concentration of ammonia solution (NH₄OH, JUNSEI) was continuously input to the reactor for 24 hours at 0.11L/hour. 4M concentration of sodium hydroxide solution (NaOH, Samchun Chemicals) was continuously input to the reactor for 24 hours at 0.60L/hour. While maintaining pH in the reactor in a range of 10 to 12, co-precipitation was performed to prepare Ni_{0.9}Co_{0.1}(OH)₂ composite metal hydroxide.

The prepared Ni_{0.9}Co_{0.1}(OH)₂ metal complex hydroxide was washed several times with distilled water, filtered, and dried in a vacuum dryer at 110°C for 12 hours to prepare the Ni_{0.9}Co_{0.1}(OH)₂ metal complex hydroxide in a powder form. We used a ball mill to prepare tantalum oxide (Ta₂O₅) powders so that an average particle size thereof was 2 *µ*m or smaller.

The Ni_{0.9}Co_{0.1}(OH)₂ composite metal oxide prepared in the powder form, the tantalum oxide (Ta₂O₅), and lithium hydroxide (LiOH) were mixed with each other at a molar ratio of 0.9995:0.00025:1.01. Then, the mixture was heated at a temperature increase rate of 2°C/min and was maintained at 450°C for 5 hours. In this way, preliminary calcination was performed. Subsequently, main calcination was carried out at 730°C for 10 hours to prepare positive electrode active material powders. This Preparation Example is shown in Table 1.

### Preparation Example 3 to Preparation Example 6

Each of positive electrode active material powders of Preparation Example 3 to Preparation Example 6 was prepared in the same manner as in Preparation Example 2 except that the Ni_{0.9}Co_{0.1}(OH)₂ composite metal oxide prepared in the powder form in Preparation Example 2, tantalum oxide (Ta₂O₅), and lithium hydroxide (LiOH) were mixed with each other at each of molar ratios as shown in the following Table 1. These Preparation Examples are shown in Table 1.

### Preparation Example 7

A positive electrode active material powder of Preparation Example 7 was prepared in the same manner as in Preparation Example 2 except that the Ni_{0.9}Co_{0.1}(OH)₂ composite metal oxide prepared in the powder form in Preparation Example 2, aluminum hydroxide (Al(OH)₃), and lithium hydroxide (LiOH) were mixed with each other at a molar ratio as shown in the following Table 1. These Preparation Examples are shown in Table 1.

**Table 1**

| Examples | Names | Molar ratio of composite metal oxide: tantalum oxide: lithium hydroxide | Dopant | Dopant content (mol%) | Calcination temperature | Calcination duration |
|---|---|---|---|---|---|---|
| Preparation Example 1 | NC9010 | 1:0:1.01 | - | - | 730°C | 10 hours |
| Preparation Example 2 | NC9010-Ta0.05 | 0.9995:0.00025:1.01 | Ta | 0.05 | 730°C | 10 hours |
| Preparation Example 3 | NC9010-Ta0.5 | 0.995:0.0025:1.01 | Ta | 0.5 | 730°C | 10 hours |
| Preparation Example 4 | NC9010-Ta1 | 0.99:0.005:1.01 | Ta | 1 | 730°C | 10 hours |
| Preparation Example 5 | NC9010-Ta2 | 0.98:0.01:1.01 | Ta | 2 | 730°C | 10 hours |
| Preparation Example 6 | NC9010-Ta5 | 0.95:0.025:1.01 | Ta | 5 | 730°C | 10 hours |
| Preparation Example 7 | NCA89 | 0.99:0.01:1.01^{∗} | - | - | 730°C | 10 hours |

| | | | | | | |
|---|---|---|---|---|---|---|
| (^{∗} molar ratio of composite metal oxide : aluminum hydroxide : lithium hydroxide) | | | | | | |

### (2) Positive electrode active material based on calcination temperature and calcination duration

### Preparation Example 8 to Preparation Example 11

We prepared each of positive electrode active material powders of Preparation Example 8 to Preparation Example 11 in the same way as in Preparation Example 2 except that only the calcination temperature in Preparation Example 1 was changed based on Table 2 below. These Preparation Examples are shown in Table 2.

### Preparation Example 12 to Preparation Example 15

Each of positive electrode active material powders of Preparation Example 12 to Preparation Example 15 was prepared in the same manner as in Preparation Example 2 except that the Ni_{0.9}Co_{0.1}(OH)₂ composite metal oxide prepared in the powder form in Preparation Example 2, tantalum oxide (Ta₂O₅), and lithium hydroxide (LiOH) were mixed with each other at each of molar ratios as shown in the following Table 2, and the mixture was calcinated at a calcination temperature as shown in the following Table 2. These Preparation Examples are shown in Table 2.

### Preparation Example 16 to Preparation Example 19

Each of positive electrode active material powders of Preparation Example 16 to Preparation Example 19 was prepared in the same manner as in Preparation Example 2 except that the Ni_{0.9}Co_{0.1}(OH)₂ composite metal oxide prepared in the powder form in Preparation Example 2, aluminum hydroxide (Al(OH)₃), and lithium hydroxide (LiOH) were mixed with each other at each of molar ratios as shown in the following Table 2, and the mixture was calcinated at a calcination temperature as shown in the following Table 2. These Preparation Examples are shown in Table 2.

**Table 2**

| Examples | Names | Molar ratio of composite metal oxide: tantalum oxide: lithium hydroxide | Dopant | Dopant content (mol%) | Calcination temperature | Calcination duration |
|---|---|---|---|---|---|---|
| Preparation Example 1 | NC9010 | 1:0:1.01 | - | - | 730°C | 10 hours |
| Preparation Example 8 | NC9010 | 1:0:1.01 | - | - | 750°C | 10 hours |
| Preparation Example 9 | NC9010 | 1:0:1.01 | - | - | 770°C | 10 hours |
| Preparation Example 10 | NC9010 | 1:0:1.01 | - | - | 790°C | 10 hours |
| Preparation Example 11 | NC9010 | 1:0:1.01 | - | - | 850°C | 10 hours |
| Preparation Example 4 | NC9010-Ta1 | 0.99:0.005:1.01 | Ta | 1 | 730°C | 10 hours |
| Preparation Example 12 | NC9010-Ta1 | 0.99:0.005:1.01 | Ta | 1 | 750°C | 10 hours |
| Preparation Example 13 | NC9010-Ta1 | 0.99:0.005:1.01 | Ta | 1 | 770°C | 10 hours |
| Preparation Example 14 | NC9010-Ta1 | 0.99:0.005:1.01 | Ta | 1 | 790°C | 10 hours |
| Preparation Example 15 | NC9010-Ta1 | 0.99:0.005:1.01 | Ta | 1 | 850°C | 10 hours |
| Preparation Example 7 | NCA89 | 0.99:0.01:1.01^{∗} | - | - | 730°C | 10 hours |
| Preparation Example 16 | NCA89 | 0.99:0.01:1.01^{∗} | - | - | 750°C | 10 hours |
| Preparation Example 17 | NCA89 | 0.99:0.01:1.01^{∗} | - | - | 770°C | 10 hours |
| Preparation Example 18 | NCA89 | 0.99:0.01:1.01^{∗} | - | - | 790°C | 10 hours |
| Preparation Example 19 | NCA89 | 0.99:0.01:1.01^{∗} | - | - | 850°C | 10 hours |

| | | | | | | |
|---|---|---|---|---|---|---|
| (^{∗} molar ratio of composite metal oxide : aluminum hydroxide : lithium hydroxide) | | | | | | |

### Preparation Example 20 and Preparation Example 21

We prepared each of positive electrode active material powders of Preparation Example 20 to Preparation Example 21 in the same way as in Preparation Example 2 except that only the calcination temperature in Preparation Example 1 was changed based on Table 3 below. These Preparation Examples are shown in Table 3.

### Preparation Example 22 to Preparation Example 23

Each of positive electrode active material powders of Preparation Example 22 to Preparation Example 23 was prepared in the same manner as in Preparation Example 2 except that the Ni_{0.9}Co_{0.1}(OH)₂ composite metal oxide prepared in the powder form in Preparation Example 2, tantalum oxide (Ta₂O₅), and lithium hydroxide (LiOH) were mixed with each other at each of molar ratios as shown in the following Table 3, and the mixture was calcinated at a calcination temperature as shown in the following Table 3. These Preparation Examples are shown in Table 3.

### Preparation Example 24 to Preparation Example 25

Each of positive electrode active material powders of Preparation Example 24 to Preparation Example 25 was prepared in the same manner as in Preparation Example 2 except that the Ni_{0.9}Co_{0.1}(OH)₂ composite metal oxide prepared in the powder form in Preparation Example 2, aluminum hydroxide (Al(OH)₃), and lithium hydroxide (LiOH) were mixed with each other at each of molar ratios as shown in the following Table 3, and the mixture was calcinated at a calcination temperature as shown in the following Table 3. These Preparation Examples are shown in Table 3.

**Table 3**

| Examples | Names | Molar ratio of composite metal oxide: tantalum oxide: lithium hydroxide | Dopant | Dopant content (mol%) | Calcination temperature | Calcination duration |
|---|---|---|---|---|---|---|
| Preparation Example 1 | NC9010 | 1:0:1.01 | - | - | 730°C | 10 hours |
| Preparation Example 20 | NC9010 | 1:0:1.01 | - | - | 730°C | 5 hours |
| Preparation Example 21 | NC9010 | 1:0:1.01 | - | - | 730°C | 20 hours |
| Preparation Example 4 | NC9010-Ta1 | 0.99:0.005:1.01 | Ta | 1 | 730°C | 10 hours |
| Preparation Example 22 | NC9010-Ta1 | 0.99:0.005:1.01 | Ta | 1 | 730°C | 5 hours |
| Preparation Example 23 | NC9010-Ta1 | 0.99:0.005:1.01 | Ta | 1 | 730°C | 20 hours |
| Preparation Example 7 | NCA89 | 0.99:0.01:1.01^{∗} | - | - | 730°C | 10 hours |
| Preparation Example 24 | NCA89 | 0.99:0.01:1.01^{∗} | - | - | 730°C | 5 hours |
| Preparation Example 25 | NCA89 | 0.99:0.01:1.01^{∗} | - | - | 730°C | 20 hours |

| | | | | | | |
|---|---|---|---|---|---|---|
| (*molar ratio of composite metal oxide : aluminum hydroxide : lithium hydroxide) | | | | | | |

### (3) Positive electrode active material based on dopant type and dopant content

### Preparation Example 26 to Preparation Example 41

Each of positive electrode active material powders of Preparation Example 26 to Preparation Example 41 was prepared in the same manner as in Preparation Example 2 except that when the Ni_{0.9}Co_{0.1}(OH)₂ composite metal oxide prepared in the powder form in Preparation Example 2, tantalum oxide (Ta₂O₅), and lithium hydroxide (LiOH) were mixed with each other in Preparation Example 2, tantalum oxide (Ta₂O₅) as the dopant compound was replaced with each of niobium pentoxide (Nb₂O₅) (Preparation Example 26 to Preparation Example 29), molybdenum trioxide (MoO₃) (Preparation Example 30 to Preparation Example 33), tungsten trioxide (WO₃) (Preparation Example 34 to Preparation Example 37), and antimony trioxide (Sb₂O₃) (Preparation Example 38 to Preparation Example 41) which was added at each content (0.05 mol%, 0.5 mol%, 1 mol% and 2 mol%) shown in a following Table 4. These Preparation Examples are shown in Table 4. The dopant compound was prepared in a powder form using a ball mill so that an average particle size thereof was 2 *µ*m or smaller.

**Table 4**

| Examples | Names | Molar ratio of composite metal oxide: dopant compound: lithium hydroxide | Dopant | Dopant content (mol%) | Calcination temperature | Calcination duration |
|---|---|---|---|---|---|---|
| Preparation Example 1 | NC9010 | 1:0:1.01 | - | - | 730°C | 10 hours |
| Preparation Example 2 | NC9010-Ta0.05 | 0.9995:0.00025:1.01 | Ta | 0.05 | 730°C | 10 hours |
| Preparation Example 3 | NC9010-Ta0.5 | 0.995:0.0025:1.01 | Ta | 0.5 | 730°C | 10 hours |
| Preparation Example 4 | NC9010-Ta1 | 0.99:0.005:1.01 | Ta | 1 | 730°C | 10 hours |
| Preparation Example 5 | NC9010-Ta2 | 0.98:0.01:1.01 | Ta | 2 | 730°C | 10 hours |
| Preparation Example 26 | NC9010-Nb0.05 | 0.9995:0.00025:1.01 | Nb | 0.05 | 730°C | 10 hours |
| Preparation Example 27 | NC9010-Nb0.5 | 0.995:0.0025:1.01 | Nb | 0.5 | 730°C | 10 hours |
| Preparation Example 28 | NC9010-Nb1 | 0.99:0.005:1.01 | Nb | 1 | 730°C | 10 hours |
| Preparation Example 29 | NC9010-Nb2 | 0.98:0.01:1.01 | Nb | 2 | 730°C | 10 hours |
| Preparation Example 30 | NC9010-Mo0.05 | 0.9995:0.0005:1.01 | Mo | 0.05 | 730°C | 10 hours |
| Preparation Example 31 | NC9010-Mo0.5 | 0.995:0.005:1.01 | Mo | 0.5 | 730°C | 10 hours |
| Preparation Example 32 | NC9010-Mo1 | 0.99:0.01:1.01 | Mo | 1 | 730°C | 10 hours |
| Preparation Example 33 | NC9010-Mo2 | 0.98:0.02:1.01 | Mo | 2 | 730°C | 10 hours |
| Preparation Example 34 | NC9010-W0.05 | 0.9995:0.0005:1.01 | w | 0.05 | 730°C | 10 hours |
| Preparation Example 35 | NC9010-W0.5 | 0.995:0.005:1.01 | w | 0.5 | 730°C | 10 hours |
| Preparation Example 36 | NC9010-W1 | 0.99:0.01:1.01 | w | 1 | 730°C | 10 hours |
| Preparation Example 37 | NC9010-W2 | 0.98:0.02:1.01 | w | 2 | 730°C | 10 hours |
| Preparation Example 38 | NC9010-Sb0.05 | 0.9995:0.00025:1.01 | Sb | 0.05 | 730°C | 10 hours |
| Preparation Example 39 | NC9010-Sb0.5 | 0.995:0.0025:1.01 | Sb | 0.5 | 730°C | 10 hours |
| Preparation Example 40 | NC9010-Sb1 | 0.99:0.005:1.01 | Sb | 1 | 730°C | 10 hours |
| Preparation Example 41 | NC9010-Sb2 | 0.98:0.01:1.01 | Sb | 2 | 730°C | 10 hours |

### (4) Positive electrode active material based on type of composite metal hydroxide

### Preparation Example 42 to Preparation Example 61

Each of positive electrode active material powders of Preparation Example 42 to Preparation Example 61 was prepared in the same manner as in Preparation Example 2 except that the Ni_{0.9}Co_{0.1}(OH)₂ composite metal oxide prepared in the powder form in Preparation Example 2, aluminum hydroxide (Al(OH)₃), lithium hydroxide (LiOH), and the dopant compound were mixed with each other, wherein the dopant compound employed each of tantalum oxide (Ta₂O₅) (Preparation Example 42 to Preparation Example 45), niobium pentoxide (Nb₂O₅) (Preparation Example 46 to Preparation Example 49), molybdenum trioxide (MoO₃) (Preparation Example 50 to Preparation Example 53), tungsten trioxide (WO₃) (Preparation Example 54 to Preparation Example 57), and antimony trioxide (Sb₂O₃) (Preparation Example 58 to Preparation Example 61) which was added at each content (0.05 mol%, 0.5 mol%, 1 mol% and 2 mol%) shown in a following Table 5. These Preparation Examples are shown in Table 5. The dopant compound was prepared in a powder form using a ball mill so that an average particle size thereof was 2 *µ*m or smaller.

**Table 5**

| Examples | Names | Molar ratio of composite metal oxide: tantalum oxide: lithium hydroxide | dopant | Dopant content (mol%) | Calcinationtemperature | calcination duration |
|---|---|---|---|---|---|---|
| Preparation Example 1 | NC9010 | 1:0:1.01 | - | - | 730°C | 10 hours |
| Preparation Example 20 | NC9010 | 1:0:1.01 | - | - | 730°C | 5 hours |
| Preparation Example 21 | NC9010 | 1:0:1.01 | - | - | 730°C | 20 hours |
| Preparation Example 4 | NC9010-Ta1 | 0.99:0.005:1.01 | Ta | 1 | 730°C | 10 hours |
| Preparation Example 22 | NC9010-Ta1 | 0.99:0.005:1.01 | Ta | 1 | 730°C | 5 hours |
| Preparation Example 23 | NC9010-Ta1 | 0.99:0.005:1.01 | Ta | 1 | 730°C | 20 hours |
| Preparation Example 7 | NCA89 | 0.99:0.01:1.01^{∗} | - | - | 730°C | 10 hours |
| Preparation Example 24 | NCA89 | 0.99:0.01:1.01^{∗} | - | - | 730°C | 5 hours |
| Preparation Example 25 | NCA89 | 0.99:0.01:1.01^{∗} | - | - | 730°C | 20 hours |

### Preparation Example 62

10 liters of distilled water was put into a co-precipitation reactor (capacity 47L, and an output of a rotary motor 750W or greater), and then N₂ gas was supplied to the reactor at a flow rate of 6 liters/min. While a temperature of the reactor was maintained at 45°C, stirring was carried out at 350 rpm. Nickel sulfate aqueous solution (NiSO₄6H₂O, Samchun Chemicals), and cobalt sulfate aqueous solution (CoSO₄7H₂O, Samchun Chemicals) were mixed with each other such that a molar ratio of nickel (Ni) and cobalt (Co) was 96:4, thereby preparing a metal solution having a concentration of 2M. The prepared metal solution was continuously input to the reactor for 24 hours at 0.561 liter/hour. 16M concentration of ammonia solution (NH₄OH, JUNSEI) was continuously input to the reactor for 24 hours at 0.11L/hour. 4M concentration of sodium hydroxide solution (NaOH, Samchun Chemicals) was continuously input to the reactor for 24 hours at 0.60L/hour. While maintaining pH in the reactor in a range of 10 to 12, co-precipitation was performed to prepare Ni_{0.96}Co_{0.04}(OH)₂ composite metal hydroxide.

The prepared Ni_{0.96}Co_{0.04}(OH)₂ metal complex hydroxide was washed several times with distilled water, filtered, and dried in a vacuum dryer at 110°C for 12 hours to prepare the Ni_{0.96}Co_{0.04}(OH)₂ metal complex hydroxide in a powder form. After mixing the Ni_{0.96}Co_{0.04}(OH)₂ metal complex hydroxide prepared in the powder form and a lithium hydroxide (LiOH) with each other at a molar ratio of 1:1.01, the mixture was heated at a temperature increase rate of 2°C/min and was maintained at 450°C for 5 hours. In this way, preliminary calcination was performed. Subsequently, main calcination was carried out at 700°C for 10 hours to prepare positive electrode active material powders. This Preparation Example is shown in Table 6.

### Preparation Example 63 to Preparation Example 78

Each of positive electrode active material powders of Preparation Example 63 to Preparation Example 78 was prepared in the same manner as in Preparation Example 62 except that the Ni_{0.96}Co_{0.04}(OH)₂ composite metal oxide prepared in the powder form in Preparation Example 62, lithium hydroxide (LiOH), and the dopant compound were mixed with each other, wherein the dopant compound employed each of tantalum oxide (Ta₂O₅) (Preparation Example 63 to Preparation Example 66), niobium pentoxide (Nb₂O₅) (Preparation Example 67 to Preparation Example 70), molybdenum trioxide (MoO₃) (Preparation Example 71 to Preparation Example 74), and tungsten trioxide (WO₃) (Preparation Example 75 to Preparation Example 78) which was added at each content (0.05 mol%, 0.5 mol%, 1 mol% and 2 mol%) shown in the following Table 6. These Preparation Examples are shown in Table 6. The dopant compound was prepared in a powder form using a ball mill so that an average particle size thereof was 2 *µ*m or smaller.

**Table 6**

| Examples | Names | Molar ratio of composite metal oxide: dopant compound: lithium hydroxide | dopant | Dopant content (mol%) | Calcination temperature | Calcination duration |
|---|---|---|---|---|---|---|
| Preparation Example 62 | NC9604 | 1:0:1.01 | - | - | 700°C | 10 hours |
| Preparation Example 63 | NC9604-Ta0.05 | 0.9995:0.00025:1.01 | Ta | 0.05 | 700°C | 10 hours |
| Preparation Example 64 | NC9604-Ta0.5 | 0.995:0.0025:1.01 | Ta | 0.5 | 700°C | 10 hours |
| Preparation Example 65 | NC9604-Tal | 0.99:0.005:1.01 | Ta | 1 | 700°C | 10 hours |
| Preparation Example 66 | NC9604-Ta2 | 0.98:0.01:1.01 | Ta | 2 | 700°C | 10 hours |
| Preparation Example 67 | NC9604-Nb0.05 | 0.9995:0.00025:1.01 | Nb | 0.05 | 700°C | 10 hours |
| Preparation Example 68 | NC9604-Nb0.5 | 0.995:0.0025:1.01 | Nb | 0.5 | 700°C | 10 hours |
| Preparation Example 69 | NC9604-Nbl | 0.99:0.005:1.01 | Nb | 1 | 700°C | 10 hours |
| Preparation Example 70 | NC9604-Nb2 | 0.98:0.01:1.01 | Nb | 2 | 700°C | 10 hours |
| Preparation Example 71 | NC9604-Mo0 .05 | 0.9995:0.0005:1.01 | Mo | 0.05 | 700°C | 10 hours |
| Preparation Example 72 | NC9604-Mo0.5 | 0.995:0.005:1.01 | Mo | 0.5 | 700°C | 10 hours |
| Preparation Example 73 | NC9604-Mo1 | 0.99:0.01:1.01 | Mo | 1 | 700°C | 10 hours |
| Preparation Example 74 | NC9604-Mo2 | 0.98:0.02:1.01 | Mo | 2 | 700°C | 10 hours |
| Preparation Example 75 | NC9604-W0.05 | 0.9995:0.0005:1.01 | W | 0.05 | 700°C | 10 hours |
| Preparation Example 76 | NC9604-W0.5 | 0.995:0.005:1.01 | W | 0.5 | 700°C | 10 hours |
| Preparation Example 77 | NC9604-W1 | 0.99:0.01:1.01 | W | 1 | 700°C | 10 hours |
| Preparation Example 78 | NC9604-W2 | 0.98:0.02:1.01 | W | 2 | 700°C | 10 hours |

### Preparation Example 79

A positive electrode active material powder of Preparation Example 79 was prepared in the same manner as in Preparation Example 62 except that the Ni_{0.96}Co_{0.04}(OH)₂ composite metal oxide prepared in the powder form in Preparation Example 62, aluminum hydroxide (Al(OH)₃), and lithium hydroxide (LiOH) were mixed with each other at a molar ratio as shown in Table 7 below, and calcination of the mixture was carried out at 700°C. Preparation Example 79 is shown in Table 7.

### Preparation Example 80 to Preparation Example 95

Each of positive electrode active material powders of Preparation Example 80 to Preparation Example 95 was prepared in the same manner as in Preparation Example 62 except that the Ni_{0.96}Co_{0.04}(OH)₂ composite metal oxide prepared in the powder form in Preparation Example 62, aluminum hydroxide (Al(OH)₃), lithium hydroxide (LiOH), and the dopant compound were mixed with each other, wherein the dopant compound employed each of tantalum oxide (Ta₂O₅) (Preparation Example 80 to Preparation Example 83), niobium pentoxide (Nb₂O₅) (Preparation Example 84 to Preparation Example 87), molybdenum trioxide (MoO₃) (Preparation Example 88 to Preparation Example 91), and tungsten trioxide (WO₃) (Preparation Example 92 to Preparation Example 95) which was added at each content (0.05 mol%, 0.5 mol%, 1 mol% and 2 mol%) shown in the following Table 7. These Preparation Examples are shown in Table 7. The dopant compound was prepared in a powder form using a ball mill so that an average particle size thereof was 2 *µ*m or smaller.

**Table 7**

| Examples | Names | Molar ratio of composite metal oxide: aluminum hydroxide: dopant compound: lithium hydroxide | Dopant | Dopant content (mol%) | Calcination temperature | Calcination duration |
|---|---|---|---|---|---|---|
| Preparation Example 79 | NCA95 | 0.99:0.01:0:1.01 | - | - | 700°C | 10 hours |
| Preparation Example 80 | NCA95-Ta0.05 | 0.9895:0.01:0.00025:1.01 | Ta | 0.05 | 700°C | 10 hours |
| Preparation Example 81 | NCA95-Ta0.5 | 0.985:0.01:0.0025:1.01 | Ta | 0.5 | 700°C | 10 hours |
| Preparation Example 82 | NCA95-Tal | 0.98:0.01:0.005:1.01 | Ta | 1 | 700°C | 10 hours |
| Preparation Example 83 | NCA95-Ta2 | 0.97:0.01:0.01:1.01 | Ta | 2 | 700°C | 10 hours |
| Preparation Example 84 | NCA95-Nb0.05 | 0.9895:0.01:0.00025:1.01 | Nb | 0.05 | 700°C | 10 hours |
| Preparation Example 85 | NCA95-Nb0.5 | 0.985:0.01:0.0025:1.01 | Nb | 0.5 | 700°C | 10 hours |
| Preparation Example 86 | NCA95-Nb1 | 0.98:0.01:0.005:1.01 | Nb | 1 | 700°C | 10 hours |
| Preparation Example 87 | NCA95-Nb2 | 0.97:0.01:0.01:1.01 | Nb | 2 | 700°C | 10 hours |
| Preparation Example 88 | NCA95-Mo0.05 | 0.9895:0.01:0.0005:1.01 | Mo | 0.05 | 700°C | 10 hours |
| Preparation Example 89 | NCA95-Mo0.5 | 0.985:0.01:0.005:1.01 | Mo | 0.5 | 700°C | 10 hours |
| Preparation Example 90 | NCA95-Mo1 | 0.98:0.01:0.01:1.01 | Mo | 1 | 700°C | 10 hours |
| Preparation Example 91 | NCA95-Mo2 | 0.97:0.01:0.02:1.01 | Mo | 2 | 700°C | 10 hours |
| Preparation Example 92 | NCA95-W0.05 | 0.9895:0.01:0.0005:1.01 | W | 0.05 | 700°C | 10 hours |
| Preparation Example 93 | NCA95-W0.5 | 0.985:0.01:0.005:1.01 | W | 0.5 | 700°C | 10 hours |
| Preparation Example 94 | NCA95-W1 | 0.98:0.01:0.01:1.01 | W | 1 | 700°C | 10 hours |
| Preparation Example 95 | NCA95-W2 | 0.97:0.01:0.02:1.01 | W | 2 | 700°C | 10 hours |

### Preparation Example 96

10 liters of distilled water was put into a co-precipitation reactor (capacity 47L, and an output of a rotary motor 750W or greater), and then N₂ gas was supplied to the reactor at a flow rate of 6 liters/min. While a temperature of the reactor was maintained at 45°C, stirring was carried out at 350 rpm. Nickel sulfate aqueous solution (NiSO₄6H₂O, Samchun Chemicals), cobalt sulfate aqueous solution (CoSO₄7H₂O, Samchun Chemicals), and manganese sulfate aqueous solution (MnSO₄H₂O, Samchun Chemicals) were mixed with each other such that a molar ratio of nickel (Ni), cobalt (Co), and manganese (Mn) was 95:2.5:2.5, thereby preparing a metal solution having a concentration of 2M. The prepared metal solution was continuously input to the reactor for 24 hours at 0.561 liter/hour. 16M concentration of ammonia solution (NH₄OH, JUNSEI) was continuously input to the reactor for 24 hours at 0.08L/hour. 4M concentration of sodium hydroxide solution (NaOH, Samchun Chemicals) was continuously input to the reactor for 24 hours at 0.60L/hour. While maintaining pH in the reactor in a range of 10 to 12, co-precipitation was performed to prepare Ni_{0.95}Co_{0.025}Mn_{0.025}(OH)₂ composite metal hydroxide.

The prepared Ni_{0.95}Co_{0.025}Mn_{0.025}(OH)₂ metal complex hydroxide was washed several times with distilled water, filtered, and dried in a vacuum dryer at 110°C for 12 hours to prepare the Ni_{0.95}Co_{0.025}Mn_{0.025}(OH)₂ metal complex hydroxide in a powder form. After mixing the Ni_{0.95}Co_{0.025}Mn_{0.025}(OH)₂ metal complex hydroxide prepared in the powder form and a lithium hydroxide (LiOH) with each other at a molar ratio of 1:1.01, the mixture was heated at a temperature increase rate of 2°C/min and was maintained at 450°C for 5 hours. In this way, preliminary calcination was performed. Subsequently, main calcination was carried out at 730°C for 10 hours to prepare positive electrode active material powders. This Preparation Example is shown in Table 8.

### Preparation Example 97 to Preparation Example 112

Each of positive electrode active material powders of Preparation Example 97 to Preparation Example 112 was prepared in the same manner as in Preparation Example 96 except that the Ni_{0.95}Co_{0.025}Mn_{0.025}(OH)₂ composite metal oxide prepared in the powder form in Preparation Example 96, lithium hydroxide (LiOH), and the dopant compound were mixed with each other, wherein the dopant compound employed each of tantalum oxide (Ta₂O₅) (Preparation Example 97 to Preparation Example 100), niobium pentoxide (Nb₂O₅) (Preparation Example 101 to Preparation Example 104), molybdenum trioxide (MoO₃) (Preparation Example 105 to Preparation Example 108), and tungsten trioxide (WO₃) (Preparation Example 109 to Preparation Example 112) which was added at each content (0.05 mol%, 0.5 mol%, 1 mol% and 2 mol%) shown in the following Table 8. These Preparation Examples are shown in Table 8. The dopant compound was prepared in a powder form using a ball mill so that an average particle size thereof was 2 *µ*m or smaller.

**Table 8**

| Examples | Names | Molar ratio of composite metal oxide: dopant compound: lithium hydroxide | dopant | Dopant content (mol%) | Calcination temperature | Calcination duration |
|---|---|---|---|---|---|---|
| Preparation Example 96 | NCM95 | 1:0:1.01 | - | - | 730°C | 10 hours |
| Preparation Example 97 | NCM95-Ta0.05 | 0.9995:0.00025:1.01 | Ta | 0.05 | 730°C | 10 hours |
| Preparation Example 98 | NCM95-Ta0.5 | 0.995:0.0025:1.01 | Ta | 0.5 | 730°C | 10 hours |
| Preparation Example 99 | NCM95-Tal | 0.99:0.005:1.01 | Ta | 1 | 730°C | 10 hours |
| Preparation Example 100 | NCM95-Ta2 | 0.98:0.01:1.01 | Ta | 2 | 730°C | 10 hours |
| Preparation Example 101 | NCM95-Nb0.05 | 0.9995:0.00025:1.01 | Nb | 0.05 | 730°C | 10 hours |
| Preparation Example 102 | NCM95-Nb0.5 | 0.995:0.0025:1.01 | Nb | 0.5 | 730°C | 10 hours |
| Preparation Example 103 | NCM95-Nb1 | 0.99:0.005:1.01 | Nb | 1 | 730°C | 10 hours |
| Preparation Example 104 | NCM95-Nb2 | 0.98:0.01:1.01 | Nb | 2 | 730°C | 10 hours |
| Preparation Example 105 | NCM95-Mo0.05 | 0.9995:0.0005:1.01 | Mo | 0.05 | 730°C | 10 hours |
| Preparation Example 106 | NCM95-Mo0.5 | 0.995:0.005:1.01 | Mo | 0.5 | 730°C | 10 hours |
| Preparation Example 107 | NCM95-Mo1 | 0.99:0.01:1.01 | Mo | 1 | 730°C | 10 hours |
| Preparation Example 108 | NCM95-Mo2 | 0.98:0.02:1.01 | Mo | 2 | 730°C | 10 hours |
| Preparation Example 109 | NCM95-W0.05 | 0.9995:0.0005:1.01 | W | 0.05 | 730°C | 10 hours |
| Preparation Example 110 | NCM95-W0.5 | 0.995:0.005:1.01 | W | 0.5 | 730°C | 10 hours |
| Preparation Example 111 | NCM95-W1 | 0.99:0.01:1.01 | W | 1 | 730°C | 10 hours |
| Preparation Example 112 | NCM95-W2 | 0.98:0.02:1.01 | W | 2 | 730°C | 10 hours |

### Preparation Example 113

10 liters of distilled water was put into a co-precipitation reactor (capacity 47L, and an output of a rotary motor 750W or greater), and then N₂ gas was supplied to the reactor at a flow rate of 6 liters/min. While a temperature of the reactor was maintained at 45°C, stirring was carried out at 350 rpm. Nickel sulfate aqueous solution (NiSO₄6H₂O, Samchun Chemicals), cobalt sulfate aqueous solution (CoSO₄7H₂O, Samchun Chemicals), and manganese sulfate aqueous solution (MnSO₄H₂O, Samchun Chemicals) were mixed with each other such that a molar ratio of nickel (Ni), cobalt (Co), and manganese (Mn) was 90:5:5, thereby preparing a metal solution having a concentration of 2M. The prepared metal solution was continuously input to the reactor for 24 hours at 0.561 liter/hour. 16M concentration of ammonia solution (NH₄OH, JUNSEI) was continuously input to the reactor for 24 hours at 0.08L/hour. 4M concentration of sodium hydroxide solution (NaOH, Samchun Chemicals) was continuously input to the reactor for 24 hours at 0.60L/hour. While maintaining pH in the reactor in a range of 10 to 12, co-precipitation was performed to prepare Ni_{0.9}Co_{0.05}Mn_{0.005}(OH)₂ composite metal hydroxide.

The prepared Ni_{0.9}Co_{0.05}Mn_{0.0.05}(OH)₂ metal complex hydroxide was washed several times with distilled water, filtered, and dried in a vacuum dryer at 110°C for 12 hours to prepare the Ni_{0.9}Co_{0.05}Mn_{0.05}(OH)₂ metal complex hydroxide in a powder form. After mixing the Ni_{0.9}Co_{0.05}Mn₀.₀₅(OH)₂ metal complex hydroxide prepared in the powder form and a lithium hydroxide (LiOH) with each other at a molar ratio of 1:1.01, the mixture was heated at a temperature increase rate of 2°C/min and was maintained at 450°C for 5 hours. In this way, preliminary calcination was performed. Subsequently, main calcination was carried out at 750°C for 10 hours to prepare positive electrode active material powders. This Preparation Example is shown in Table 9.

### Preparation Example 114 to Preparation Example 129

Each of positive electrode active material powders of Preparation Example 114 to Preparation Example 129 was prepared in the same manner as in Preparation Example 113 except that the Ni_{0.9}Co_{0.05}Mn_{0.05}(OH)₂ composite metal oxide prepared in the powder form in Preparation Example 113, lithium hydroxide (LiOH), and the dopant compound were mixed with each other, wherein the dopant compound employed each of tantalum oxide (Ta₂O₅) (Preparation Example 114 to Preparation Example 117), niobium pentoxide (Nb₂O₅) (Preparation Example 118 to Preparation Example 121), molybdenum trioxide (MoO₃) (Preparation Example 122 to Preparation Example 125), and tungsten trioxide (WO₃) (Preparation Example 126 to Preparation Example 129) which was added at each content (0.05 mol%, 0.5 mol%, 1 mol% and 2 mol%) shown in the following Table 9. These Preparation Examples are shown in Table 9. The dopant compound was prepared in a powder form using a ball mill so that an average particle size thereof was 2 *µ*m or smaller.

**Table 9**

| Examples | Names | Molar ratio of composite metal oxide: dopant compound: lithium hydroxide | Dopant | Dopant content (mol%) | Calcination temperature |
|---|---|---|---|---|---|
| Preparation Example 113 | NCM 90 | 1:0:1.01 | - | - | 750°C |
| Preparation Example 114 | NCM90-Ta0.05 | 0.9995:0.00025:1.01 | Ta | 0.05 | 750°C |
| Preparation Example 115 | NCM90-Ta0.5 | 0.995:0.0025:1.01 | Ta | 0.5 | 750°C |
| Preparation Example 116 | NCM90-Tal | 0.99:0.005:1.01 | Ta | 1 | 750°C |
| Preparation Example 117 | NCM90-Ta2 | 0.98:0.01:1.01 | Ta | 2 | 750°C |
| Preparation Example 118 | NCM90-Nb0.05 | 0.9995:0.00025:1.01 | Nb | 0.05 | 750°C |
| Preparation Example 119 | NCM90-Nb0.5 | 0.995:0.0025:1.01 | Nb | 0.5 | 750°C |
| Preparation Example 120 | NCM90-Nb1 | 0.99:0.005:1.01 | Nb | 1 | 750°C |
| Preparation Example 121 | NCM90-Nb2 | 0.98:0.01:1.01 | Nb | 2 | 750°C |
| Preparation Example 122 | NCM90-Mo0.05 | 0.9995:0.0005:1.01 | Mo | 0.05 | 750°C |
| Preparation Example 123 | NCM90-Mo0.5 | 0.995:0.005:1.01 | Mo | 0.5 | 750°C |
| Preparation Example 124 | NCM90-Mo1 | 0.99:0.01:1.01 | Mo | 1 | 750°C |
| Preparation Example 125 | NCM90-Mo2 | 0.98:0.02:1.01 | Mo | 2 | 750°C |
| Preparation Example 126 | NCM90-W0.05 | 0.9995:0.0005:1.01 | W | 0.05 | 750°C |
| Preparation Example 127 | NCM90-W0.5 | 0.995:0.005:1.01 | W | 0.5 | 750°C |
| Preparation Example 128 | NCM90-W1 | 0.99:0.01:1.01 | W | 1 | 750°C |
| Preparation Example 129 | NCM90-W2 | 0.98:0.02:1.01 | W | 2 | 750°C |

### 2. Preparation of half-cell and full-cell using positive electrode active material according to Preparation Examples

A half-cell and a pouch-type full-cell were prepared via a following method using each of the positive electrode active materials according to Preparation Example 1 to Preparation Example 100.

To prepare the half-cell and the full-cell, 1 g of the positive electrode active material in the powder form prepared according to each of Preparation Example 1 to Preparation Example 100, poly(vinylidene fluoride), and carbon black were added to 0.4 g of N-methyl pyrrolidone at a weight ratio of 90:4.5:5.5. The mixture was uniformly stirred to prepare a positive electrode slurry. The prepared positive electrode slurry was coated on an aluminum foil, which in turn was subjected to roll pressing and vacuum drying. In this manner, a positive electrode was prepared.

When preparing the half-cell, the prepared positive electrode slurry was coated on the aluminum foil such that a loading level of the positive electrode active material was approximately 3.5 mg/cm² to prepare the positive electrode (when the aluminum foil having the positive electrode active material coated thereon was sampled into a square of 1 cm², a weight of only the positive electrode active material in the positive electrode was 5 mg). An electrolyte solution was prepared by uniformly dissolving vinylene carbonate (VC) 2wt%, and lithium salt 1.2 mol /L LiPF₆ as an additive into ethylene carbonate (EC) and ethyl methyl carbonate (EMC) (EC:EMC = 3:7 v/v) as a solvent. Liₒ was used as a negative electrode. Thus, a 2032-coin type half-cell (hereinafter, half-cell) was prepared.

When preparing the full-cell, the prepared positive electrode slurry was coated on the aluminum foil such that a loading level of the positive electrode active material was approximately 8.5 mg/cm² to prepare the positive electrode. Graphite slurry was coated on a copper foil so that a loading level thereof was 6.5 mg/cm², followed by roll pressing and vacuum drying to prepare a negative electrode. An electrolyte solution was prepared by uniformly dissolving vinylene carbonate (VC) 2wt%, and lithium salt 1.2 mol /L LiPF₆ as an additive into ethylene carbonate (EC) and ethyl methyl carbonate (EMC) (EC:EMC = 3:7 v/v) as a solvent. The positive electrode, a separator (Celgard, Model 2320), and the negative electrode were stacked into a pouch-type battery case, and the case was filled with the prepared electrolyte and was sealed to prepare a pouch-type full-cell.

### 3. Evaluation of Present Examples, Comparative Examples and Preparation Examples

### (1) Identification of capacity and cycle characteristics using half-cell

The prepared half-cell was subjected to a charge/discharge cycle in which the half-cell was charged to 4.3V and discharged to 2.7V under a constant current of 0.5C (1C being 180 mA/g) at 30°C. The prepared half-cell was subjected to 100 cycles. Then, retention was identified (hereinafter, 2.7 V-4.3V).

### (2) Identification of capacity and cycle characteristics using full-cell

The prepared full-cell was subjected to a charge/discharge cycle in which the cell was discharged to 3.0V voltage and was charged to 4.2V under a 1C constant current at 25°C to identify capacity and retention.

### (3) Identification of microstructure of composite metal oxide (precursor) and positive electrode active material using SEM

The microstructure of each of the positive electrode active material according to each of Preparation Examples and the composite metal oxide (precursor) before the preliminary calcination of the positive electrode active material was identified using SEM (Nova Nano SEM 450, FEI).

In a following description, the micro-structure, surface characteristic, and electrochemical characteristic of the positive electrode active material according to each of Preparation Example 1 to Preparation Example 102 were identified.

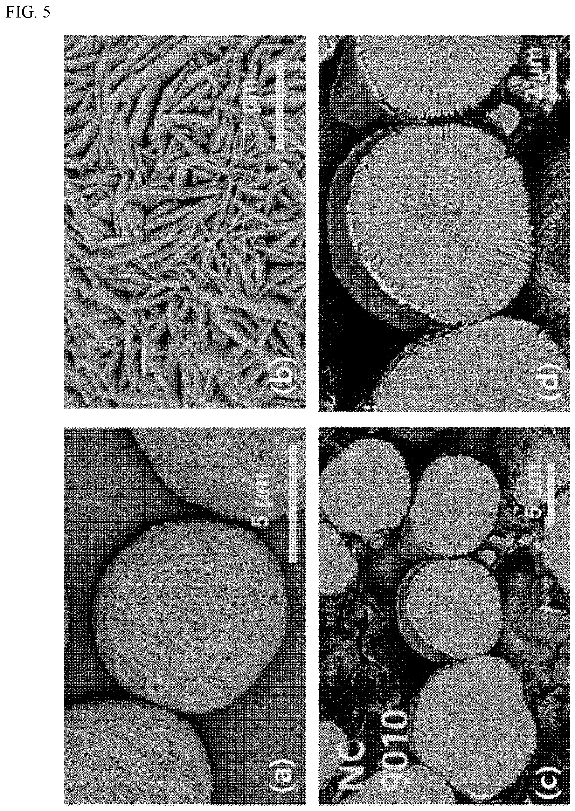

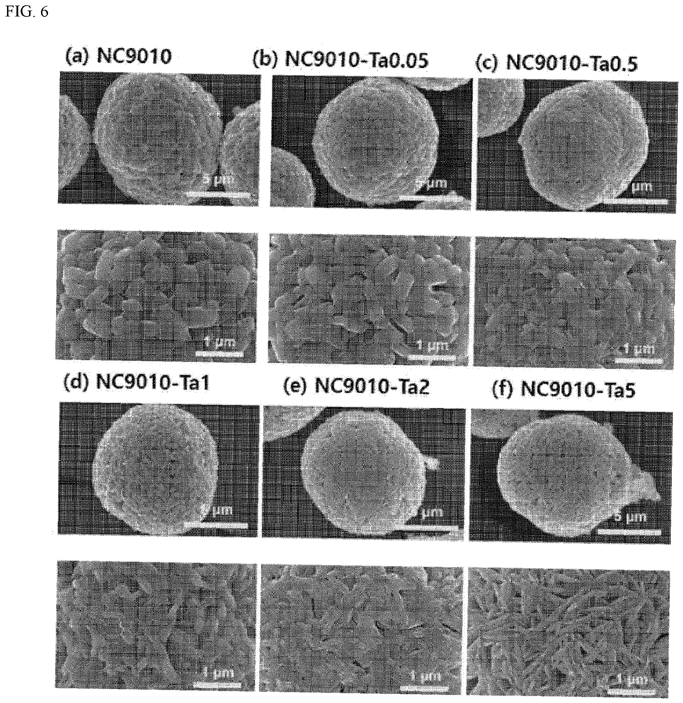

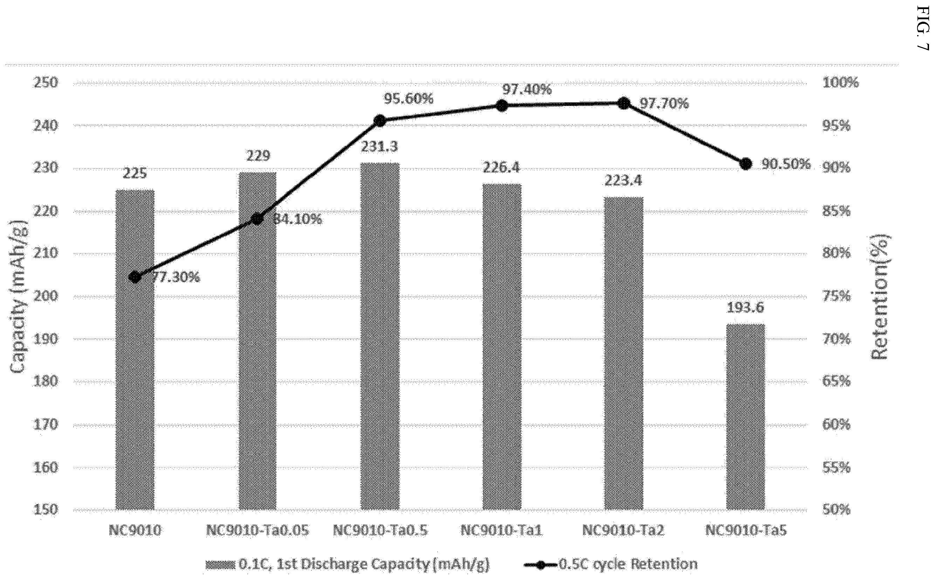

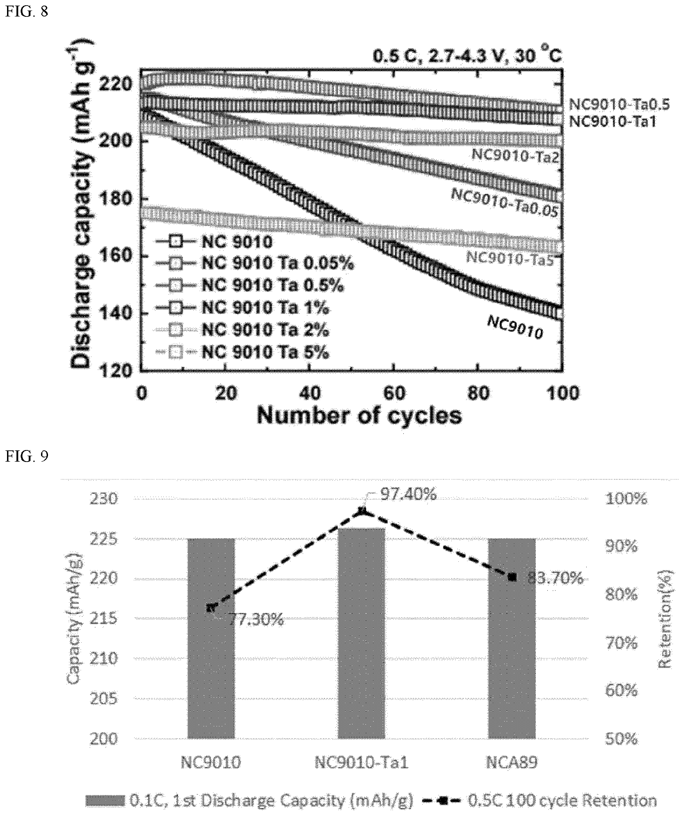

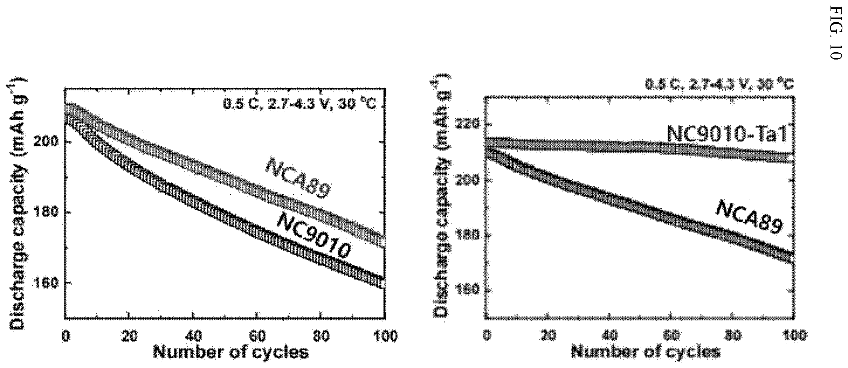

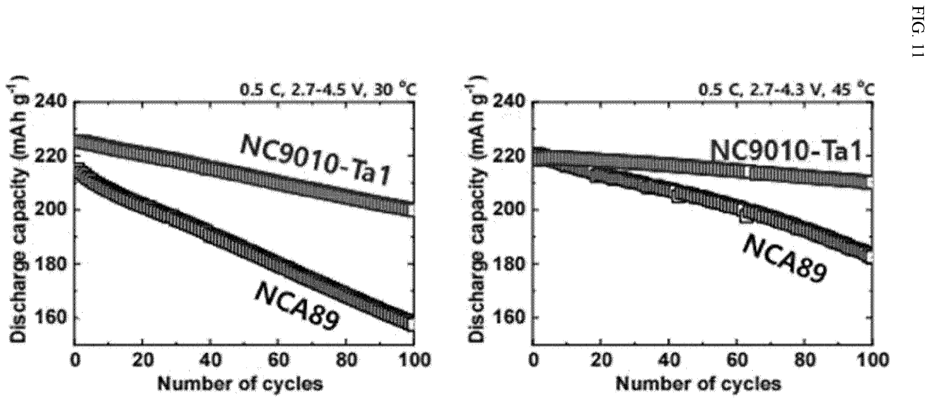

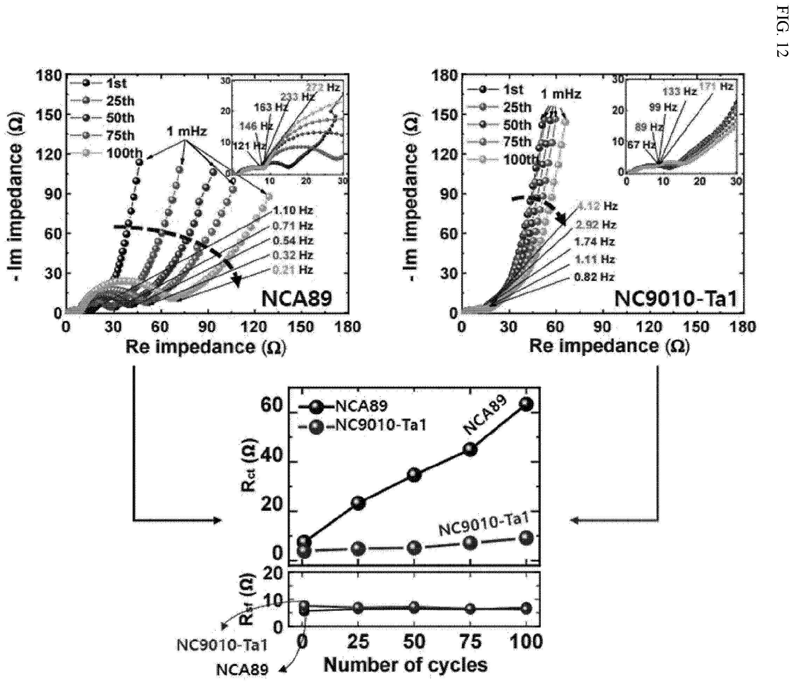

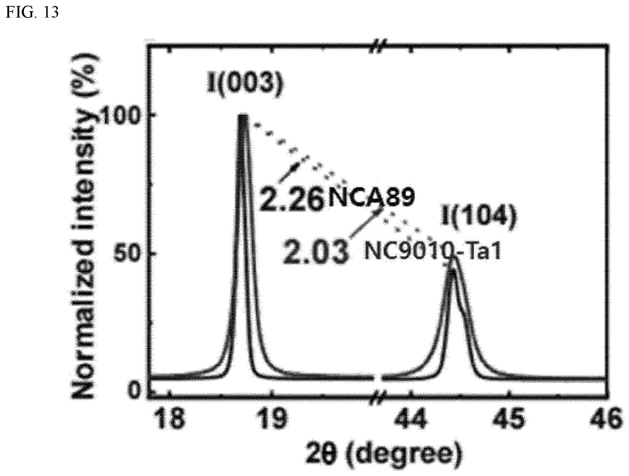

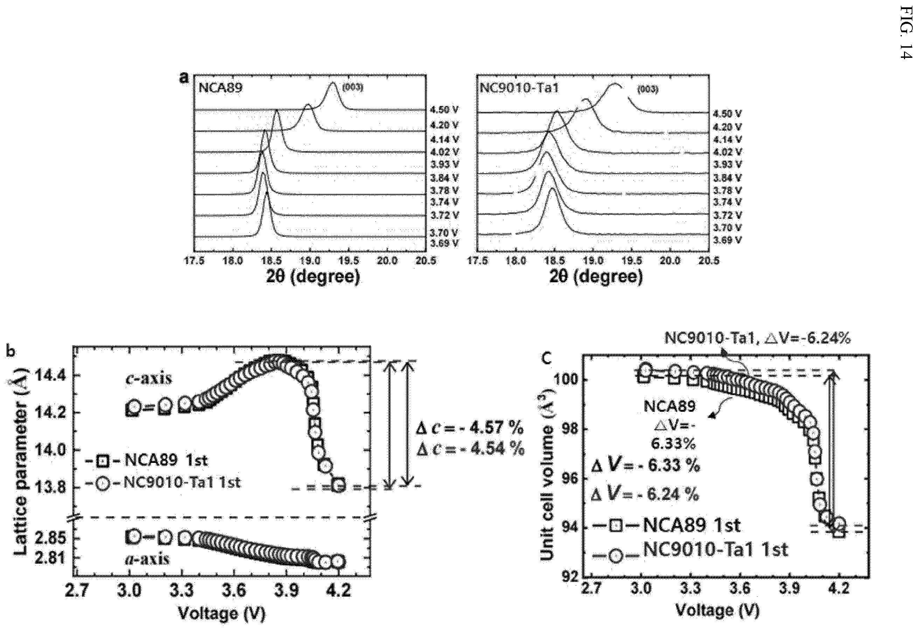

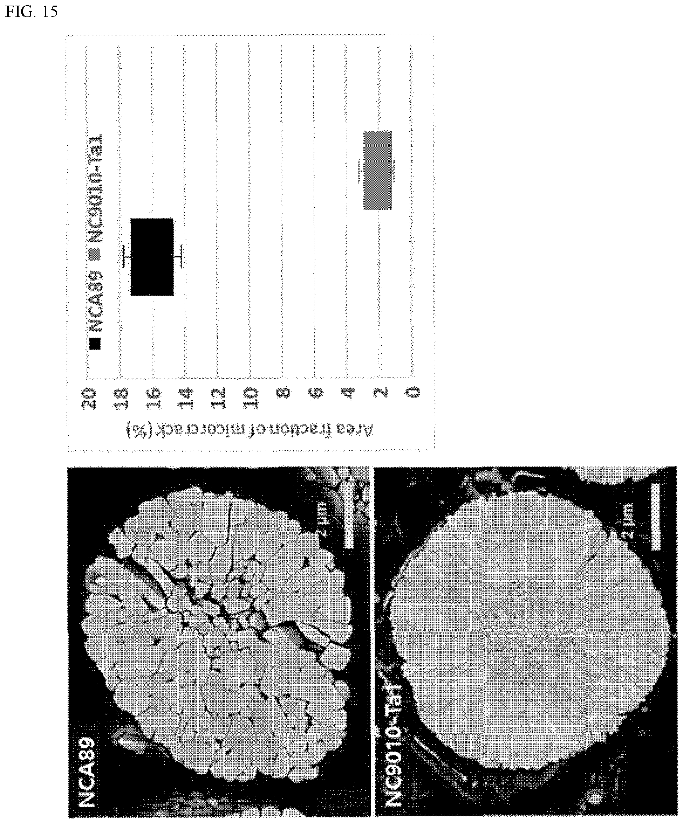

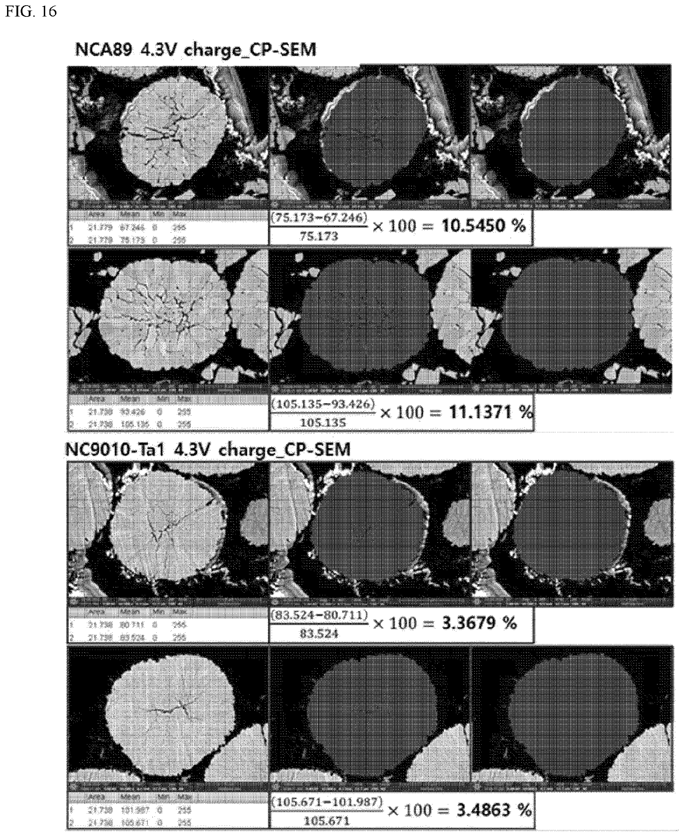

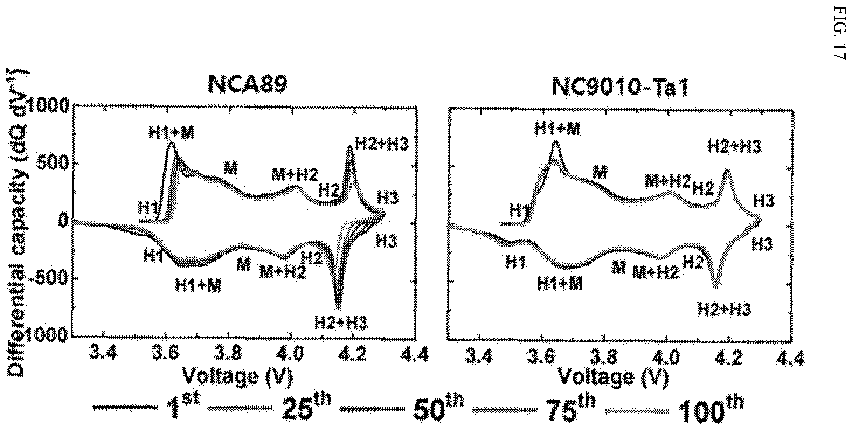

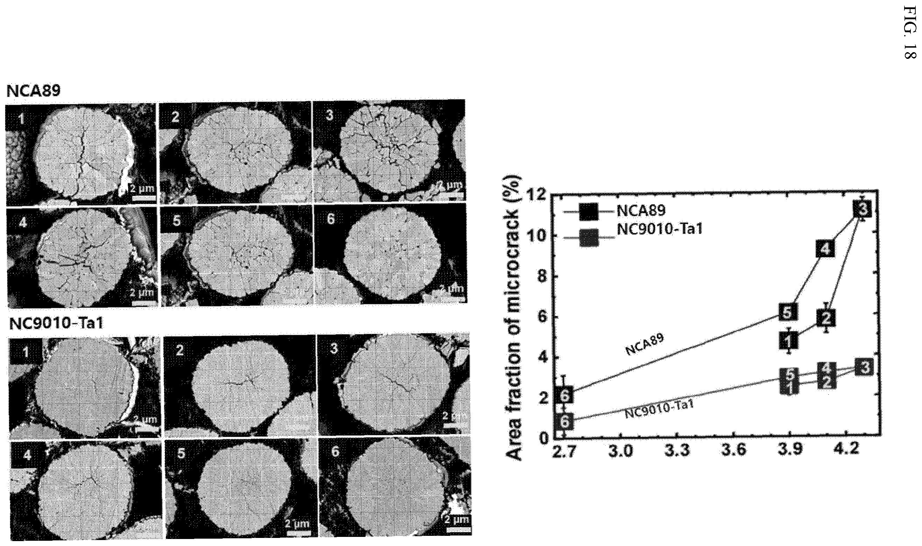

Table 10 shows the capacity of each of Preparation Example 1 to Preparation Example 7 using the half-cell and the retention thereof after the cycle. FIG. 5 is SEM images (a) and (b) of particles and cross-sectional SEM images (c) and (d) of particles of Ni_{0.9}Co_{0.1}(OH)₂ composite metal hydroxide powder for Preparation Example 1 to Preparation Example 6. FIG. 6 is a SEM image of a positive electrode active material based on a tantalum (Ta) concentration. FIG. 7 is a graph showing a capacity and a retention after 100 cycles of a positive electrode active material based on a tantalum (Ta) concentration. FIG. 8 is a graph showing a cycle of a positive electrode active material based on a tantalum (Ta) concentration. FIG. 9 is a graph showing a capacity and a retention after cycle of each of Preparation Example 1 (NC9010), Preparation Example 4 (NC9010-Ta1), and Preparation Example 7 (NCA89). FIG. 10 is a graph showing a cycle of each of Preparation Example 1 (NC9010), Preparation Example 4 (NC9010-Ta1), and Preparation Example 7 (NCA89) at 30°C temperature. FIG. 11 is a graph showing a cycle of each of Preparation Example 4 (NC9010-Ta1)and Preparation Example 7 (NCA89) at 30°C and 45°C. FIG. 12 is a graph showing a resistance change for a cycle of each of Preparation Example 4 (NC9010-Ta1)and Preparation Example 7 (NCA89). FIG. 13 and FIG. 14 are graphs showing XRDs of Preparation Example 4 (NC9010-Ta1)and Preparation Example 7 (NCA89), respectively. FIG. 15 is a cross-sectional SEM image and a graph showing an area of a micro crack at 2.7V after 100 cycles of each of Preparation Example 4 (NC9010-Ta1)and Preparation Example 7 (NCA89). FIG. 16 is a diagram schematically showing a method for measuring micro cracks. FIG. 17 is a graph showing a dQ/dV curve of each of Preparation Example 4 (NC9010-Ta1)and Preparation Example 7 (NCA89). FIG. 18 is a graph showing a cross-sectional SEM image based on a SOC (State of Charge) and a microcrack area based on a SOC of each of Preparation Example 4 (NC9010-Ta1)and Preparation Example 7 (NCA89).

**Table 10**

| Examples | Names | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|
| Preparation Example 1 | NC9010 | 225 | 94.5% | 209.1 | 92.93% | 100 | 77.30% |
| Preparation Example 2 | NC9010-Ta0.05 | 229 | 95.8% | 215.1 | 93.93% | 100 | 84.10% |
| Preparation Example 3 | NC9010-Ta0.5 | 231.3 | 96.9% | 220.2 | 95.20% | 100 | 95.60% |
| Preparation Example 4 | NC9010-Ta1 | 226.4 | 96.8% | 213.4 | 94.26% | 100 | 97.40% |
| Preparation Example 5 | NC9010-Ta2 | 223.4 | 95.8% | 205 | 91.76% | 100 | 97.70% |
| Preparation Example 6 | NC9010-Ta5 | 193.6 | 96.1% | 186.6 | 96.38% | 100 | 90.50% |
| Preparation Example 7 | NCA89 | 225.1 | 95.1% | 210.6 | 93.56% | 100 | 83.70% |

In FIG. 6, (a) relates to Preparation Example 1, and shows a SEM image and an enlarged view of the positive electrode active material prepared by calcining the mixture of the composite metal oxide of FIG. 5 and the lithium hydroxide. (b) to (d) respectively relate to Preparation Example 2 to Preparation Example 6, and a SEM image and an enlarged view of the positive electrode active material in which the tantalum oxide (Ta₂O₅) was added, at a content of 0.05 mol% (b), 0.5 mol% (c), 1 mol% (d), 2 mol% (e), and 5 mol% (f), to the composite metal oxide.

Referring to FIG. 5 and FIG. 6 together with Table 10, it may be identified that when calcination of the composite metal oxide having the same particle shape as in FIG. 5 was performed at the same temperature of 730°C, a size of primary particles constituting the secondary particle and a shape of the agglomerate thereof varied depending on the tantalum (Ta) content as added as a dopant. Specifically, referring to FIG. 6, it could be identified that as the content of the dopant tantalum (Ta) increased, the primary particles constituting the shell portion of the secondary particle had a smaller width.

On the contrary, referring to FIG. 7 to FIG. 9, it could be identified that the primary capacities of 0.1C at (a) 0mol%, (b) 0.05mol%, (c) 0.5mol%, (d) 1mol%, and (e) 2mol% depending on the tantalum (Ta) content were similar to each other, while that at (f) 5 mol% decreased. Further, it was identified that the 0.5C cycle retention after 100 cycles using the half-cell increased as the content of tantalum increased. However, it could be identified that when the tantalum content was 5 mol%, the retention was slightly decreased. That is, when the tantalum content was 5 mol%, the content of the transition metal was decreased accordingly, such that the primary capacity of 0.1C was decreased.

That is, we examined the shape of the secondary particle and the primary particles based on the SEM image and the capacity and retention of the battery including the same. It could be identified that as the content of the tantalum (Ta) increased, the primary particles constituting the shell portion of the secondary particle had a smaller width. Accordingly, it could be identified that the electrochemical characteristics such as capacity and retention after the cycle did not have the same tendency as that of the shape. It could be identified that in the present embodiment, the content of the tantalum (Ta) in a range of 0.5 mol% to 2 mol% exhibited excellent characteristics in capacity and retention after the cycles.

Referring to FIG. 8, it could be identified that the lifespan characteristic of the battery including NC9010 was lowered, while the battery including NC9010-Ta5 had a good lifespan characteristic, but lower capacity. Further, it could be identified that the battery including NC9010-Ta0.05 was increased compared to the battery including NC9010 in terms of the lifespan characteristic but was decreased compared to other Preparation Examples. That is, the lifespan characteristic is improved via the addition of tantalum (Ta). However, improvement of the lifespan characteristic is insignificant when the content thereof is very low. It could be identified that when the content thereof is very high, the capacity of the battery would be lowered.

Referring to FIG. 9, the primary capacities of 0.1C based on NC9010 and NCA89 had approximately similar value, while the primary capacity of 0.1C based on NC9010-Ta1 was relatively higher than those based on NC9010 and NCA89. It was identified that the retentions after 100 cycles based on NC9010-Ta1, NC9010, NCA89, and NC9010 increased in this order.

That is, the retention based on NCA89 where 1 mol% of aluminum (Al) was added to nickel (Ni) and cobalt (Co) was relatively similar to the retention based on NC9010 where only nickel (Ni) and cobalt (Co) were present. On the contrary, NC9010-Ta1 and NCA89 were compared with each other. That is, NC9010-Ta1 where 1 ml of tantalum (Ta) was added at the content of 1mol% exhibited better retention than NCA89 where aluminum (Al) was added at the content of 1mol% exhibited. That is, it was identified that when the content of nickel (Ni) was constant, NC9010-Ta1 having tantalum (Ta) exhibited the better lifespan characteristic, compared to NC9010 without aluminum (Al) and NCA89 with aluminum (Al) added thereto.

Referring to FIG. 10, it could be identified that in the process of 100 cycles at 30°C, cells based on Preparation Example 1 (NC9010), and Preparation Example 7 (NCA89) continued to decrease in lifespan, whereas the capacity of the cell based on Preparation Example 4 (NC9010-Ta1) in which 1mlo% of tantalum (Ta) was added was stably maintained. Further, referring to Table 11 and FIG. 11, it could be identified that Preparation Example 4 (NC9010-Ta1) was superior to Preparation Example 7 (NCA89) in terms of the cycle characteristics both under a case (high voltage) where the cycle was performed at 30°C at 4.5V and under a case (high temperature) where the cycle was performed at 45°C at 4.3V.

**Table 11**

| Examples | Names | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|
| Preparation Example 7 | NCA89 | 225.3 | 94.30% | 209.9 | 93.20% | 100 | 81.70% |
| Preparation Example 4 | NC9010-Ta1 (4.5 V) | 226.4 | 96.80% | 213.4 | 95.00% | 100 | 97.40% |
| Preparation Example 4 | NC9010-Ta1 (45 °C) | 227.2 | 98.08% | 218.6 | 96.24% | 100 | 96.19% |

FIG. 12 shows the results of Rct resistance values per 1 cycle, 25 cycles, 50 cycles, 75 cycles, and 100 cycles sequentially for each of NC9010-Ta1 and NCA89 in wich each cycle is performed at 30°C at 4.3V.The Rct resistance value of NCA89 increased significantly as the cycle progressed, whereas the Rct resistance value of NC9010-Ta1 was maintained at a substantially unchanged level during 100 cycles.

The positive electrode active material may undergo a continuous phase change: H1 (hexagonal 1) -> M (monoclinic) -> H2 (hexagonal 2) -> H3 (hexagonal 3) during the charging process. During the last H2 -> H3 change, a sudden anisotropic volume change occurs. In this connection, the volume change proceeds gently up to 4.15 V as the voltage before the H2 -> H3 phase transition starts, and then the cell volume rapidly decreases at 4.2 V where the H2 -> H3 phase transition starts.

At approximately 4.1 V after charging to 4.3 V at which the rapid volume change begins, micro cracks occurred in the micro-structure of secondary particles of NCA89, whereas micro cracks did not occur in NC9010-Ta1. That is, it is considered that in NC9010-Ta1, the primary particles are oriented and aligned in the secondary particle so that micro cracks in the micro-structure due to the anisotropic volume change did not occur.

Referring to FIG. 13 and FIG. 14, Preparation Examples after calcination at a temperature below 730°C were subjected to X-ray diffraction analysis using the device with 45kV and 40mA output and using a Cu Ka beam source at a scan rate of 1 degree per minute and at a step size spacing of 0.0131. It could be identified that in Preparation Example 4, the ratio of the intensity of the 003 peak to the intensity of the 104 peak was 2.03, while in Preparation Example 7, the ratio was 2.26.

FIG. 14 shows the in situ XRD pattern. (a) refers to the result of identification thereof at a value selected from a 2θ range of (003) reflection when the battery is charged up to 4.3V. (b) refers to a graph showing the change in the a-axis and c-axis lattice parameter depending on a cell voltage, based on the value identified in (a). (c) refers to a value of the volume change obtained based on the graph.

Referring to FIG. 14, %, it could be identified that in Preparation Example 7 (NCA89), an overall volume change during the charge/discharge process was 6.33%, while in Preparation Example 4 (NC9010-Ta1), an overall volume change during the charge/discharge process was 6.24%. However, it could be identified that the volume change based on each of the charge SOC and the discharge SOC was greater in Preparation Example 7 (NCA89) than in Preparation Example 4 (NC9010-Ta1).

FIG. 15 is an SEM image showing the cross-section of each of positive electrode active material particles of Preparation Example 4 (NC9010-Ta1) and Preparation Example 7 (NCA89) after 100 cycles, and a graph showing an area of microcracks occurring in each of positive electrode active material particles of Preparation Example 4 (NC9010-Ta1) and Preparation Example 7 (NCA89) after 100 cycles. FIG. 16 schematically shows a method for measuring microcracks.

In FIG. 16, at least 5 micro cracks were detected in the secondary particle based on the measuring results of the SEM image of the cross section of the secondary particle several times, and then were calculated according to the method described in FIG. 16 and then an average value thereof was indicated. The value is defined as a ratio of an area where the micro-crack occurs to a total area of the cross-section of the secondary particle. Specifically, 5 particles of each of the positive electrode active materials according to Preparation Examples were individually selected, and the ratio of the area of the micro crack (including the crack path) to the total area of the cross-section of each of the secondary particles was measured. ImageJ program was used to calculate the area. The median, minimum, and maximum values were identified along a first quartile to a third quartile via a box and whisker plot for more accurate interpretation of each average value.

That is, the overall volume changes of Preparation Example 4 (NC9010-Ta1) and Preparation Example 7 (NCA89) during one cycle is similar to each other (see FIG. 14). However, based on each of the charge SOC and the discharge SOC, the change of Preparation Example 7 (NCA89) is relatively larger than that of Preparation Example 4 (NC9010-Ta1). Thus, micro cracks occur in Preparation Example 7 (NCA89). As such, the micro cracks occurring during the charging and discharging cycle are accumulated to cause the deterioration of the lifespan characteristic (See FIG. 15).

Table 12 below represents the area fraction % of microcracks occurring in Preparation Example 7 (NCA89) and Preparation Example 4 (NC9010-Ta1) while performing one cycle from charge to discharge in an order of 3.9V->4.1V->4.3V->4.1V->3.9V->2.7V FIG. 18 shows a longitudinal cross-sectional SEM image of each of Preparation Example 7 (NCA89) and Preparation Example 4 (NC9010-Ta1) in an order of 3.9V charge (1) -> 4.1V charge (2) - > 4.3V charge (3) -> 4.1V discharge (4) -> 3.9V discharge (5) -> 2.7V discharge (6).

**Table 12**

| | Names | 3.9 V (1) | 4.1 V (2) | 4.3 V (3) | 4.1 V (4) | 3.9 V (5) | 2.7 V (6) |
|---|---|---|---|---|---|---|---|
| Preparation Example 7 | NCA89 | 4.708 | 5.7994 | 11.1371 | 9.1957 | 6.1122 | 2.1682 |
| Preparation Example 4 | NC9010-Ta1 | 2.499 | 2.7296 | 3.3679 | 3.31862 | 2.9163 | 0.8383 |

Referring to Table 12 and FIG. 18, it was identified that both of Preparation Example 4 (NC9010-Ta1) and Preparation Example 7 (NCA89) exhibited an increase in volume and slight micro cracks. On the contrary, as charging and discharging proceed, for example, after 100 cycles, in Preparation Example 7 (NCA89), micro cracks starts from the core portion of the particles and extend to the surface of the particles, resulting in the formation of the crack path. In Preparation Example 4 (NC9010-Ta1), microcracks occur during the process from the charging to the discharging, but the crack path along which the crack extends from the core portion of the particle to the surface does not occur (see FIG. 15). That is, in both of Preparation Example 4 (NC9010-Ta1) and Preparation Example 7 (NCA89), there is a slight change in the micro-structure due to the volume change of the primary particle during the charging/discharging process. However, the change in Preparation Example 7 (NCA89) is relatively larger compared to Preparation Example 4 (NC9010-Ta1) 7. Further, Preparation Example 7 (NCA89) has larger irreversibility, so that the crack path occurs in Preparation Example 7 (NCA89) after 100 cycles.

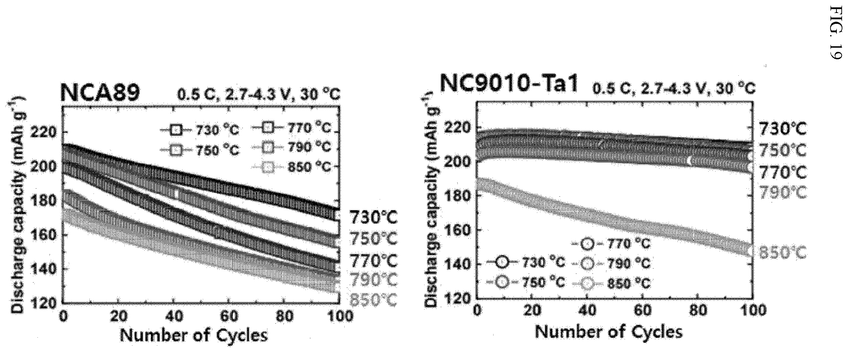

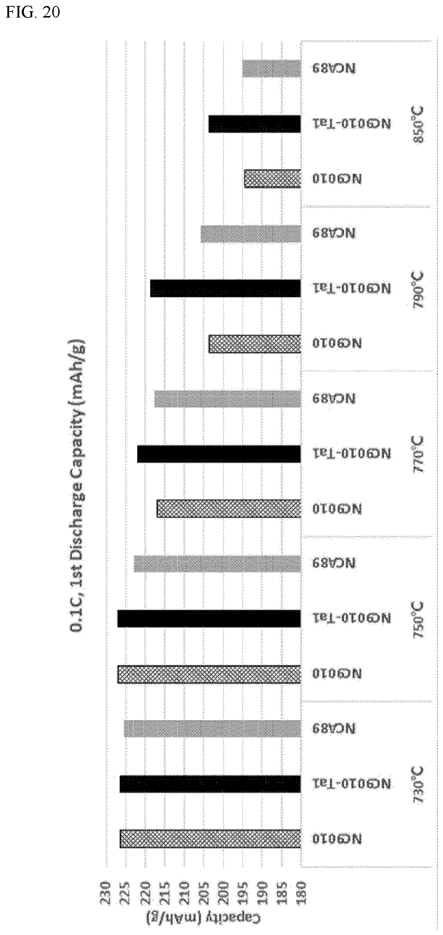

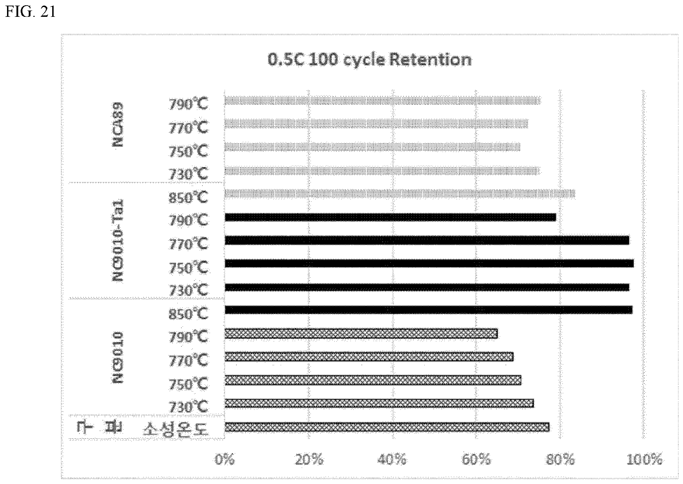

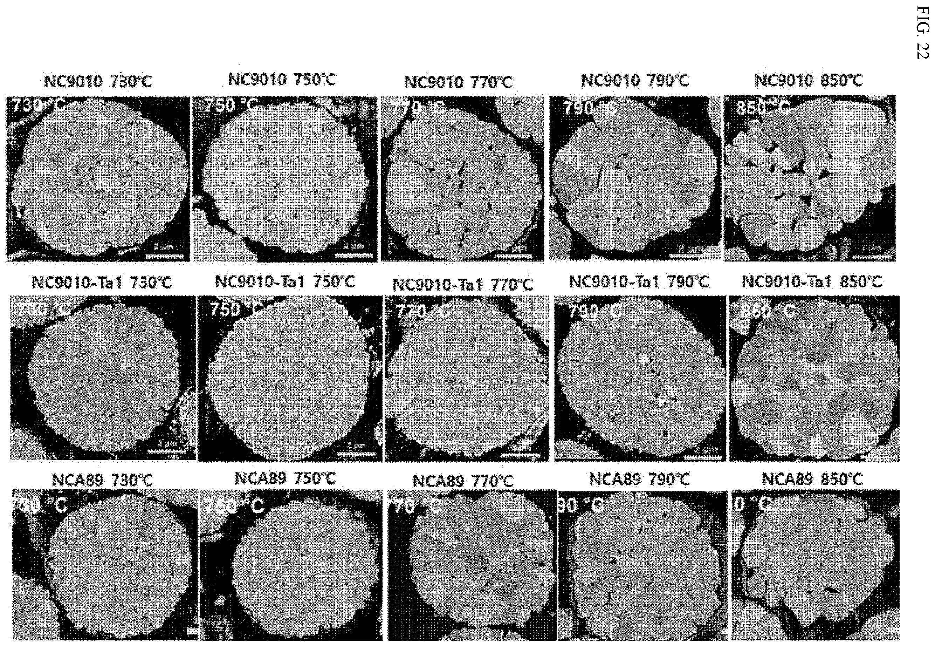

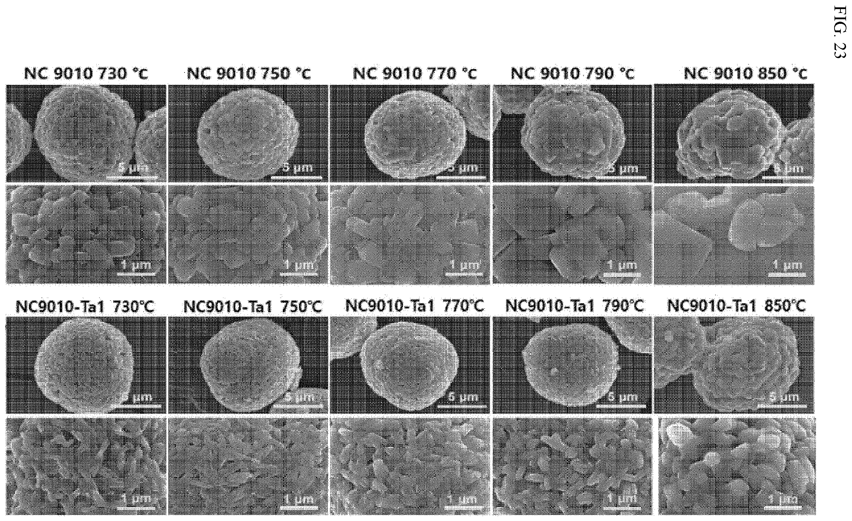

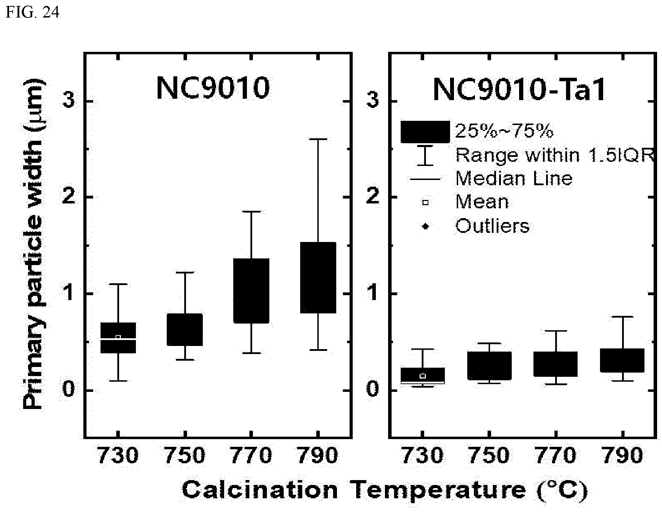

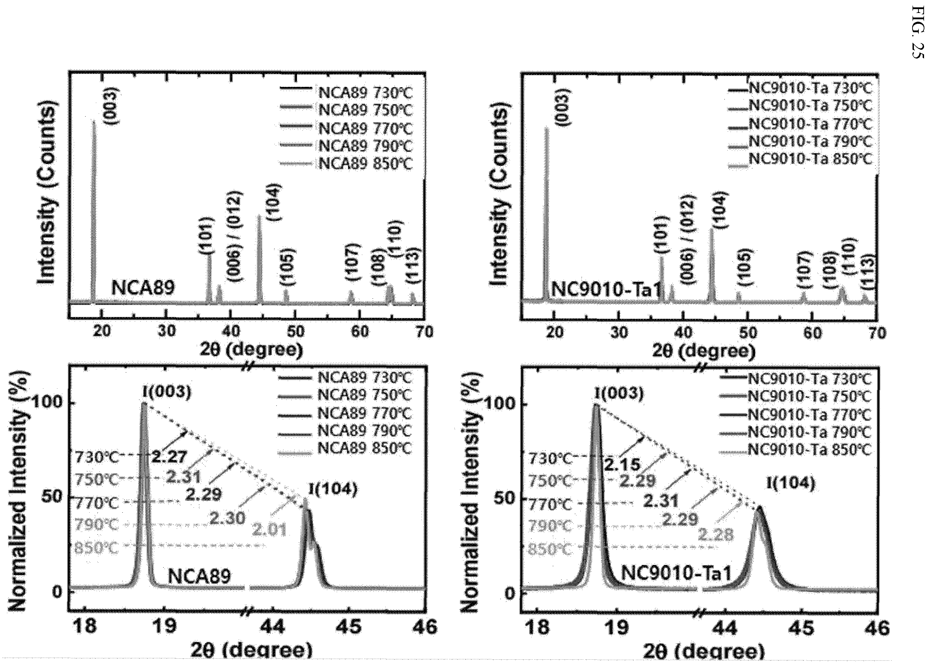

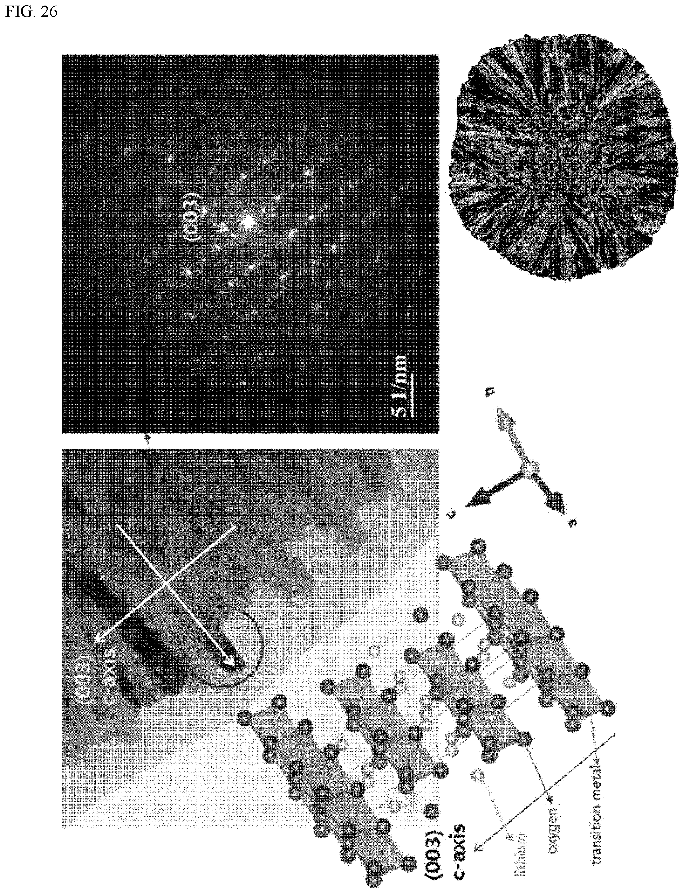

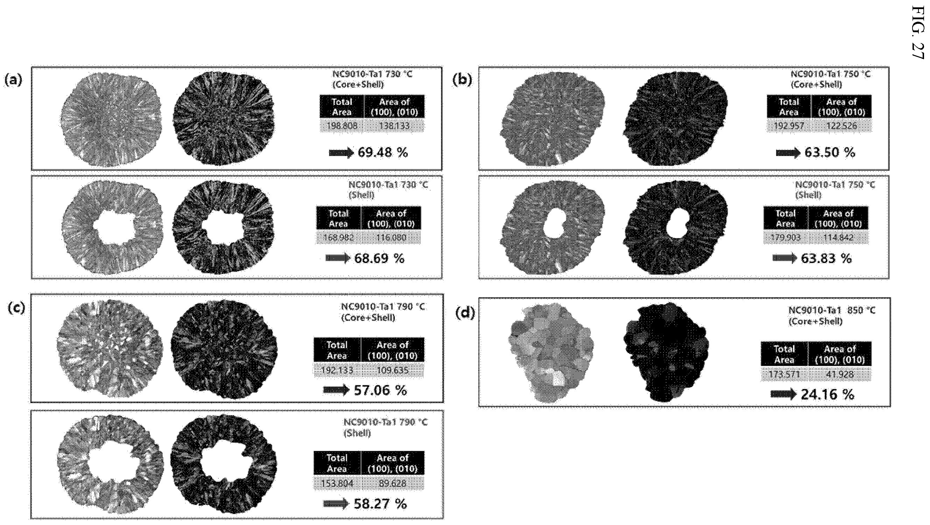

Table 13 shows capacity and retention after 100 cycles for NC9010 (Preparation Example 1, Preparation Examples 8 to 11), NC9010-Ta1 (Preparation Example 4, Preparation Example 12 to Preparation Example 15), and NCA89 (Preparation Example 7, Preparation Example 16 to Preparation Example 19) using half-cells, based on the calcination temperature. FIG. 19 is a graph showing a calcination temperature-based cycle of each positive electrode active material. FIG. 20 is a graph showing a calcination temperature-based capacity of each positive electrode active material. FIG. 21 is a graph showing a 100-cycles retention of each positive electrode active material based on a calcination temperature. FIG. 22 is a cross-sectional SEM image of particles of each positive electrode active material based on a calcination temperature. FIG. 23 is an SEM image showing a particle shape of each of NC9010 and NC9010-Ta1 based on a calcination temperature. FIG. 24 is a graph showing a particle size of each of NC9010 and NC9010-Ta1 based on a calcination temperature. FIG. 25 is an XRD graph of each of NC9010 and NC9010-Ta1 based on a calcination temperature. FIG. 26 and FIG. 27 are diagrams showing an orientation of primary particles of NC9010-Ta1 based on a calcination temperature.

**Table 13**

| Examples | Names | Calcinat ion tempera ture | 0.1C, 1st Discharge Capacity (mAh/g) | 1st Efficiency | 0.5C, Discharge Capacity (mAh/g) | 0.5C/0.1C | Cycle | 0.5C 100 cycle Retention |
|---|---|---|---|---|---|---|---|---|
| Preparation Example 1 | NC9010 | 730°C | 226.4 | 94.1% | 206.5 | 91.2% | 100 | 77.3% |
| Preparation Example 8 | NC9010 | 750°C | 226.8 | 94.9% | 202.5 | 89.3% | 100 | 73.5% |
| Preparation Example 9 | NC9010 | 770°C | 216.8 | 92.4% | 191.9 | 88.5% | 100 | 70.8% |
| Preparation Example 10 | NC9010 | 790°C | 203.6 | 88.5% | 181.4 | 89.1% | 100 | 68.7% |
| Preparation Example 11 | NC9010 | 850°C | 194.4 | 83.1% | 164.1 | 84.4% | 100 | 65.1% |
| Preparation Example 4 | NC9010-Ta1 | 730°C | 226.4 | 96.80% | 213.4 | 95.00% | 100 | 97.40% |
| Preparation Example 12 | NC9010-Ta1 | 750°C | 226.9 | 96.40% | 213.6 | 94.10% | 100 | 96.40% |
| Preparation Example 13 | NC9010-Ta1 | 770°C | 222 | 93.30% | 207.8 | 93.60% | 100 | 97.70% |
| Preparation Example 14 | NC9010-Ta1 | 790°C | 218.7 | 94.60% | 203.8 | 93.20% | 100 | 96.50% |
| Preparation Example 15 | NC9010-Ta1 | 850°C | 203.7 | 89.10% | 187 | 91.80% | 100 | 79.00% |
| Preparation Example 7 | NCA89 | 730°C | 225.3 | 94.30% | 209.9 | 93.20% | 100 | 83.70% |
| Preparation Example 16 | NCA89 | 750°C | 222.8 | 94.40% | 207.3 | 93.10% | 100 | 75.10% |
| Preparation Example 17 | NCA89 | 770°C | 217.5 | 91.60% | 199.5 | 91.70% | 100 | 70.66% |
| Preparation Example 18 | NCA89 | 790°C | 205.6 | 89.30% | 183.2 | 89.10% | 100 | 72.53% |
| Preparation Example 19 | NCA89 | 850°C | 195.1 | 85.00% | 172 | 88.10% | 100 | 75.23% |

Referring to Table 13 and FIG. 19 to FIG. 21, it could be identified that even when NC9010-Ta1 was calcined at a temperature of 730°C to 790°C, the capacity of the cell including NC9010-Ta1 was maintained similarly and retention was also maintained high. On the contrary, when each of NC9010 and NCA89 to which tantalum (Ta) was not added was calcined at a temperature of 730°C to 790°C, the capacity of the cell including the same decreased at the calcination temperature of 770°C or higher. NC9010-Ta1 exhibited excellent retention even after 100 cycles regardless of the calcination temperature, while both NC9010 and NCA89 exhibited a retention value smaller than 80% after 100 cycles, which was lower than that of NC9010-Ta1.

Referring to FIG. 22 to FIG. 24, each of NC9010, NC9010-Ta1, and NCA89 are composed of secondary particles, wherein each secondary particle is formed as an agglomerate of a plurality of primary particles. As the calcination temperature increases, the primary particles may be agglomerated with each other to form an agglomerate of the primary particles. It could be identified that NC9010-Ta1 exhibited relatively little change in the volume of the primary particle than each of NC9010 and NCA89 exhibited, and thus, the primary particle shape was maintained almost unchanged in NC9010-Ta1 even at approximately 790°C. On the contrary, it was identified that NC9010 and NCA89 exhibited the volume expansion at approximately 730°C and exhibited similar tendencies.

Referring to FIG. 23, it could be identified that in NC9010-Ta1, the volume of the primary particle increased as the temperature increased, but the overall shape of the secondary particle was maintained as the temperature increased, whereas in NC9010, the volume of the primary particles increased significantly at a temperature of 730°C or higher, and accordingly the sphericity of the secondary particle decreased.

That is, it could be identified that the shapes of primary and secondary particles were controlled by doping the tantalum (Ta), and that the controlled shapes had an effect on capacity and retention after the cycles. Further, it could be identified that the doping of the tantalum (Ta) allowed the shapes of primary and secondary particles in NC9010-Ta1 to be maintained relatively unchanged even after the calcination at high temperature, compared to NC9010 and NCA89. Accordingly, the unchanged shape may have the effect on the characteristics of capacity and retention.

Table 14 below shows a temperature-based value of (003)/(104) ratio of each of NC9010-Ta1 and NCA89 using XRD

**Table 14**

| Examples | Names Temperature | (003)/(104) ratio | | | | |
|---|---|---|---|---|---|---|
| | | 730 °C | 750 °C | 770 °C | 790 °C | 850 °C |
| Preparation Example 7 | NCA89 | 2.27 | 2.31 | 2.29 | 2.3 | 2.01 |
| Preparation Example 4 | NC9010-Ta1 | 2.15 | 2.29 | 2.31 | 2.29 | 2.28 |

FIG. 25 is an XRD graph based on calcination temperature. It was identified that the ratio of intensity of the peak 003 to the intensity of the peak 104 decreased as the calcination temperature increased. On the contrary, it was identified that the ratio of the intensity of the peak 003 to the intensity of the peak 104 decreased significantly in NC89, compared to that in NC9010-Ta1.

FIG. 26 and FIG. 27 show an orientation of NC9010-Ta1 based on the calcination temperature using ASTAR analysis as a kind of TEM analysis method. In general, when measuring a sample using a TEM, it is common to measure while tilting the sample. However, in the ASTAR analysis of FIG. 26 and FIG. 27, the measurement is performed while the sample is maintained in a fixed state while the beam source moves. Accordingly, this analysis may map the grain grains in the 003 direction. Having the orientation means that, for example, the 010 and 100 directions in which lithium ion transport channels extend are oriented toward the surface of the secondary particle (an a-b plane perpendicular to the c-axis).

NC9010-Ta1 exhibited excellent electrochemical characteristics at the calcination temperature in a range of 730°C to 790°C. In this connection, it could be identified that the primary particles (second primary particles) constituting the shell portion of the secondary particle had a rod-shaped having an aspect ratio, and at the same time, lithium ion movement was effectively performed when 50% or greater thereof had the above orientation. Further, it could be identified that when the calcination temperature was 850°C, the grain was changed to a polygonal shape, and thus, the percentage of the second primary particles having the above orientation was reduced to 24.16%. That is, it was identified that in the present embodiment, the addition of tantalum (Ta) as a dopant allowed the second primary particle as the primary particles constituting the shell portion of the secondary particle to have the rod shape rather than a polygonal form, and at the same time, allowed 50% or greater of the second primary particles to have the orientation (that is, 50% or greater of the second primary particles had an orientation toward the surface of the second particle), so that the electrochemical performance was further improved.

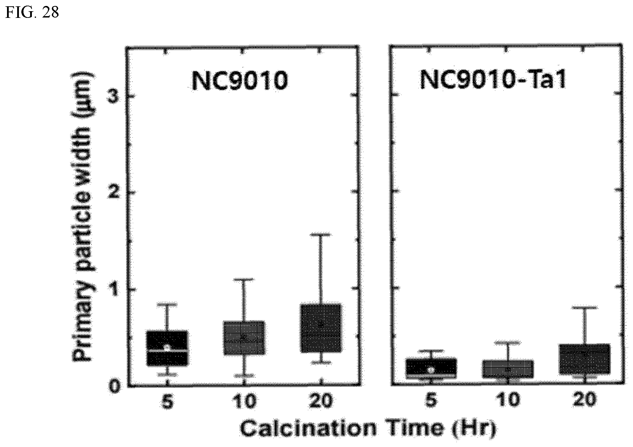

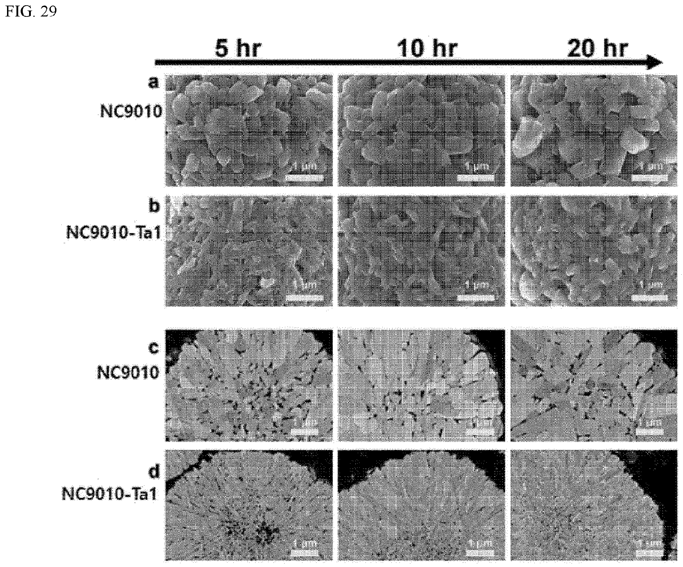

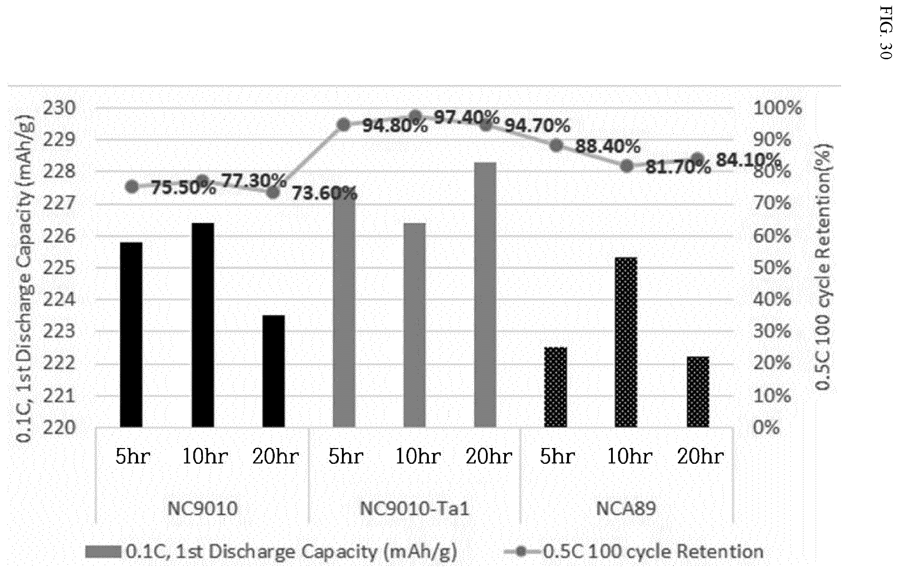

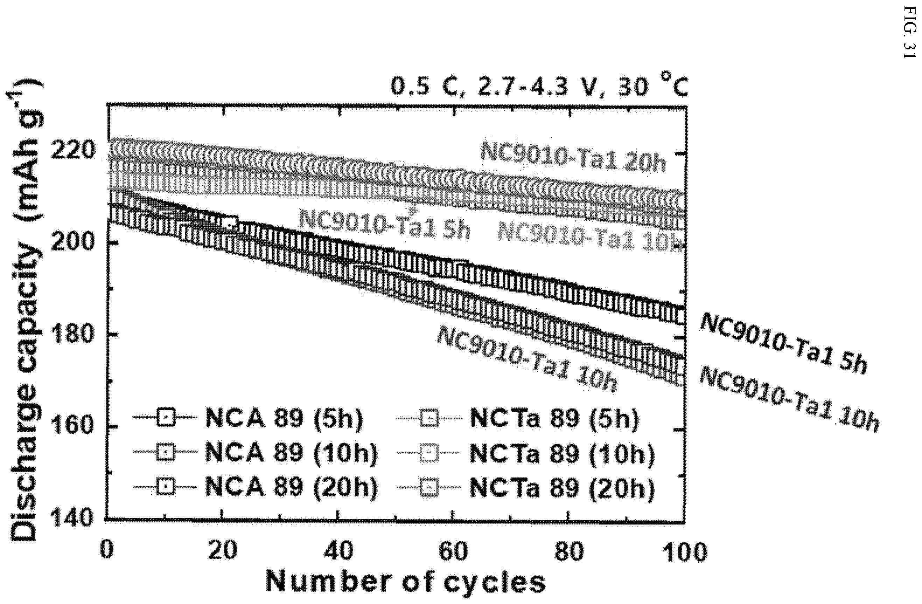

Each of NC9010, NC9010-Ta1, and NCA89 was subjected to the calcination at 730°C while varying the calcination duration to 5 hours, 10 hours, and 20 hours, such that the positive electrode active material was prepared. Table 15 shows the result of identifying capacity and retention after 100 cycles of the half-cells prepared using the positive electrode active materials. FIG. 28 is a graph showing a particle size of each of NC9010 and NC9010-Ta1 based on a calcination duration. FIG. 29 is an SEM image showing particles and cross-sections of the particles of each of NC9010 and NC9010-Ta1 based on a calcination duration. FIG. 30 is a graph showing a capacity and a 100 cycles retention of each of NC9010, NC9010-Ta1, and NCA89 based on a calcination duration. FIG. 31 is a graph showing cycle characteristics of each of NCA89 and NC9010-Ta1 based on a calcination duration.

**Table 15**

| Examples | Names | Calcination temperature | Calcination duration | 0.1C, 1st Discharge Capacity (mAh/g) | 1st Efficiency | 0.5C, Discharge Capacity (mAh/g) | 0.5C/0.1C | Cycle | 0.5C 100cycle Retention |
|---|---|---|---|---|---|---|---|---|---|
| Preparation Example 1 | NC9010 | 730°C | 10 hours | 226.4 | 94.1% | 206.5 | 91.2% | 100 | 77.3% |
| Preparation Example 20 | NC9010 | 730°C | 5 hours | 225.8 | 95.0% | 205 | 90.8% | 100 | 75.5% |
| Preparation Example 21 | NC9010 | 730°C | 20 hours | 223.5 | 95.3% | 206.3 | 92.8% | 100 | 73.6% |
| Preparation Example 4 | NC9010-Ta1 | 730°C | 10 hours | 226.4 | 96.80% | 213.4 | 95.00% | 100 | 97.40% |
| Preparation Example 22 | NC9010-Ta1 | 730°C | 5 hours | 227.5 | 96.90% | 216.5 | 95.20% | 100 | 94.80% |
| Preparation Example 23 | NC9010-Ta1 | 730°C | 20 hours | 228.3 | 97.60% | 219.5 | 96.20% | 100 | 94.70% |
| Preparation Example 7 | NCA89 | 730°C | 10 hours | 225.3 | 94.30% | 209.9 | 93.20% | 100 | 81.70% |
| Preparation Example 24 | NCA89 | 730°C | 5 hours | 222.5 | 95.30% | 208.9 | 93.90% | 100 | 88.40% |
| Preparation Example 25 | NCA89 | 730°C | 20 hours | 222.2 | 95.00% | 206.6 | 93.00% | 100 | 84.10% |

Referring to Table 15, and FIG. 28 and FIG. 29, it could be identified that in NC9010, the volume of primary particles increased as the calcination duration increased, and, accordingly, the rod shape of the second primary particle constituting the shell portion of the secondary particle was gradually removed. On the contrary, it could be identified that in NC9010-Ta1, the shape of the second primary particle was maintained almost unchanged even when the calcination duration increased from 5 hours to 20 hours.

Referring to Table 15 and FIG. 30, it was identified that in NC9010-Ta1, over 90% retention after 100 cycles was maintained regardless of the calcination duration, while in NC9010 and NCA89, when the calcination duration was short or 5 hours or 20 hours, both the capacity and 100 cycle retention characteristic were degraded. That is, it was identified that NC9010-Ta1 exhibited a constant characteristic regardless of the calcination duration, while in NC9010 and NCA89, the shape of the primary particles, and thus the cycle characteristics, etc. were affected by the calcination duration.

Referring to FIG. 31, it was identified that NCA89 had lower cycle characteristic depending on the calcination duration, while NC9010-Ta1 had cycle characteristic which was excellent regardless of the calcination duration.

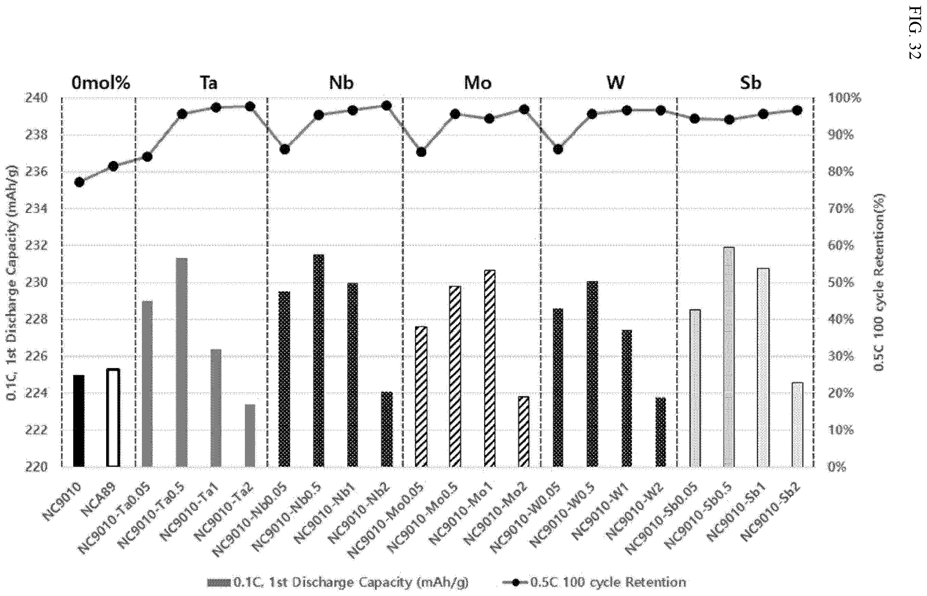

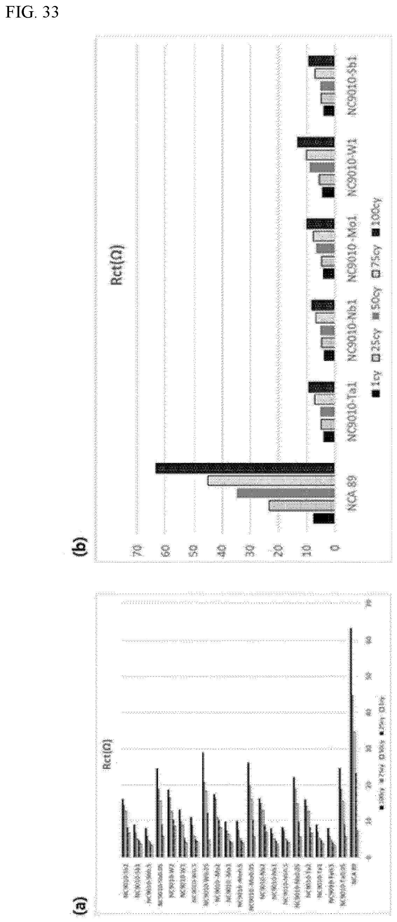

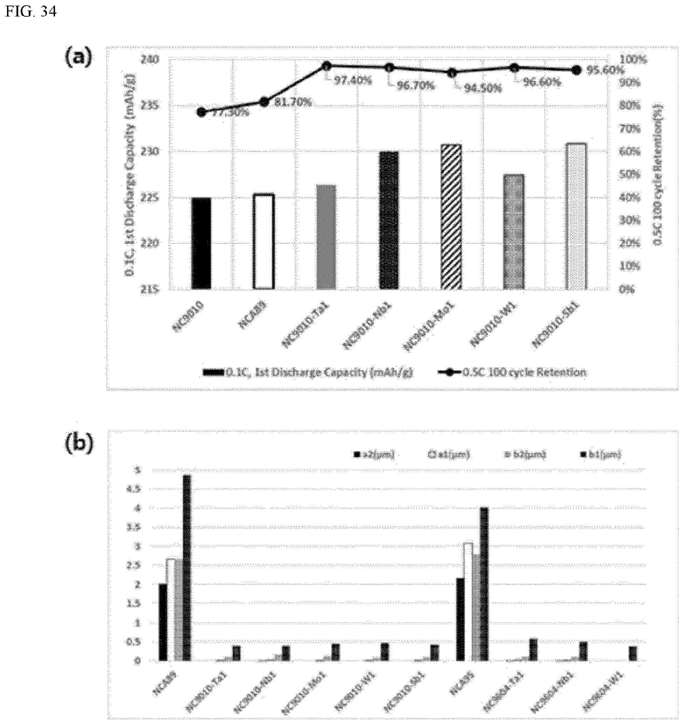

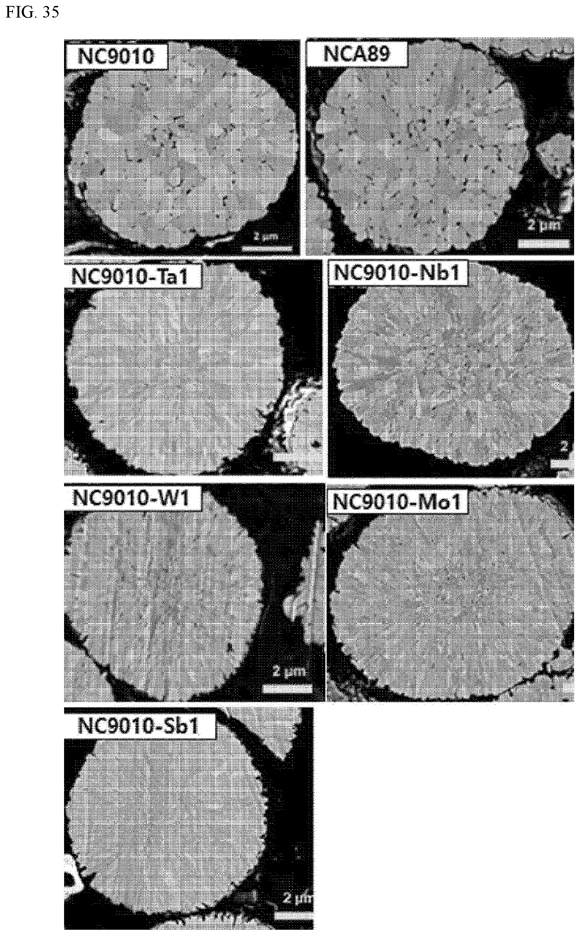

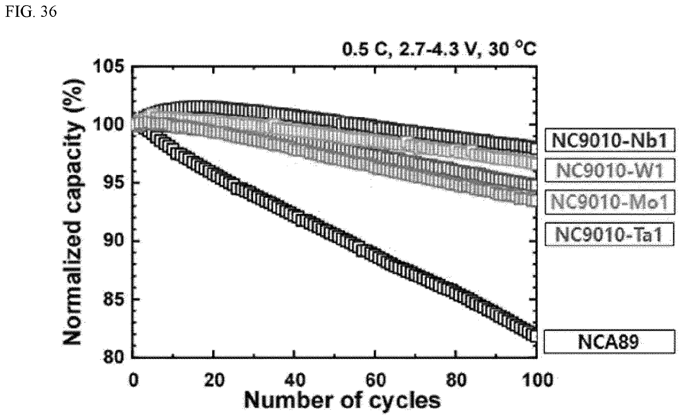

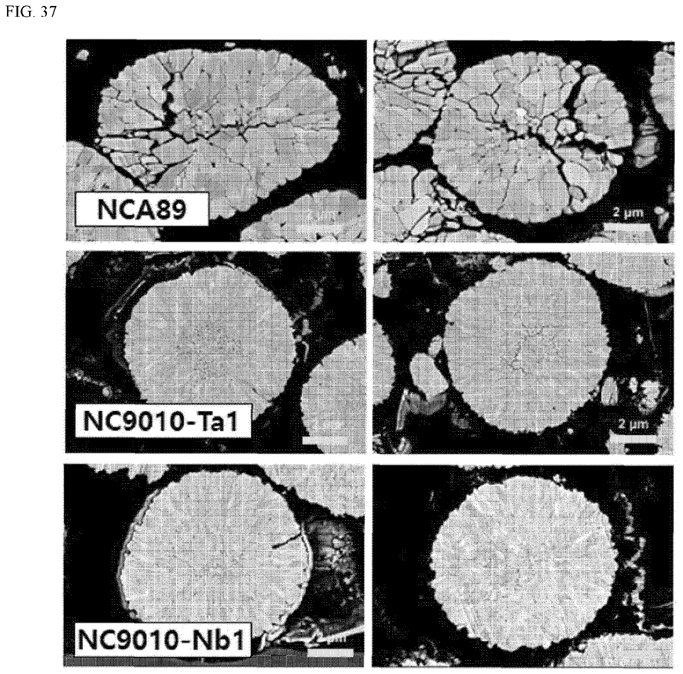

Table 16 shows the results of identifying capacity and retention of the half-cells using NCA89 and NC9010, based on the dopant type and content. FIG. 32 is a graph showing a capacity and a retention based on a dopant type and a dopant content. FIG. 33 is a graph showing a resistance based on a dopant type and a dopant content. FIG. 34 is a graph showing a capacity, a retention, and a length of primary particles at 1 mol% of a dopant content. FIG. 35 is an SEM image of a cross-section of a positive electrode active material of FIG. 33. FIG. 36 is a cycle graph using the positive electrode active material of FIG. 33. FIG. 37 is an SEM image showing a cross-sections of particles of each of NCA89, NC9010-Ta1 and NC9010-Nb1 after 100 cycles.

**Table 16**

| Examples | Names | Dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C 100 cycle Retention |
|---|---|---|---|---|---|---|---|---|---|
| Preparation Example 1 | NC9010 | Absent | 0 | 225 | 94.50% | 209.1 | 92.93% | 100 | 77.30% |
| Preparation Example 2 | NC9010-Ta0.05 | Ta | 0.05 | 229 | 95.80% | 215.1 | 93.93% | 100 | 84.10% |
| Preparation Example 3 | NC9010-Ta0.5 | Ta | 0.5 | 231.3 | 96.90% | 220.2 | 95.20% | 100 | 95.60% |
| Preparation Example 4 | NC9010-Tal | Ta | 1 | 226.4 | 96.80% | 213.4 | 94.26% | 100 | 97.40% |
| Preparation Example 5 | NC9010-Ta2 | Ta | 2 | 223.4 | 95.80% | 205 | 91.76% | 100 | 97.70% |
| Preparation Example 7 | NCA89 | Absent | 0 | 225.3 | 94.30% | 209.9 | 93.20% | 100 | 81.70% |
| Preparation Example 26 | NC9010-Nb0.05 | Nb | 0.05 | 229.5 | 95.89% | 215.2 | 93.77% | 100 | 86.30% |
| Preparation Example 27 | NC9010-Nb0.5 | Nb | 0.5 | 231.5 | 95.90% | 221 | 95.46% | 100 | 95.40% |
| Preparation Example 28 | NC9010-Nb1 | Nb | 1 | 230 | 96.30% | 216.7 | 94.22% | 100 | 96.70% |
| Preparation Example 29 | NC9010-Nb2 | Nb | 2 | 224.1 | 95.90% | 206 | 91.92% | 100 | 97.90% |
| Preparation Example 30 | NC9010-Mo0.05 | Mo | 0.05 | 227.6 | 94.70% | 216.3 | 95.04% | 100 | 85.30% |
| Preparation Example 31 | NC9010-Mo0.5 | Mo | 0.5 | 229.8 | 95.20% | 220.6 | 96.00% | 100 | 95.80% |
| Preparation Example 32 | NC9010-Mo1 | Mo | 1 | 230.7 | 96.00% | 218.6 | 94.76% | 100 | 94.50% |
| Preparation Example 33 | NC9010-Mo2 | Mo | 2 | 223.8 | 95.30% | 205.6 | 91.87% | 100 | 96.90% |
| Preparation Example 34 | NC9010-W0.05 | W | 0.05 | 228.6 | 94.20% | 215.1 | 94.09% | 100 | 86.10% |
| Preparation Example 35 | NC9010-W0.5 | W | 0.5 | 230.1 | 95.90% | 219.8 | 95.52% | 100 | 95.70% |
| Preparation Example 36 | NC9010-W1 | W | 1 | 227.4 | 96.10% | 215.3 | 94.68% | 100 | 96.60% |
| Preparation Example 37 | NC9010-W2 | W | 2 | 223.8 | 95.30% | 204.6 | 91.42% | 100 | 96.70% |
| Preparation Example 38 | NC9010-Sb0.05 | Sb | 0.05 | 228.5 | 94.68% | 215.6 | 94.35% | 100 | 94.35% |
| Preparation Example 39 | NC9010-Sb0.5 | Sb | 0.5 | 231.9 | 96.90% | 219.6 | 94.70% | 100 | 94.25% |
| Preparation Example 40 | NC9010-Sb1 | Sb | 1 | 230.8 | 97.00% | 218.5 | 94.67% | 100 | 95.60% |
| Preparation Example 41 | NC9010-Sb2 | Sb | 2 | 224.6 | 95.40% | 206.2 | 91.81% | 100 | 96.80% |

Referring to Table 16, FIG. 32 to FIG. 37, it could be identified that NCA89 or NC9010 free of the dopant exhibited similar characteristics, while when tantalum (Ta), niobium (Nb), molybdenum (Mo), tungsten (W), and antimony (Sb) were contained, the capacity and retention characteristic after 100 cycles were excellent. Further, it could be identified that as the content of tantalum (Ta), niobium (Nb), molybdenum (Mo), tungsten (W), and antimony (Sb) gradually increased, the capacity and retention characteristic were excellent. It could be identified that when the dopant content was 2 mol%, the capacity was somewhat decreased. Referring to (b) of FIG. 34, it could be identified that when tantalum (Ta), niobium (Nb), molybdenum (Mo), tungsten (W), and antimony (Sb) were contained, the long side al, and the short side a2 of the primary particle (first primary particle) constituting the core portion of the secondary particle, and the long side b1, and the short side b2 of the primary particle (second primary particle) constituting the shell portion of the secondary particle were much smaller than that when the dopant was absent.

Referring to FIG. 37, it could be identified that after 100 cycles, micro cracks hardly occurred in the cross section of the positive electrode active material particle containing tantalum (Ta) and niobium (Nb), while in NC9010 containing no dopant, micro-cracks including a crack path extending from the core portion of the secondary particle to the shell portion thereof occur in a large area within the secondary particle.

Table 17 below shows resistance values Rsf and Rct based on a content of each dopant.

**Table 17**

| | Rsf (Ω) | | | | | Rct (Ω) | | | | |
|---|---|---|---|---|---|---|---|---|---|---|
| Cycle | 1 | 25 | 50 | 75 | 100 | 1 | 25 | 50 | 75 | 100 |
| NCA 89 | 5.66 | 6.45 | 6.55 | 6.33 | 6.96 | 7.48 | 23.25 | 34.63 | 44.91 | 63.36 |
| NC9010-Ta0.05 | 7.51 | 7.19 | 7.31 | 6.91 | 6.73 | 5.82 | 9.25 | 15.56 | 18.98 | 24.68 |
| NC9010-Ta0.5 | 6.18 | 7.26 | 7.45 | 6.65 | 6.36 | 3.41 | 4.13 | 4.56 | 6.09 | 8.18 |
| NC9010-Tal | 7.64 | 7.03 | 7.31 | 6.56 | 6.28 | 3.83 | 4.81 | 5.13 | 7.09 | 9.15 |
| NC9010-Ta2 | 7.51 | 7.19 | 7.31 | 6.81 | 6.39 | 6.84 | 8.41 | 12.81 | 14.41 | 16.12 |
| NC9010-Nb0.05 | 7.15 | 7.01 | 7.21 | 6.51 | 6.28 | 5.71 | 9.81 | 14.89 | 19.12 | 22.21 |
| NC9010-Nb0.5 | 7.26 | 7.01 | 7.45 | 6.41 | 6.44 | 4.05 | 4.61 | 5.10 | 7.51 | 8.41 |
| NC9010-Nb1 | 7.21 | 7.05 | 7.15 | 6.41 | 6.18 | 3.68 | 4.61 | 5.11 | 6.71 | 8.10 |
| NC9010-Nb2 | 7.78 | 7.13 | 7.48 | 6.66 | 6.31 | 7.01 | 9.12 | 12.98 | 15.11 | 16.36 |
| NC9010 - Mo0.05 | 7.55 | 7.32 | 7.10 | 6.52 | 6.13 | 5.75 | 10.31 | 16.18 | 20.15 | 26.22 |
| NC9010 - Mo0.5 | 7.61 | 7.51 | 7.10 | 6.42 | 6.33 | 4.01 | 4.71 | 5.23 | 7.85 | 10.12 |
| NC9010 -Mo1 | 7.51 | 7.19 | 7.21 | 6.88 | 6.31 | 3.96 | 4.61 | 6.51 | 7.59 | 9.852 |
| NC9010 -Mo2 | 7.11 | 7.00 | 7.56 | 6.51 | 6.18 | 8.31 | 10.21 | 11.10 | 16.48 | 17.51 |
| NC9010-W0.05 | 7.64 | 7.51 | 7.32 | 6.75 | 6.81 | 4.81 | 12.31 | 18.31 | 21.08 | 28.98 |
| NC9010-W0.5 | 7.51 | 7.15 | 7.15 | 6.84 | 6.18 | 4.32 | 5.12 | 5.98 | 8.95 | 11.21 |
| NC9010-W1 | 7.42 | 7.15 | 7.21 | 6.25 | 6.31 | 4.21 | 5.38 | 8.89 | 10.00 | 13.22 |
| NC9010-W2 | 7.51 | 7.31 | 7.10 | 6.32 | 6.48 | 8.65 | 10.50 | 12.68 | 16.70 | 18.68 |
| NC9010-Sb0.05 | 7.51 | 7.17 | 7.31 | 6.91 | 6.72 | 5.81 | 9.23 | 15.55 | 18.94 | 24.61 |
| NC9010-Sb0.5 | 6.17 | 7.24 | 7.43 | 6.63 | 6.35 | 3.40 | 4.12 | 4.55 | 6.07 | 8.17 |
| NC9010-Sb1 | 7.63 | 7.01 | 7.30 | 6.55 | 6.27 | 3.81 | 4.80 | 5.11 | 7.01 | 9.14 |
| NC9010-Sb2 | 7.51 | 7.17 | 7.30 | 6.80 | 6.38 | 6.82 | 8.40 | 12.80 | 14.40 | 16.11 |

Referring to Table 17, it may be identified that the resistance value increases as the number of cycles increases. The resistance value of NCA89 in which the dopant was not contained was significantly increased, compared to other positive electrode active materials to which the dopant was added. That is, as the cycle increased, the resistance value increased due to the increase in the separation space between the primary particles, that is, the micro cracks in the secondary particles. The micro crack was suppressed when the dopant was added. Further, as the dopant content increased, the micro crack formation was suppressed. However, when the dopant concentration was 2 mol%, the effect was reduced. Further, it could be identified that the dopants exhibited approximately similar effects.

Referring to FIG. 32 to FIG. 34, in order to examine a difference between effects of the dopants, capacity and retention were identified based on the same 1mol% of each of the various dopants. It could be identified that NCA89 or NC9010 free of the dopant was low in terms of capacity and retention. On the contrary, tantalum (Ta) and tungsten (W) exhibited excellent retention, but relatively low capacity, while niobium (Nb) and molybdenum (Mo) exhibited both of excellent capacity and retention.

Referring to FIG. 35, it could be identified that the rod shape of the primary particle constituting the secondary particle of the NC9010 was not displayed, whereas the rod shape of the primary particle constituting the secondary particle containing tantalum (Ta), niobium (Nb), molybdenum (Mo), tungsten (W), and antimony (Sb) was clearly displayed. Further, it could be identified that when tantalum (Ta), niobium (Nb), molybdenum (Mo), tungsten (W), or antimony (Sb) are contained, the shape of the primary particle constituting the core portion of the secondary particle and the shape of the primary particle constituting the peripheral part were different from each other. Specifically, it could be identified that a shape of the primary particle constituting the core portion was similar to a cubic shape, while a shape of the primary particle constituting the shell portion was similar to the rod shape which was oriented toward the core portion of the secondary particle.

Referring to FIG. 36 and FIG. 37, it could be identified that except for NCA89, the positive electrode active materials containing tantalum (Ta), niobium (Nb), molybdenum (Mo) or tungsten (W) had excellent lifespan characteristics. Further, it could be identified that when tantalum (Ta) and niobium (Nb) were added, microcracks hardly occurred even after 100 cycles, whereas the microcrack including the crack path occurred in a wide area of NCA89.

Hereinafter, in order to identify whether the effect of the dopant based on the type and content of the transition element constituting the positive electrode active material exhibited a similar trend as that in NC9010, various positive electrode active materials were prepared while changing the type and content of the transition metal, and then tantalum (Ta), niobium (Nb), molybdenum (Mo), tungsten (W), and antimony (Sb) as the doping elements were added thereto at various contents. Then, whether capacity and retention were improved was identified.

Table 18 shows capacity and retention after 100 cycles of the half-cell containing NCA89, based on the dopant type and the dopant content. Table 19 shows the capacity and retention after 100 cycles when 1 mol% of each dopant is contained in each of NC9010 and NCA89.

**Table 18**

| Examples | Names | Dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|---|---|
| Preparation Example 7 | NCA89 | Absent | 0 | 225.1 | 95.10% | 210.6 | 93.56% | 100 | 83.70% |
| Preparation Example 42 | NCA89-Ta0.05 | Ta | 0.05 | 228.6 | 94.68% | 212.6 | 93.00% | 100 | 94.35% |
| Preparation Example 43 | NCA89-Ta0.5 | Ta | 0.5 | 228.8 | 96.90% | 217.8 | 95.19% | 100 | 95.85% |
| Preparation Example 44 | NCA89-Ta1 | Ta | 1 | 229.4 | 96.80% | 218.3 | 95.16% | 100 | 96.20% |
| Preparation Example 45 | NCA89-Ta2 | Ta | 2 | 220.3 | 95.40% | 207.6 | 94.24% | 100 | 95.60% |
| Preparation Example 46 | NCA89-Nb0.05 | Nb | 0.05 | 227.3 | 95.13% | 212.6 | 93.53% | 100 | 96.35% |
| Preparation Example 47 | NCA89-Nb0.5 | Nb | 0.5 | 228.4 | 96.66% | 218.6 | 95.71% | 100 | 95.90% |
| Preparation Example 48 | NCA89-Nb1 | Nb | 1 | 229.6 | 96.70% | 217.6 | 94.77% | 100 | 96.20% |
| Preparation Example 49 | NCA89-Nb2 | Nb | 2 | 220.8 | 95.63% | 206.3 | 93.43% | 100 | 94.30% |
| Preparation Example 50 | NCA89-Mo0.05 | Mo | 0.05 | 227 | 94.36% | 211.4 | 93.13% | 100 | 97.40% |
| Preparation Example 51 | NCA89-Mo0.5 | Mo | 0.5 | 228.6 | 96.40% | 216 | 94.49% | 100 | 95.80% |
| Preparation Example 52 | NCA89-Mo1 | Mo | 1 | 230.1 | 96.80% | 218.6 | 95.00% | 100 | 95.40% |
| Preparation Example 53 | NCA89-Mo2 | Mo | 2 | 221.7 | 95.70% | 204.1 | 92.06% | 100 | 93.50% |
| Preparation Example 54 | NCA89-W0.05 | W | 0.05 | 226.8 | 94.60% | 210.3 | 92.72% | 100 | 96.40% |
| Preparation Example 55 | NCA89-W0.5 | W | 0.5 | 227.8 | 96.20% | 216.4 | 95.00% | 100 | 95.80% |
| Preparation Example 56 | NCA89-W1 | W | 1 | 227.3 | 96.50% | 215.2 | 94.68% | 100 | 96.20% |
| Preparation Example 57 | NCA89-W2 | W | 2 | 223.2 | 94.30% | 205.8 | 92.20% | 100 | 97.80% |
| Preparation Example 58 | NCA89-Sb0.05 | Sb | 0.05 | 228.3 | 94.80% | 213.2 | 93.39% | 100 | 94.80% |
| Preparation Example 59 | NCA89-Sb0.5 | Sb | 0.5 | 229.6 | 96.50% | 218.3 | 95.08% | 100 | 95.60% |
| Preparation Example 60 | NCA89-Sb1 | Sb | 1 | 229.8 | 96.70% | 218.8 | 95.21% | 100 | 95.90% |
| Preparation Example 61 | NCA89-Sb2 | Sb | 2 | 222.1 | 95.10% | 208.6 | 93.92% | 100 | 96.00% |

**Table 19**

| Examples | Names | Dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C 100 cycle Retention |
|---|---|---|---|---|---|---|---|---|---|
| Preparation Example 1 | NC9010 | Absent | 0 | 225 | 94.50% | 209.1 | 92.93% | 100 | 77.30% |
| Preparation Example 7 | NCA89 | Absent | 0 | 225.1 | 95.10% | 210.6 | 93.56% | 100 | 83.70% |
| Preparation Example 4 | NC9010-Ta1 | Ta | 1 | 226.4 | 96.80% | 213.4 | 94.26% | 100 | 97.40% |
| Preparation Example 44 | NCA89-Ta1 | Ta | 1 | 229.4 | 96.80% | 218.3 | 95.16% | 100 | 96.20% |
| Preparation Example 28 | NC9010-Nb1 | Nb | 1 | 230 | 96.30% | 216.7 | 94.22% | 100 | 96.70% |
| Preparation Example 48 | NCA89-Nb 1 | Nb | 1 | 229.6 | 96.70% | 217.6 | 94.77% | 100 | 96.20% |
| Preparation Example 32 | NC9010-Mo1 | Mo | 1 | 230.7 | 96.00% | 218.6 | 94.76% | 100 | 94.50% |
| Preparation Example 52 | NCA89-Mo1 | Mo | 1 | 230.1 | 96.80% | 218.6 | 95.00% | 100 | 95.40% |
| Preparation Example 36 | NC9010-W1 | W | 1 | 227.4 | 96.10% | 215.3 | 94.68% | 100 | 96.60% |
| Preparation Example 56 | NCA89-W1 | W | 1 | 227.3 | 96.50% | 215.2 | 94.68% | 100 | 96.20% |
| Preparation Example 40 | NC9010-Sb1 | Sb | 1 | 230.8 | 97.00% | 218.5 | 94.67% | 100 | 95.60% |
| Preparation Example 60 | NCA89-Sb1 | Sb | 1 | 229.8 | 96.70% | 218.8 | 95.21% | 100 | 95.90% |

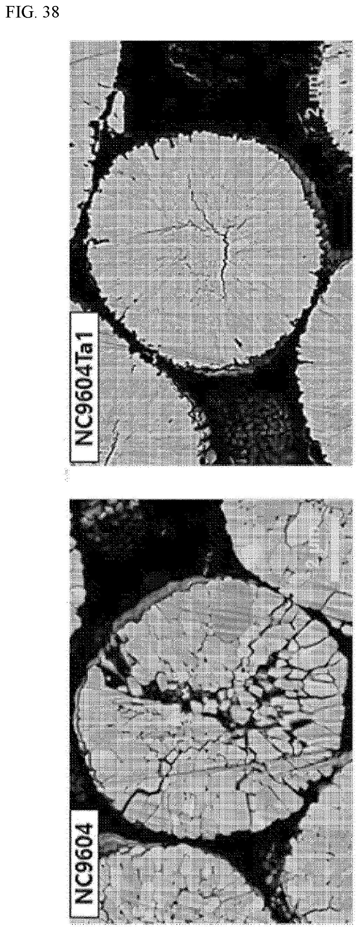

Table 20 shows capacity and retention after 100 cycles of the half-cell containing NC9604, based on the dopant type and the dopant content. FIG. 38 is an SEM cross-sectional image after 100 cycles of each of NC9604 and NC9604-Ta1.

**Table 20**

| Examples | Names | Dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|---|---|
| Preparation Example 62 | NC9604 | Absent | 0 | 237.2 | 95.10% | 216 | 91.06% | 100 | 78.40% |
| Preparation Example 63 | NC9604-Ta0.05 | Ta | 0.05 | 237.4 | 96.20% | 218.6 | 92.08% | 100 | 92.20% |
| Preparation Example 64 | NC9604-Ta0.5 | Ta | 0.5 | 238.4 | 95.40% | 225.3 | 94.51% | 100 | 91.80% |
| Preparation Example 65 | NC9604-Ta1 | Ta | 1 | 239.2 | 96.30% | 227.1 | 94.94% | 100 | 93.90% |
| Preparation Example 66 | NC9604-Ta2 | Ta | 2 | 232.6 | 94.60% | 218.6 | 93.98% | 100 | 96.80% |
| Preparation Example 67 | NC9604-Nb0.05 | Nb | 0.05 | 238.6 | 96.30% | 219.4 | 91.95% | 100 | 90.21% |
| Preparation Example 68 | NC9604-Nb0.5 | Nb | 0.5 | 239.6 | 95.80% | 231.3 | 96.54% | 100 | 92.34% |
| Preparation Example 69 | NC9604-Nb1 | Nb | 1 | 239.5 | 96.30% | 230.4 | 96.20% | 100 | 91.60% |
| Preparation Example 70 | NC9604-Nb2 | Nb | 2 | 232.8 | 94.60% | 219.3 | 94.20% | 100 | 96.80% |
| Preparation Example 71 | NC9604-Mo0.05 | Mo | 0.05 | 237.6 | 95.60% | 218.9 | 92.13% | 100 | 91.30% |
| Preparation Example 72 | NC9604-Mo0.5 | Mo | 0.5 | 238.7 | 95.40% | 230.3 | 96.48% | 100 | 91.80% |
| Preparation Example 73 | NC9604-Mo1 | Mo | 1 | 238.8 | 96.80% | 229.8 | 96.23% | 100 | 92.80% |
| Preparation Example 74 | NC9604-Mo2 | Mo | 2 | 233.6 | 95.20% | 217.3 | 93.02% | 100 | 95.75% |
| Preparation Example 75 | NC9604-W0.05 | W | 0.05 | 235.4 | 95.40% | 218.6 | 92.86% | 100 | 92.60% |
| Preparation Example 76 | NC9604-W0.5 | W | 0.5 | 237.4 | 96.20% | 228.6 | 96.29% | 100 | 90.60% |
| Preparation Example 77 | NC9604-W1 | W | 1 | 236.5 | 96.60% | 229.4 | 97.00% | 100 | 91.60% |
| Preparation Example 78 | NC9604-W2 | W | 2 | 234.8 | 94.50% | 214.6 | 91.40% | 100 | 95.40% |

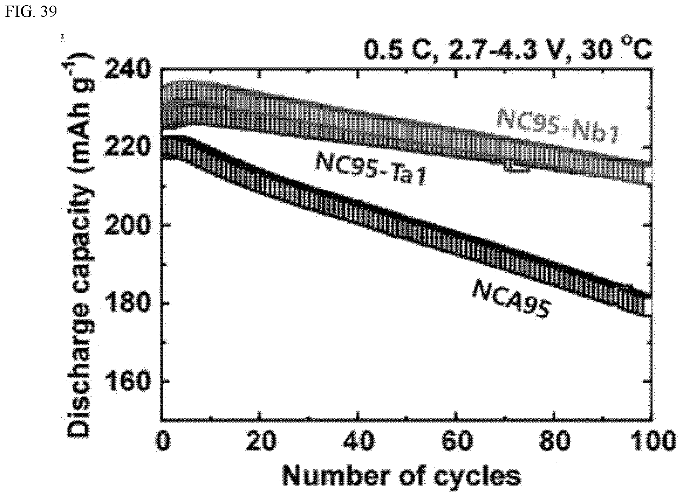

Table 21 shows capacity and retention after 100 cycles of the half-cell containing NCA95, based on the dopant type and the dopant content. FIG. 39 is a cycle graph of each of NCA95 and NCA95-Ta1, NCA95-Nb1.

**Table 21**

| Examples | Names | Dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|---|---|
| Preparation Example 79 | NCA95 | Absent | 0 | 236.8 | 96.50% | 218.4 | 92.23% | 100 | 81.60% |
| Preparation Example 80 | NCA95-Ta0.05 | Ta | 0.05 | 236.8 | 95.80% | 217.6 | 91.89% | 100 | 90.23% |
| Preparation Example 81 | NCA95-Ta0.5 | Ta | 0.5 | 238.4 | 94.80% | 227.9 | 95.60% | 100 | 91.30% |
| Preparation Example 82 | NCA95-Ta1 | Ta | 1 | 239.5 | 95.70% | 229.4 | 95.78% | 100 | 92.80% |
| Preparation Example 83 | NCA95-Ta2 | Ta | 2 | 233.5 | 94.60% | 217.6 | 93.19% | 100 | 95.90% |
| Preparation Example 84 | NCA95-Nb0.05 | Nb | 0.05 | 236.4 | 96.30% | 219.2 | 92.72% | 100 | 89.80% |
| Preparation Example 85 | NCA95-Nb0.5 | Nb | 0.5 | 238.6 | 95.80% | 228.6 | 95.81% | 100 | 91.40% |
| Preparation Example 86 | NCA95-Nb1 | Nb | 1 | 239.6 | 96.30% | 229.4 | 95.74% | 100 | 92.70% |
| Preparation Example 87 | NCA95-Nb2 | Nb | 2 | 232.2 | 94.60% | 218.6 | 94.14% | 100 | 96.40% |
| Preparation Example 88 | NCA95-Mo0.05 | Mo | 0.05 | 235.1 | 94.50% | 220.5 | 93.79% | 100 | 92.40% |
| Preparation Example 89 | NCA95-Mo0.5 | Mo | 0.5 | 236.8 | 96.20% | 229.4 | 96.88% | 100 | 90.30% |
| Preparation Example 90 | NCA95-Mo1 | Mo | 1 | 236.4 | 95.40% | 230.2 | 97.38% | 100 | 89.40% |
| Preparation Example 91 | NCA95-Mo2 | Mo | 2 | 227.5 | 95.20% | 217.3 | 95.52% | 100 | 95.65% |
| Preparation Example 92 | NCA95-W0.05 | W | 0.05 | 234.6 | 95.40% | 217.8 | 92.84% | 100 | 90.10% |
| Preparation Example 93 | NCA95-W0.5 | W | 0.5 | 237.2 | 96.20% | 227.9 | 96.08% | 100 | 90.80% |
| Preparation Example 94 | NCA95-W1 | W | 1 | 236.1 | 96.60% | 228.3 | 96.70% | 100 | 91.36% |
| Preparation Example 95 | NCA95-W2 | W | 2 | 233.6 | 94.50% | 213.6 | 91.44% | 100 | 95.78% |

Referring to Table 17 to Table 21, it could be identified that similarly to the above-described NC9010, in each of NCA89, NC9604, and NCA95, when each of tantalum (Ta), niobium (Nb), molybdenum (Mo), tungsten (W), and antimony (Sb) was contained, the retention after the cycles was excellent, compared to that when each of tantalum (Ta), niobium (Nb), molybdenum (Mo), tungsten (W), and antimony (Sb) was not contained. Referring to FIG. 38, it could be identified that micro cracks hardly occurred in the positive electrode active material based on NC9604 containing 1 mol% of tantalum (Ta) after 100 cycles, whereas micro cracks occurred in in the positive electrode active material based on NC9604 free of tantalum (Ta) after 100 cycles. Referring to FIG. 39, it could be identified that the lifespan characteristic when NCA95 contained tantalum (Ta) and niobium (Nb) was superior to the lifespan characteristic when NCA95 was free of tantalum (Ta) and niobium (Nb). That is, it could be identified that the dopant effect was maintained at a similar level even when the content of nickel (Ni) was high, that is, 94 mol%.

Referring to Table 18 and Table 19, it could be identified that when the same content, that is, 1 mol% of each of tantalum (Ta), niobium (Nb), molybdenum (Mo), tungsten (W), and antimony (Sb) was added to each of NC9010 and NCA89 which have different types of transition metals, NC9010 and NCA89 exhibited excellent capacity and 100-cycle retention in the similar manner.

Table 22 below shows the results of identifying capacity and retention of the half-cell including NCM95 based on the dopant type and content.

**Table 22**

| Examples | Names | dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|---|---|
| Preparation Example 96 | NCM95 | - | - | 238.8 | 96.50% | 220.6 | 92.38% | 100 | 84.55% |
| Preparation Example 97 | NCM95-Ta0.05 | Ta | 0.05 | 236.8 | 95.80% | 218.8 | 92.40% | 100 | 96.20% |
| Preparation Example 98 | NCM95-Ta0.5 | Ta | 0.5 | 238.4 | 94.80% | 222.1 | 93.16% | 100 | 95.40% |
| Preparation Example 99 | NCM95-Ta1 | Ta | 1 | 226.4 | 95.70% | 206.8 | 91.34% | 100 | 98.80% |
| Preparation Example 100 | NCM95-Ta2 | Ta | 2 | 212.5 | 94.60% | 198.6 | 93.46% | 100 | 98.90% |
| Preparation Example 101 | NCM95-Nb0.05 | Nb | 0.05 | 234.6 | 96.30% | 219.4 | 93.52% | 100 | 96.40% |
| Preparation Example 102 | NCM95-Nb0.5 | Nb | 0.5 | 237.8 | 95.80% | 223.8 | 94.11% | 100 | 96.10% |
| Preparation Example 103 | NCM95-Nb1 | Nb | 1 | 225.8 | 96.30% | 210.6 | 93.27% | 100 | 97.90% |
| Preparation Example 104 | NCM95-Nb2 | Nb | 2 | 213.8 | 94.60% | 200.4 | 93.73% | 100 | 98.20% |
| Preparation Example 105 | NCM95-Mo0.05 | Mo | 0.05 | 232.4 | 94.60% | 219.6 | 94.49% | 100 | 94.80% |
| Preparation Example 106 | NCM95-Mo0.5 | Mo | 0.5 | 236.4 | 95.80% | 220.5 | 93.27% | 100 | 95.60% |
| Preparation Example 107 | NCM95-Mo1 | Mo | 1 | 224.6 | 95.10% | 218.6 | 97.33% | 100 | 96.40% |
| Preparation Example 108 | NCM95-Mo2 | Mo | 2 | 211.5 | 96.30% | 206.4 | 97.59% | 100 | 95.60% |
| Preparation Example 109 | NCM95-W0.05 | W | 0.05 | 233.5 | 94.80% | 217.8 | 93.28% | 100 | 91.30% |
| Preparation Example 110 | NCM95-W0.5 | W | 0.5 | 236.8 | 96.20% | 223.8 | 94.51% | 100 | 95.80% |
| Preparation Example 111 | NCM95-W1 | W | 1 | 224.8 | 95.70% | 208.4 | 92.70% | 100 | 97.90% |
| Preparation Example 112 | NCM95-W2 | W | 2 | 215.7 | 93.60% | 201.6 | 93.46% | 100 | 98.20% |

Table 23 below shows the results of identifying capacity and retention of the half-cell including NCM90 based on the dopant type and content.

**Table 23**

| Examples | Names | Dopant | Dopant content (mol%) | 0.1C, 1st Discharge Capacity (mAh/g) | 1st Efficiency | 0.5C, Discharge Capacity (mAh/g) | 0.5C/0.1C | Cycle | 0.5C cycle Retention |
|---|---|---|---|---|---|---|---|---|---|
| Preparation Example 113 | NCM 90 | - | - | 228.6 | 94.90% | 216.8 | 94.84% | 100 | 88.30% |
| Preparation Example 114 | NCM90-Ta0.05 | Ta | 0.05 | 227.8 | 95.80% | 217.6 | 95.52% | 100 | 93.15% |
| Preparation Example 115 | NCM90-Ta0.5 | Ta | 0.5 | 228.6 | 96.90% | 218.9 | 95.76% | 100 | 96.62% |
| Preparation Example 116 | NCM90-Ta1 | Ta | 1 | 228.1 | 96.80% | 218.2 | 95.66% | 100 | 97.40% |
| Preparation Example 117 | NCM90-Ta2 | Ta | 2 | 224.2 | 95.80% | 209.6 | 93.49% | 100 | 98.85% |
| Preparation Example 118 | NCM90-Nb0.05 | Nb | 0.05 | 229.6 | 95.88% | 217.1 | 94.56% | 100 | 93.52% |
| Preparation Example 119 | NCM90-Nb0.5 | Nb | 0.5 | 228.9 | 96.23% | 219.6 | 95.94% | 100 | 96.80% |
| Preparation Example 120 | NCM90-Nb1 | Nb | 1 | 228.6 | 96.48% | 218.6 | 95.63% | 100 | 97.60% |
| Preparation Example 121 | NCM90-Nb2 | Nb | 2 | 224.8 | 95.66% | 210.8 | 93.77% | 100 | 98.90% |
| Preparation Example 122 | NCM90-Mo0.05 | Mo | 0.05 | 227.4 | 94.80% | 218.3 | 96.00% | 100 | 92.66% |
| Preparation Example 123 | NCM90-Mo0.5 | Mo | 0.5 | 228.9 | 96.30% | 220.6 | 96.37% | 100 | 95.87% |
| Preparation Example 124 | NCM90-Mo1 | Mo | 1 | 227.6 | 96.60% | 218.4 | 95.96% | 100 | 95.64% |
| Preparation Example 125 | NCM90-Mo2 | Mo | 2 | 223.8 | 95.80% | 211.4 | 94.46% | 100 | 98.12% |
| Preparation Example 126 | NCM90-W0.05 | W | 0.05 | 226.4 | 94.20% | 216.8 | 95.76% | 100 | 92.90% |
| Preparation Example 127 | NCM90-W0.5 | W | 0.5 | 227.8 | 95.90% | 218.9 | 96.09% | 100 | 95.80% |
| Preparation Example 128 | NCM90-W1 | W | 1 | 228.6 | 96.10% | 217.5 | 95.14% | 100 | 97.20% |
| Preparation Example 129 | NCM90-W2 | W | 2 | 224.2 | 95.30% | 209.8 | 93.58% | 100 | 98.87% |

Referring to Table 22 and Table 23, it could be identified that similarly to the above-mentioned NC9010, in each of NCM 95 and NCM 90, the retention after the cycles when each of tantalum (Ta), niobium (Nb), molybdenum (Mo) and tungsten (W) was contained was superior to that when each of tantalum (Ta), niobium (Nb), molybdenum (Mo) and tungsten (W) was not contained. That is, even when manganese (Mn) is included as a transition metal in addition to nickel (Ni) and cobalt (Co), the effect based on the dopant content exhibited a similar tendency.

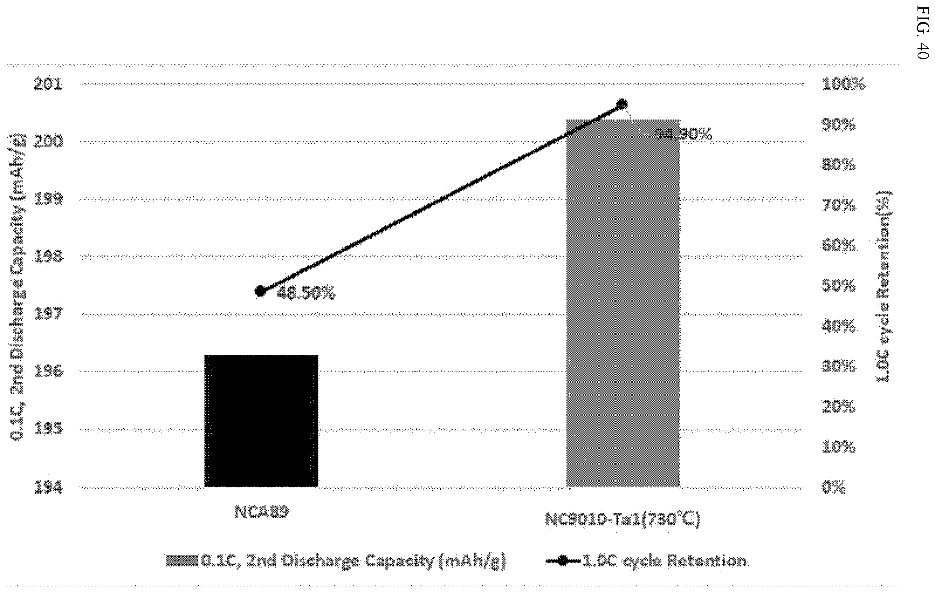

Each of NCA89, NC9010-Ta1 (730°C calcination), NC9010-Ta1 (750°C calcination), and NC9010-Nb1 (730°C calcination) was used to prepare each pouch-type full-cell (electrolyte EC:EMC VC). Table 24 below shows the capacity and retention after 100 cycles of each pouch-type full-cell. FIG. 39 is a cycle graph using a coin cell of each of NCA95, NCA95-Ta1, and NCA95-Nb1. FIG. 40 is a graph showing a capacity and a 1000 cycles retention of each of NCA89 and NC9010-Ta1 (calcination at 730°C).

**Table 24**

| Examples | Names | Calcination temperature | Calcination duration | 0.1C, 2nd Discharge Capacity (mAh/g) | 2nd Efficiency | 1.0C, Discharge Capacity (mAh/g) | 1.0C/0.1C | Cycle | 1.0C cycle Retention | L/L (mg/cm') |
|---|---|---|---|---|---|---|---|---|---|---|
| Preparation Example 7 | NCA89 | 730°C | 10h | 196.3 | 98.9% | 190.1 | 96.8% | 1000 | 48.5% | 9.01 |
| Preparation Example 4 | NC9010-Ta1 730°C | 730°C | 10h | 200.4 | 99.2% | 190 | 94.8% | 1000 | 94.9% | 8.16 |
| Preparation Example 12 | NC9010-Ta1 750°C | 750°C | 10h | 197.8 | 98.9% | 190.2 | 96.2% | 600 | 92.2% | 8.14 |
| Preparation Example 28 | NC9010-Nb1 | 730°C | 10h | 197.5 | 99.5% | 190 | 96.2% | 600 | 92.2% | 8.62 |

Referring to Table 24, FIG. 39, and FIG. 40, it could be identified that in NCA89 containing no dopant, both capacity and retention were low, whereas when tantalum (Ta) and niobium (Nb) were contained therein at 1 mol%, both capacity and retention were excellent. Further, it could be identified that when tantalum (Ta) was contained, both capacity and retention were excellent regardless of the calcination temperature 730°C and 750°C. Further, NC9010-Ta1 related to the calcination temperature of 730°C exhibited a high retention of 94.9% even after 1000 cycles.

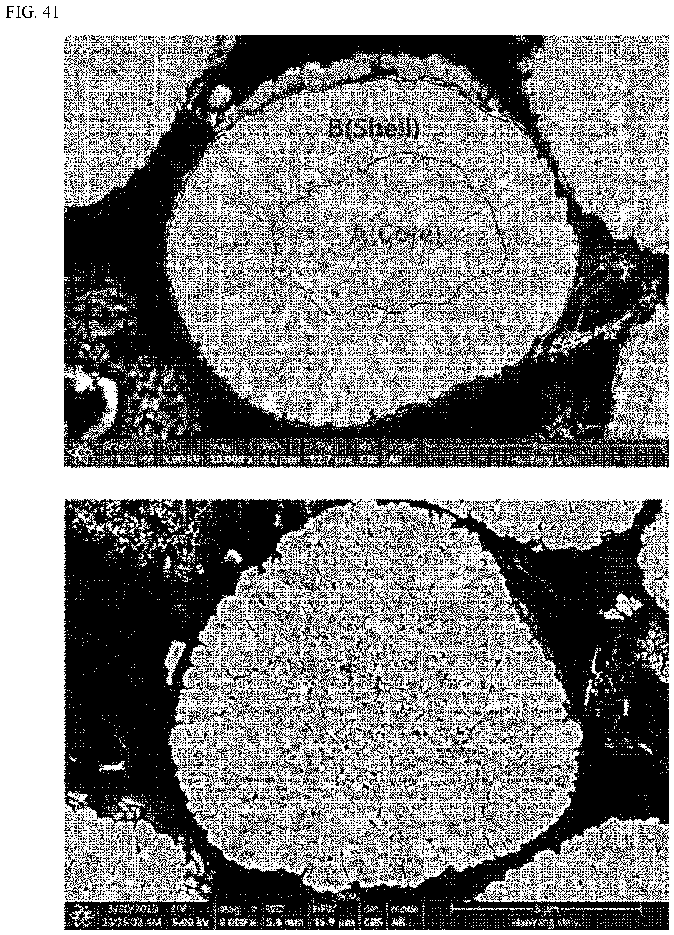

Hereinafter, the results of identifying the size of the primary particles constituting the secondary particle in the positive electrode active material prepared according to the above-described Preparation Examples are set forth. The size of the primary particle was photographed multiple times using an SEM having excellent resolution, and 5 clear images were selected and then samples for measurement were obtained, based on the images. The size of each of the primary particles constituting the secondary particle of each of the positive electrode active materials was measured using the 5 samples as obtained. The size of the primary particle was measured based on the longest length of the long side. The longest length among the lengths perpendicular to the long side was measured and defined as the length of the short side. An average value was calculated based on the measurements. FIG. 41 is a diagram schematically showing a method for measuring primary particles in a secondary particle.

As shown in FIG. 41, an SEM image of the longitudinal cross section of the secondary particle having an approximately spherical shape was obtained. The core portion A and the shell portion B were distinguished from each other according to the type of the primary particle. That is, in the core portion A of the secondary particle, the first primary particles as approximately cubic-shaped primary particles are agglomerated. The second primary particles having the rod-shape (crystalline primary particles having a hexagonal shape having the long side and the short side) are agglomerated in the shell portion B of the secondary particle. Then, the long side a1 and the short side a2 of the first primary particle in the core portion A, and the long side b1 and the short side b2 of the second primary particle in the shell portion B were measured (see FIG. 4).

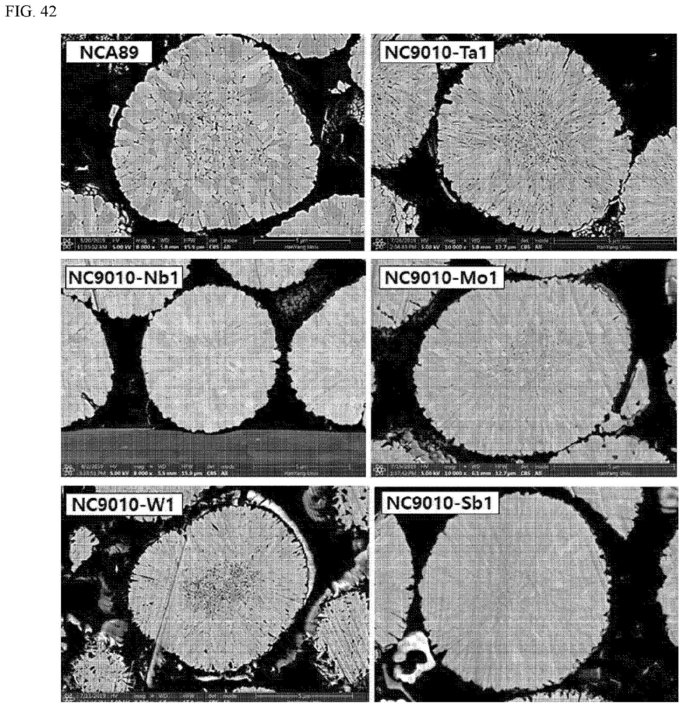

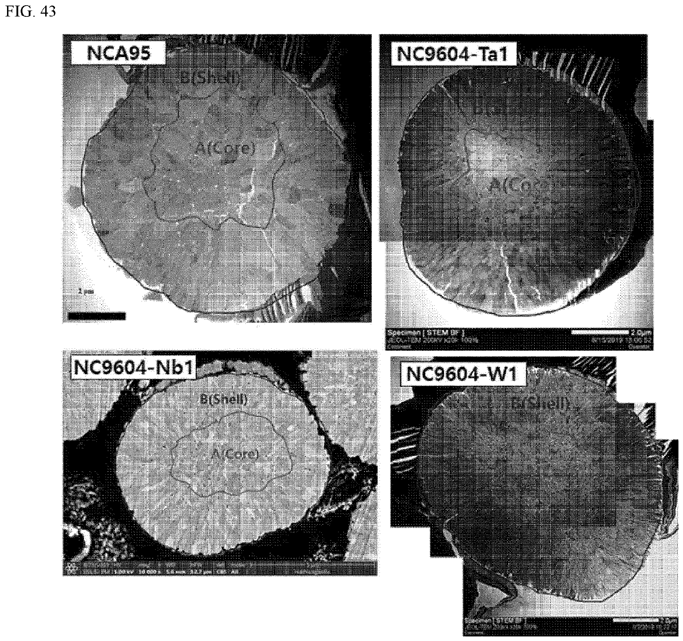

Table 25 below shows an average length of each of the long side and the short side of each of the first and second primary particles. FIG. 42 and FIG. 43 are SEM cross-sectional images based on the dopant type.

**Table 25**

| Examples | Names | Calcination temperature | Calcination duration | a2(µm) | a1(µm) | b2(µm) | b1(µm) | b1/b2 | 0.1C, 1st Discharge Capacity (mAh/g) | 0.5C 100cycle Retention |
|---|---|---|---|---|---|---|---|---|---|---|
| Preparation Example 7 | NCA89 | 730°C | 10 hours | 0.201 | 0.267 | 0.268 | 0.513 | 1.914 | 225.3 | 83.70% |
| Preparation Example 4 | NC9010-Ta1 | 730°C | 10 hours | 0.112 | 0.173 | 0.099 | 0.387 | 3.909 | 226.4 | 97.40% |
| Preparation Example 28 | NC9010-Nb1 | 730°C | 10 hours | 0.153 | 0.252 | 0.169 | 0.392 | 2.320 | 230 | 96.70% |
| Preparation Example 32 | NC9010-Mo1 | 730°C | 10 hours | 0.103 | 0.17 | 0.122 | 0.454 | 3.721 | 227.6 | 95.40% |
| Preparation Example 36 | NC9010-W1 | 730°C | 10 hours | 0.059 | 0.149 | 0.088 | 0.479 | 5.443 | 228.6 | 96.20% |
| Preparation Example 40 | NC9010-Sb1 | 730°C | 10 hours | 0.088 | 0.165 | 0.095 | 0.425 | 4.474 | 229.8 | 95.90% |
| Preparation Example 71 | NCA95 | 700°C | 10 hours | 0.239 | 0.296 | 0.203 | 0.602 | 2.966 | 236.8 | 81.60% |
| Preparation Example 57 | NC9604-Ta1 | 700°C | 10 hours | 0.163 | 0.233 | 0.113 | 0.579 | 5.124 | 239.2 | 93.90% |
| Preparation Example 61 | NC9604-Nb1 | 700°C | 10 hours | 0.131 | 0.168 | 0.107 | 0.5 | 4.673 | 239.5 | 91.60% |
| Preparation Example 69 | NC9604-W1 | 700°C | 10 hours | 0.045 | 0.15 | 0.038 | 0.382 | 10.053 | 236.5 | 91.60% |

Referring to Table 25, it could be identified that in the secondary particle free of the dopant, b1/b2 in the second primary particle was small, and accordingly, the percentage of the of the second primary particles having the orientation toward the center of the secondary particle was reduced. On the contrary, when the second primary particle contained the dopant, and thus b1/b2 was larger, the percentage of the of the second primary particles having the orientation toward the center of the secondary particle was increased, and, accordingly, the retention after 100 cycles under 0.5C was excellent. Further, it could be identified that the value of b1/b2 of the second primary particle was greater than 1.82 and smaller than or equal to 10.41.

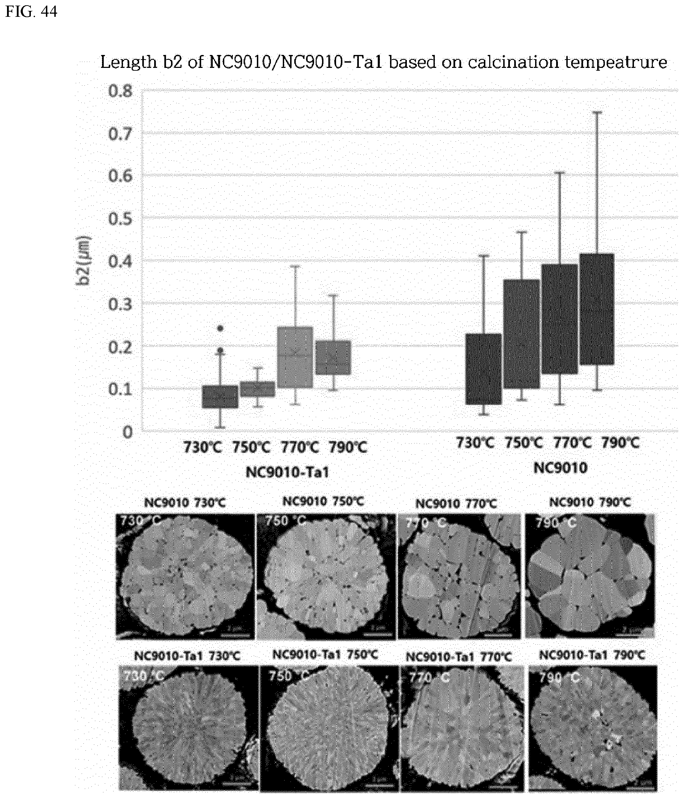

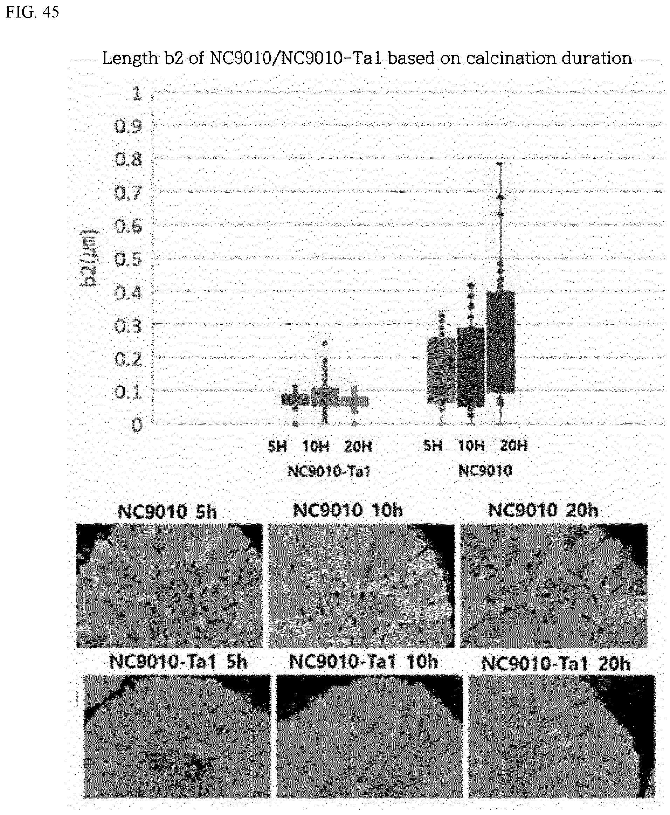

Table 26 and Table 27 show the short side length b2 of the second primary particle of each of NC9010 and NC9010-Ta1 and the capacity thereof, based on the calcination temperature and the calcination duration. Table 28 shows the short side length b2 and the long side length b1 of the second primary particle, based on the calcination temperature and calcination duration, and based on the nickel content when 1 mol% of the dopant is added. FIG. 44 is a graph and a SEM cross-sectional image showing a short side length of a second primary particle based on a dopant type and a calcination temperature. FIG. 45 is a graph and a SEM cross-sectional image showing a short side length of a second primary particle based on a calcination duration.

**Table 26**

| Names | Calcination temperature | 730 °C | 750 °C | 770 °C | 790 °C |
|---|---|---|---|---|---|
| NC9010 | Examples | Preparation Example 1 | Preparation Example 8 | Preparation Example 9 | Preparation Example 10 |
| | Average | 0.504 | 0.521 | 0.789 | 1.086 |
| | Min | 0.098 | 0.230 | 0.242 | 0.292 |
| | Max | 1.093 | 1.203 | 1.721 | 2.600 |
| NC9010-Ta1 | Examples | Preparation Example 4 | Preparation Example 12 | Preparation Example 13 | Preparation Example 14 |
| | Average | 0.083 | _{0.1}02 | _{0.1}85 | _{0.1}72 |
| | Min | 0.009 | 0.058 | 0.063 | 0.097 |
| | Max | 0.241 | _{0.1}49 | 0.386 | 0.319 |

**Table 27**

| Examples | Names | Calcination duration | Average | Min | Max |
|---|---|---|---|---|---|
| Preparation Example 20 | NC9010 | 5 hours | 0.394 | _{0.1}14 | 0.841 |
| Preparation Example 1 | NC9010 | 10 hours | 0.504 | 0.098 | 1.093 |
| Preparation Example 21 | NC9010 | 20 hours | 0.623 | 0.227 | 1.550 |
| Preparation Example 22 | NC9010-Ta1 | 5 hours | 0.077 | 0.045 | _{0.1}17 |
| Preparation Example 4 | NC9010-Ta1 | 10 hours | 0.083 | 0.009 | 0.241 |
| Preparation Example 23 | NC9010-Ta1 | 20 hours | 0.069 | 0.036 | _{0.1}14 |

Table 26 and Table 27 show only the short side length of the second primary particle. This is because when increasing the calcination temperature or increasing the calcination duration, the shape of the first primary particle hardly changes, and only the short side length in the second primary particle changes to increase the volume, and the long side length of the second primary particle hardly changes. Referring to Table 26 and FIG. 44, it could be identified that the b2 length of NC9010-Ta1 containing 1 mol% of tantalum (Ta) was controlled to be almost uniformly, whereas NC9010 free of the dopant had the b2 length varying in a wide range.

Referring to Table 24 and FIG. 45, it could be identified that in NC9010-Ta1 containing 1 mol% of tantalum (Ta), the short side length b2 of the second primary particle varied within a narrow range and was maintained at an almost unchanged value depending on the calcination duration, whereas in NC9010, b2 varied in a wide range and the length b2 increased as the calcination duration increased. That is, it may be identified that stability against heat may be improved due to the inclusion of dopant, and thus because the shape change of the primary particles hardly occurred such that a stable micro-structure having improved orientation of the first and second primary particles in the secondary particle was maintained.

**Table 28**

| Examples | Names | Calcination temperature | Calcination duration | b2(µm) | b1(µm) | b1/b2 |
|---|---|---|---|---|---|---|
| Preparation Example 7 | NCA89 | 730°C | 10 hours | 0.268 | 0.513 | 1.91 |
| Preparation Example 22 | NC9010-Ta1 | 730°C | 5 hours | 0.077 | 0.358 | 4.67 |
| Preparation Example 4 | NC9010-Ta1 | 730°C | 10 hours | 0.083 | 0.398 | 4.81 |
| Preparation Example 23 | NC9010-Ta1 | 730°C | 20 hours | 0.069 | 0.378 | 5.51 |
| Preparation Example 8 | NC9010-Ta1 | 750°C | 10 hours | _{0.1}02 | 0.448 | 4.40 |
| Preparation Example 9 | NC9010-Ta1 | 770°C | 10 hours | _{0.1}85 | 0.493 | 2.67 |
| Preparation Example 10 | NC9010-Ta1 | 790°C | 10 hours | _{0.1}72 | 0.444 | 2.57 |
| Preparation Example 65 | NC9604-Ta1 | 700°C | 10 hours | _{0.1}16 | 0.608 | 5.23 |
| Preparation Example 69 | NC9604-Nb1 | 700°C | 10 hours | _{0.1}10 | 0.504 | 4.58 |
| Preparation Example 77 | NC9604-W1 | 700°C | 10 hours | 0.037 | 0.385 | 10.38 |

Referring to Table 28, it could be identified that NC9010-Ta1 containing dopant had relatively smaller values of the short side length b2 and the short side length b1 of the second primary particle regardless of the calcination duration and the calcination temperature, compared to those in NCA89. Further, it could be identified that although NC9604-Ta1, NC9604-Nb1, and NC9604-W1 had the nickel (Ni) content which was higher than that of NCA89, each of NC9604-Ta1, NC9604-Nb1, and NC9604-W1 had relatively smaller values of the short side length b2 and the short side length b1 of the second primary particle than those of NCA89.

It could be identified that as the calcination duration of NC9010-Ta1 increased, the short side length b2 and the short side length b1 of the second primary particle of NC9010-Ta1 remained almost unchanged, and b1/b2 had a value of approximately 4 to 6.

Further, it could be identified that when the calcination duration was 10 hours, and as the calcination temperature increased, b1 hardly changed, but b2 increased as the temperature increased from 750°C to 770°C, and b2 was constant as the temperature increased from 770°C to 790°C. That is, it could be identified that in the second primary particle, only the b2 was affected by the calcination temperature and the calcination duration, and b1 had little change.

It could be identified that even though NC9604-Ta1 was calcined at a relatively low calcination temperature, NC9010-Ta1 exhibited the relatively smaller b2 and b1, compared to those in NC9604-Ta1. This is believed to be because NC9604-Ta1 has a high nickel (Ni) content and is relatively vulnerable to high temperatures.

The positive electrode active material according to an embodiment of the present disclosure may contain the dopant to control the shape and the orientation of the primary particles constituting the secondary particle. Accordingly, thermal stability thereof against high temperatures may be improved. Further, the positive electrode active material may maintain the structural stability of the micro-structure during the cycles and may suppress the micro cracks, thereby improving the long-term lifespan characteristic.

Those of ordinary skill in the technical field to which the present disclosure belongs will be able to understand that the present disclosure may be implemented in other specific forms without changing its technical idea or essential characteristics. Therefore, it should be understood that the embodiments as described above are illustrative in all respects and not restrictive. The scope of the present disclosure is indicated by the following claims rather than the detailed description. All changes or modifications derived from the meaning and scope of the claims and their equivalents should be interpreted to be included in the scope of the present disclosure.

### <Reference numerals>

100: Primary particle
110: First primary particle
120: Second primary particle
200: Secondary particle

## Claims

1. A positive electrode active material comprising secondary particles, wherein each secondary particle is an agglomerate of a plurality of primary particles,
wherein the primary particles include:
first primary particles constituting a core portion of each secondary particle; and
second primary particles constituting a shell portion of each secondary particle,
wherein the shell portion surrounds the core portion,
wherein an average length of a long side of a longitudinal cross-section of each first primary particle is defined as a1, and an average length of a short side thereof perpendicular to the long side is defined as a2, wherein a1 is equal to or larger than a2,
wherein an average length of a long side of a longitudinal cross-section of each second primary particle is defined as b1, and an average length of a short side thereof perpendicular to the long side is defined as b2, wherein b1 is larger than b2,
wherein a ratio b1/b2 is in a range of 2 to 25.

2. The positive electrode active material of claim 1, wherein after a battery including the positive electrode active material has been subjected to multiple charging/discharging cycles, a micro crack including a space between the first primary particle or a space between the second primary particles occurs in the secondary particle,
wherein when the battery including the positive electrode active material has been subjected to 100 charging/discharging cycles where each cycle includes a charging of the battery to 4.3V under 0.5C constant current and a discharging of the battery to 2.7V under 0.5C constant current, and then the battery is discharged to 0.27V, an area of the micro crack is equal to or smaller than 13% of an entire area of a longitudinal cross section of the secondary particle.

3. The positive electrode active material of claim 1, wherein each of 90% or greater of the second primary particles has b1 in a range of 0.1µm to 2.0µm, and b2 in a range of 0.01µm to 0.8µm.

4. The positive electrode active material of claim 3, wherein each of 90% or greater of the second primary particles has a b1/b2 in a range of 2 to 15, and has b2 in a range of 0.01µm to 0.25µm.

5. The positive electrode active material of claim 1, wherein at least some of the second primary particles has a rod shape having an aspect ratio,
wherein each of 50% or greater of the second primary particles having the rod shape is oriented toward a surface of the secondary particle.

6. The positive electrode active material of claim 1, wherein each of an average length of a2 of each of 90% or greater of the first primary particles and an average length of b2 each of 90% or greater of the second primary particles is in a range of 0.01µm to 0.8µm.

7. The positive electrode active material of claim 1, wherein a ratio b1/a1 is in a range of 1 to 3.5, and a ratio b2/a2 is in a range of 0.8 to 1.5.

8. The positive electrode active material of claim 1, wherein each primary particle contains nickel (Ni), M1 and M2,
wherein M1 includes at least one of manganese (Mn), cobalt (Co), and aluminum (Al), wherein a content of nickel (Ni) is greater than or equal to 80 mol%,
wherein M2 acts as a doping element, wherein a content thereof is in a range of 0.05mol% to 2mol%.

9. The positive electrode active material of claim 8, wherein M2 includes at least one of tantalum (Ta), tungsten (W), molybdenum (Mo), niobium (Nb) and antimony (Sb).

10. The positive electrode active material of claim 8, wherein M2 includes at least two doping elements selected from tantalum (Ta), tungsten (W), molybdenum (Mo), niobium (Nb) and antimony (Sb), wherein the two doping elements are co-doped into the positive electrode active material.

11. The positive electrode active material of claim 8, wherein when M2 is tantalum (Ta), a ratio b2/a2 is in a range of 0.5 to 1.2, and b2 is in a range of 0.01µm to 0.6µm;
when M2 is tungsten (W), the ratio b2/a2 is in a range of 0.5 to 2, and b2 is in a range of 0.005µm to 0.5µm;
when M2 is molybdenum (Mo), the ratio b2/a2 is in a range of 0.7 to 1.5, and b2 is in a range of 0.02µm to 0.7µm;
when M2 is niobium (Nb), the ratio b2/a2 is in a range of 0.5 to 1.5, and b2 is in a range of 0.02µm to 0.7µm; or
when M2 is antimony (Sb), the ratio b2/a2 is in a range of 0.5 to 1.5, and b2 is in a range of 0.01µm to 0.5µm.

12. The positive electrode active material of claim 8, wherein M2 includes:
one of tantalum (Ta), tungsten (W), molybdenum (Mo), niobium (Nb), and antimony (Sb); and
at least one of tin (Sn), hafnium (Hf), silicon (Si), zirconium (Zr), calcium (Ca), germanium (Ge), gallium (Ga), indium (In), ruthenium (Ru), tellurium (Te), iron (Fe), chromium (Cr), vanadium (V), and titanium (Ti),
wherein M2 includes at least two doping elements.

13. The positive electrode active material of claim 1, wherein after a battery including the positive electrode active material has been subjected to 100 charging/discharging cycles where each cycle includes a charging of the battery to 4.3V under 0.5C constant current and a discharging of the battery to 2.7V under 0.5C constant current, Rct of the positive electrode active material is in a range of 10Ω to 30Ω.

14. The positive electrode active material of claim 1, wherein when the positive electrode active material is subjected to X-ray diffraction analysis using a device with 45kV and 40mA output and a Cu Ka beam source at a scan rate of 1 degree per minute and at a step size spacing of 0.0131, a ratio of an intensity of a peak 003 to an intensity of a peak 104 is in a range of 2 to 2.2.

15. The positive electrode active material of claim 1, wherein the positive electrode active material includes a compound containing a metal, lithium, a doping element, and oxygen,
wherein the positive electrode active material is prepared by mixing a composite metal oxide containing the metal, the doping element, and a lithium compound containing the lithium with each other and then performing calcination of the mixture,
wherein the metal includes:
nickel (Ni); and
at least one of cobalt (Co), manganese (Mn), and aluminum (Al),
wherein the doping element includes at least one of tantalum (Ta), tungsten (W), molybdenum (Mo), niobium (Nb), and antimony (Sb),
wherein a content of nickel (Ni) is greater than or equal to 80 mol%, and a content of the doping element is in a range of 0.05 mol% to 2 mol%.

16. The positive electrode active material of claim 15, wherein the positive electrode active material is prepared by performing calcination of the mixture at least one time in a temperature range of 700 °C to 800 °C,
wherein each of 90% or greater of the second primary particles in the positive electrode active material after the calcination has b2 in a range of 0.01µm to 0.8µm.

17. A composite metal oxide for a lithium secondary battery as a precursor of the positive electrode active material of one of claims 1 to 16,
wherein the composite metal oxide is a spherical agglomerate of particles prepared via agglomeration of a plurality of micro-particles,
wherein the composite metal oxide is mixed with a lithium compound and then calcination of the mixture is carried out at a temperature range of 700°C to 800°C, thereby producing the positive electrode active material,
wherein the micro-particles of the composite metal oxide include:
first micro-particles constituting a core portion of the agglomerate of particles; and
second micro-particles constituting a shell portion surrounding the core portion of the agglomerate of particles,
wherein an aspect ratio of the second micro-particle is equal to an aspect ratio of the second primary particle of the positive electrode active material.

18. A positive electrode for a secondary battery including the positive electrode active material of one of claims 1 to 16.

19. A lithium secondary battery including the positive electrode of claim 18.

20. A battery module including the lithium secondary battery of claim 19 as a unit cell.

21. A battery pack including the battery module of claim 19, wherein the battery pack is used as a power source for an medium and large sized apparatus,
wherein the medium and large sized apparatus is selected from a group consisting of an electric vehicle, a hybrid electric vehicle, a plug-in hybrid electric vehicle, and a power storage system.
